(19) **Europäisches Patentamt / European Patent Office / Office européen des brevets**

(11) **EP 1 625 003 B1**

(12) **EUROPEAN PATENT SPECIFICATION**

(45) Date of publication and mention
of the grant of the patent:
**18.08.2010 Bulletin 2010/33**

(21) Application number: **04751690.1**

(22) Date of filing: **07.05.2004**

(51) Int Cl.:
***B29C 44/18*** (2006.01)

(86) International application number:
**PCT/US2004/014423**

(87) International publication number:
**WO 2004/101252 (25.11.2004 Gazette 2004/48)**

(54) **FOAM-IN-BAG DISPENSING SYSTEM ASSEMBLY**

VORRICHTUNG ZUR HERSTELLUNG VON FÜLLSCHAUMBEUTELN

ENSEMBLE A SYSTEME DE DISTRIBUTION POUR SACHET A REMBOURRAGE DE MOUSSE

(84) Designated Contracting States:
**AT BE BG CH CY CZ DE DK EE ES FI FR GB GR HU IE IT LI LU MC NL PL PT RO SE SI SK TR**

(30) Priority: **09.05.2003 US 469039 P**
**09.05.2003 US 468988 P**
**09.05.2003 US 469040 P**
**09.05.2003 US 469042 P**
**22.07.2003 US 623868**
**22.07.2003 US 623720**
**22.07.2003 US 623100**
**21.11.2003 US 717997**

(43) Date of publication of application:
**15.02.2006 Bulletin 2006/07**

(73) Proprietor: **IntelliPack, Inc.**
**Tulsa, OK 74146 (US)**

(72) Inventors:
• **NOBLE, Lynn**
**Mashpee, MA 02649 (US)**

• **COCCIADIFERRO, Edward**
**Fletcher, NC 28732 (US)**
• **BERTRAM, George**
**Woodbury,CT 06798 (US)**
• **WALKER, Douglas**
**Hamden, CT 06518 (US)**
• **HAYDUK, Matthew**
**Glen Cove, NY 11542 (US)**

(74) Representative: **Thomson, Neil David et al**
**Boult Wade Tennant**
**Verulam Gardens**
**70 Gray's Inn Road**
**London WC1X 8BT (GB)**

(56) References cited:
**US-A- 5 335 483        US-A- 5 727 370**
**US-A1- 2002 044 305        US-A1- 2003 047 860**

**Description**

**FIELD OF THE INVENTION**

A foam-in-bag dispensing apparatus having a dispenser and film feed system for use in foam filled bag formation, and a method of using a foam-in-bag system to produce foam filled bags.

**BACKGROUND OF THE INVENTION**

In the packaging industry, a variety of devices have been developed to automatically fabricate foam filled bags for use as protective inserts in packages. Some examples of these foam-in-bag fabrication devices can be seen in U.S. Pat. Nos. 5,376,219; 4,854,109; 4,983,007; 5,139,151; 5,575,435; 5,679,208; 5,727,370 and 6,311,740. Prior art dispensers system featuring an apparatus for automatically fabricating foam filled bags for receiving mixed foam material are prone to "foam-ups" wherein the mixed material is not properly confined within a receiving bag which leads to foam hardening in every nook and cranny of the dispensing system making complete removal not reasonably attainable, particularly when considering the non-smooth configuration of prior art systems. For example, an automated foam-in-bag system introduces complexity relative to film supply, film tracking and tensioning, bag sealing/cutting, bag venting, film feed blockage, etc. and the potential for spillage of the tenaciously adhering foam material.

In addition, prior art systems suffer from other drawbacks, such as relatively slow bag formation and a slow throughput of completed bags which, in some systems, is partially due to a reverse feed requirement to break an upper, not-yet-completely formed bag from a completed bag adhered together by a bond formed by the earlier melted and presently cooled plastic material on the heated cross-cut wire.

Prior art foam-in-bag systems, in presumably an effort to accurately dispense foam into the bag, locate the dispenser within the bag being formed (e.g., all dispenser components placed between the film left and right side edges and above the end seal of the bag). These prior art arrangements present problems from the stand point of the placement of the dispenser and its various components such as filters, chemical valving lines, and other components required for accessing a mixing module, all in the bag formation region. This positioning places those components in an area highly prone to chemical contact even with a properly functioning dispenser. Efforts have been made in the prior art to protect the dispenser through the use of covers, but these covers have shown to be highly ineffective in protecting the components. Once foam hardens on the components they are often made even more difficult to access when servicing is desired. Also, the non-smooth, multi-protrusion and edge presentment design of prior art foam dispensers, in addition to making cleaning impractical, have a tendency to create film tracking problems and/or require added guidance members to avoid film/dispenser contact.

There has also been experienced difficulty in achieving proper end and edge sealing/cutting, and venting wire temperatures in prior art foam-in-bag systems. There is also associated with prior art systems problems in achieving proper positioning and in gaining access for servicing heater wires. The two most common prior art systems take different approaches with a first utilizing a rolling heater wire which presents added complexity in power supply as well as difficulty in removing and re-inserting heater wires. The second approach uses a non-rolling drag technique (e.g., US Patent No. 6,472,638) that, while being easy to remove and re-insert, has experienced difficulty in the field in maintaining a proper location of the exposed heater wire relative to the film being driven thereby, which is due in part to a tendency for the heated seal wires becoming more and more embedded in the underlying support.

Film replenishment in the prior art systems has also proven to be difficult. Accessing prior art systems to remove the emptied roll and to replace it with a new role, which can be relatively heavy as in 11.3kg (25lbs.) or so, is only achieved with great difficulty due to the insertion location being in the rear, intermediate region of a typical foam-in-bag system design. This location is highly straining on the operator.

US 5335483 teaches an apparatus and method for successfully forming foam filled cushions for packaging purposes which uses two sets of rollers and the use of an end sealing heater wire mounted on a rotatable arm. US 2003/0047860 teaches an automated document feeder having pairs of driven rollers and freely rotating rollers and a hinged cover which can be raised to separate the pairs of rollers from one another.

**SUMMARY OF THE INVENTION**

The film feed system of the inventive subject matter includes a foam-in-bag dispensing system as claimed in claim 1, and a method of servicing a foam-in-bag dispenser system as claimed in claim 24, such as a nip roller assembly that includes a driven and a drive roller set on a support structure that allows for ready adjustment of one roller (preferably the driven) away from the other. A preferred embodiment features a pivoting access structure that preferably is on the front and rotates one of the film driver set away from the other. Either independently or in conjunction with roller separation, the adjustable front access structure also preferably support end and edge sealing devices providing ready access to those as well. The noted components of the dispenser that are made accessible are also preferably readily releasable as in plug in end cutting and/or sealing wires and supporting jaw (film tuck prevention canes, edge seal assembly and wire cartridge driven roller. The hinged access frame structure is also preferably locked in position with a latch assembly. The access device greatly facilitates servicing in these areas.

To facilitate film feed source loading, the inventive subject matter further includes a support structure and a film source support as in a spindle adjustably supported by the support structure. There is further preferably comprising a film source (e.g. film roll with roll core) position locking latch at the free end of the spindle to lock the roll core axially along the spindle and the spindle is preferably made adjustable to accommodate various roll film widths. A spindle lock in operating position device is also provided with a release that promotes movement of the spindle to an unload position.

There is additionally preferably featured a film source drive transmission with driver for tension control of the film source relative to the downstream film driver. Using torque control and a meshing core and roll source drive transmission driven by a motor. A control system allows for torque level variations that facilitate maintaining a desirable tension level in the film despite accelerations as in start up and deacceleration as in braking of the film roll. The film source drive system also allows for reverse direction film movement as during a separation process at cross-cut linked bags. The film drive downstream is also preferably controlled and monitored and the control system receives data from each and can determine changes in status as in film roll out or film jam as well as monitor film source roll levels.

In the process of film feed for bag formation, the inventive subject matter includes providing a foam precursor chemical dispenser housing which is smooth and positioned to provide good tracking and unobstructed film travel to facilitate, for example, proper end and edge seal formation to avoid chemical spillage. In addition the smooth surfaced dispenser housing also facilitates clean up in the event there is chemical received on the dispenser during operation. The dispenser housing is preferably positioned so as to enable use of C-fold film where the folded end passes past the free end of the cantilevered dispenser housing (also preferably adjustable out for servicing) while the non-connected film edges slide past the housing until sealed together with an edge sealer.

The inventive subject matter also includes a film edge sealer that is adjusted by a controller which varies the temperature based or derived from TCR values in the wire which is chosen to facilitate temperature level settings based on the TCR qualities of the wire. A similar arrangement is preferably utilized relative to the end seal wire(s) (cross-cut and/or seal with no cut intention). Further the edge sealer preferably comprises an assembly that places a heater wire cartridge at a desired stationary position relative to film feed past while supported on a sleeve with means to allow a roller shaft to rotate therein together with opposite insulating edge seal assembly rollers. In addition, the edge seal is readily serviced in having an arbor assembly that includes conductive shoes that are in electrical contact with the wire supported on a reliable cartridge. Also in a further effort to provide good bag seal formation, there is provided an adjustable jaw (positioning also preferably monitored with a control and position sensor system as in an encoder and/or position sensor in line) that has means for conforming to non-flush deviations relative to the cross-cut or cross-seal heater wires as in a multi-level spring coefficient arrangement.

## BRIEF DESCRIPTION OF THE DRANVINGS

Figure 1 shows an embodiment of the dispensing system of the present invention.
Figure 2 shows a rear elevational view of a dispenser system embodiment used in the dispensing system.
Figure 3 shows a front view of the dispenser system.
Figure 4 provides a top plan view of the dispenser system's coiled conduit feature.
Figure 5 shows a view similar to Figure 2, but with the lifter extended.
Figure 6 shows a base and extendable support assembly of the dispenser system.
Figure 7 shows a front perspective view of a bag forming assembly.
Figure 8 shows a right side elevational view of the bag forming assembly.
Figure 9 shows a rear perspective view of the bag forming assembly.
Figure 9A shows a bottom perspective view of the sealer shifting assembly mounted on the frame structure.
Figure 9B shows a top perspective view of the sealer shifting assembly alone.
Figure 9C shows an alternate perspective view of that in Figure 9A.
Figure 9D shows an alternate perspective view of that in Figure 9B.
Figure 9E shows a cross-sectional view along cross-section line X-Y in Figure 9B.
Figure 9F shows a perspective view of an alternate embodiment of a sealer shifter assembly showing as well a non-sealing mode or retracted position relative to the stationary jaw on which is supported the cross cut and seal wires.
Figure 9G show a view similar to Figure 9F but with the moving jaw in a seal or film contact mode relative to the fixed jaw.
Figure 9H shows a cross-sectional view of that which is shown in Figure 9F taken along cross-section line H-H in Figure 9F.

Figure 9I shows a cross-sectional view of that which is shown in Figure 9F taken along cross-section line I-I in Figure 9F.

Figure 9J shows a cross-sectional view of that which is shown in Figure 9G taken along cross-section line J-J in Figure 9G.

Figure 9K shows a cross-sectional view taken along cross-section line K-K in Figure 9G.

Figure 10 shows a left side elevational view of that bag forming assembly.

Figure 11 shows a front perspective view of the bag forming assembly mounted on the support base.

Figure 11A shows an upper perspective view of the spindle lock in position and release mechanism of the present invention.

Figure 11B shows as alternate perspective view of the mechanism in Figure 11A.

Figure 11C shows an end elevational view of the mechanism in Figure 11A.

Figure 11D shows a cross-sectional view of the mechanism in Figure 11A.

Figure 12 shows a rear perspective view of that which is shown in Figure 11.

Figure 13 shows a front perspective view of that which is shown in Figure 11 together with a mounted chemical dispenser apparatus (dispenser and bagger assembly combination).

Figure 14A shows dispenser apparatus separated from its support location.

Figure 14B shows a portion of the film travel path past that dispenser apparatus and nip rollers.

Figure 15 shows a side elevational view of the dispenser system with spindle roll support in both operational (with the roll supported) and in mounting positions.

Figure 15A shows a top plan view of the dispenser system with cover housing components in various positions.

Figure 15B shows a front view of the dispenser system with control panel boards visible.

Figure 16 shown the film support means or film source support of the present invention with a dash line roll mounted thereon.

Figure 17 shows a similar perspective view of that which is shown in Figure 16, but from an opposite end view showing the web tensioning or film source drive system.

Figure 18 shows a top plan view of that which is shown in Figure 16.

Figure 19 shows a front elevational view of the film support means.

Figure 20 shows a free end elevational view of the film support means.

Figure 21 shows a non-free end elevational view of the film support means.

Figure 22 shows a view of dispensing apparatus similar to Figure 13, but from a different perspective orientation.

Figure 23 shows an enlarged view of dispenser outlet section.

Figure 24A shows a view similar to Figure 23, but with the mixing module compression door in an open state and with the mixing module in position.

Figure 24B shows the same view as Figure 24A, but with the mixing module removed.

Figure 25 shows a perspective view of the mixing module showing the mounting face of the same.

Figure 26 shows a similar view as that in Figure 25 but from the valving rod end.

Figure 27 shows a cross-sectional view of the mixing module taken along cross-section line A-A in Figure 28.

Figure 28 shows a cross-sectional view of the mixing module taken along cross-section line B to B in Figure 27.

Figure 29 shows a front elevational view of the dispenser apparatus with means for reciprocating the mixing module rod and with a bottom brush cover plate removed.

Figure 29A provides a perspective view of the dispenser apparatus similar to that of Figure 22 but from a different perspective angle.

Figure 30 shows a top plan view of that which is shown in Figure 29.

Figure 31 shows a right end and view of that which is shown in Figure 29 (with the brush cover added).

Figure 32 shows a cross-sectional view taken along cross-section view B-B in Figure 30.

Figure 33 shows a cross-sectional view taken along cross-section line A-A in Figure 30.

Figure 34 shows a front elevational view of the dispenser end section of the dispenser apparatus.

Figure 35 shows a rear end view of that which is shown in Figure 34.

Figure 36 shows a cross-sectional view taken along A-A in Figure 35.

Figure 37 shows a cross-sectional view taken along cross-section line C-C in Figure 36.

Figure 38 shows a perspective view of the dispenser (and brush) drive mechanism.

Figure 39 shows the rear side of the main housing for use in the dispenser apparatus.

Figure 40 shows a cross-sectional view of the spindle with spline drive assembly of the present invention taken along cross-section line A-A in Figure 41.

Figure 41 shows a cross-sectional view of the spindle with spline drive assembly taken along cross-section line B-B in Figure 40.

Figure 42 shows a perspective view of the spindle spline drive or engagement member of the spindle spline drive assembly with emphases on the tooth drive side.

Figure 43 shows a perspective view of the spindle spline drive with emphasis on the non-roll contact side.

Figure 44 provides a side elevational view of the spindle spline drive's engagement member.

Figure 45 shows a cross-sectional view taken along A-A in Figure 44.

Figure 46 provide a front elevational view of the spindle spline drive from the roll facing side.

Figure 47 provides an enlarged view of a section of Figure 44.

Figure 48 shows a cross-sectional view of a compacted version of the spindle or film support means set for handling shorter width films taken along cross-section line A-A in Figure 49.

Figure 49 shows a cross-sectional view taken along cross-section line B-B in Figure 48.

Figure 50 shows a perspective view of the roll latch mechanism in a locked state.

Figure 51 shows the roll latch mechanism in an unlocked state.

Figure 52 shows the roll latch mechanism in operation locking a roll of film.

Figure 53 shows a cross-sectional view of the roll latch mechanism taken along cross-section A-A line in Figure 54.

Figure 54 shows a cross-sectional view of the roll latch mechanism taken along cross-sectional line B-B in Figure 53.

Figure 55 shows a perspective view of a film roll with core and opposite end core plugs or inserts.

Figure 56 show a cross-sectional view of Figure 55.

Figure 57, 58, 59 and 59A provide varying views of the roll film drive core plug.

Figure 60, 61, 62 and 63 provide various views of the roll film non-drive support plug.

Figure 64 provides a cut-away, enlarged view of the roller set assembly and door latch assembly for the front access panel.

Figure 65 shows a view of the front access panel in an open state.

Figure 66 shows the heater jaw assembly.

Figure 67 shows the same view of Figure 66 but with one of the heater jaw heater wires removed.

Figure 68 shows an enlarged view of the left end of Figure 67.

Figure 69 shows the assembly support by the front panel frame sections.

Figure 70 shows a cross-sectional view of the roller assembly of Figure 69.

Figure 71 shows a first perspective view of a first embodiment of edge sealer assembly from the electrical contact side.

Figure 71A shows a first perspective view of a second embodiment of edge sealer assembly from the electrical contact side.

Figure 72 shows a second perspective view of the first embodiment of the edge sealer assembly from the heater wire side.

Figure 72A shows a second perspective view of the second embodiment of the edge sealer assembly from the heater wire side.

Figure 73 shows an elevational view of the heater wire side of the first embodiment of the edge sealer assembly.

Figure 73A shows an elevational view of the heater wire side of the second embodiment of the edge sealer assembly.

Figure 74 shows a cross-sectional view taken along cross-section line A-A in Figure 73.

Figure 74A shows a cross-sectional view taken along cross-section line A-A in Figure 73A.

Figure 75 shows a cross-sectional view taken along cross-section line B-B in Figure 73.

Figure 75A shows a cross-sectional view taken along cross-section line B-B in Figure 73A.

Figure 76 shows the interior side of one of the two sub-rollers of the first embodiment of the edge seal assembly.

Figure 76A shows the interior side of one of the two sub-rollers of the second embodiment of the edge seal assembly.

Figure 77 shows the exterior side of the sub-roller in Figure 76.

Figure 78 shows the exterior side of the sub-roller in Figure 76A.

Figure 79 shows the internal sleeve of the first embodiment of the edge seal assembly.

Figure 80 shows the roller bearing of the first embodiment of the edge seal assembly which is received by the sleeve and receives the driven roller set shaft.

Figure 81 shows a perspective view of the arbor base of the first embodiment of the edge seal assembly.

Figure 81A shows a perspective view of the arbor base of the second embodiment of the edge seal assembly.

Figure 82 shows a cross-sectional view of the arbor base shown in Figure 81.

Figure 82A shows a cross-sectional view of the arbor base shown in Figure 81A.

Figure 83 shows a perspective view directed at the heater wire side of the arbor mechanism of the first embodiment of the edge seal assembly.

Figure 83A shows a perspective view directed at the heater wire side of the arbor mechanism of the second embodiment of the edge seal assembly.

Figure 84 shows an elevational view of the heater wire side of the arbor assembly first embodiment of the edge seal assembly.

Figure 84A shows an elevational view of the heater wire side of the arbor assembly second embodiment of the edge seal assembly.

Figure 85 shows a cross-sectional view taken along A-A in Figure 84.

Figure 85A shows a cross-sectional view taken along A-A in Figure 84A.

Figure 86 shows a side view of the arbor assembly first embodiment of the edge seal assembly.

Figure 86A shows a side view of the arbor assembly of the second embodiment.

Figures 87 to 89 show alternate perspective views of the arbor assembly edge seal assembly with Figures 87 and 89 illustrating the seal wire tensioning means.

Figures 87A to 89A show alternate perspective views of the arbor assembly edge seal assembly of the second embodiment.

Figures 90 to 95 show various illustrations of the arbor housing with the edge seal wire and associated tensioning means removed for added clarity as to the receiving housing.

Figures 90A to 95A show various illustrations of the arbor housing with the edge seal wire and associated shoes removed for added clearly as to the receiving housing.

Figures 96 to 98 show perspective views of the wire end connector of the first edge seal embodiment.

Figures 96A to 98A show perspective views of a shoe conductors of the second edge seal embodiment.

Figure 99 shows a cross-sectional view of a wire connector.

Figures 99A and 99B illustrate the ceramic head insert used in the arbor assembly in the first embodiment of the edge seal assembly.

Figures 99C and 99D illustrate the head insert used in the arbor assembly of the second edge seal assembly embodiment.

Figures 100 to 102 illustrate alternate perspective views of the edge wire tensioner block or moving mounting block.

Figure 103 shows a cross-sectional view of the tensioner block.

Figure 104 shows a heater wire end connector in the wire tensioning assembly.

Figure 105 shows an overall dispenser assembly sub-systems schematic view of the display, controls and power distribution for a preferred foam-in-bag dispenser embodiment.

Figure 105A provides a legend key for the features shown schematically in Figure 186.

Figure 106 shows a schematic view of the control, interface and power distribution features for the heated cross cut and cross seal wires in the bag forming assembly of the present invention.

Figure 107 shows a schematic view of the control, interface and power distribution features for the heated edge seal wire.

Figure 108 shows a schematic view of the controls, interface and power distribution features for the moving jaw with cross cut and seal wiring.

Figure 109 shows an illustration of the control, interface and power distribution features for the film advance and tracking system of the present invention.

Figure 110 shows an illustration of the control, interface and power distribution features for the film web tensioning system of the present invention.

Figure 111 shows plotted TCR values based on the temperature and resistance values set forth in Table 1 of the present application.

Figure 112 shows a comparison of ratio value (ratio of accumulated tachometer pulses of film tension motor divided by the accumulated tachometer pulses of film advance motor) versus number of dispenser shots brought about by a control board comparison of the encoder signals from the respective film advance and film tension motors.

Figure 113 shows a testing apparatus for use in testing temperature versus resistance for heater wires.

## DETAILED DESCRIPTION OF THE PREFERRED EMBODIMENTS

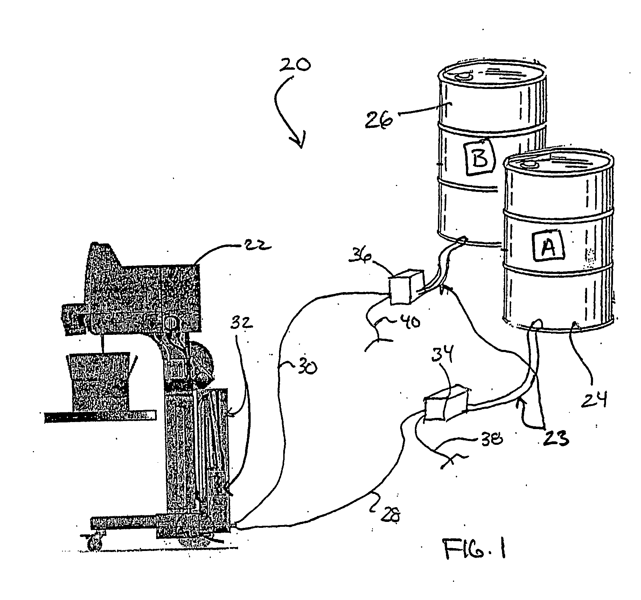

Figure 1 illustrates a preferred embodiment of the dispensing system 20 of the present invention which comprises dispenser system 22 in communication with the chemical supply system 23 comprising chemical supply container 24 (supplying chemical component A) and chemical supply container 26 (supplying chemical component B). Chemical hoses 28 (chemical A) and 30 (chemical B) provide fluid communication between respective chemical supply containers 24, 26 and in-line pump system 32 mounted on dispenser system 22.

Figure 1 further illustrates feed pumps 34, and 36 associated with chemical supply containers 24, and 26. Feed pumps 34, and 36 provide a positive pressure to the in-line pump system so as to provide positive pressure on the inline pumps' input ports to avoid problems like cavitations, or starvation of the pumping means (e.g., a gerotor based pump system) and to reliably suck chemical out of the bottom of the supply containers even if the in-line pumps are far away (e.g., over 100 feet). Short runs of hose length between the containers and the positive pressure feed pumps can be handled by attaching a dip tube to the inlet end of the feed hose, or by simply attaching the feed hose to the bottom of the container via valves and connectors.

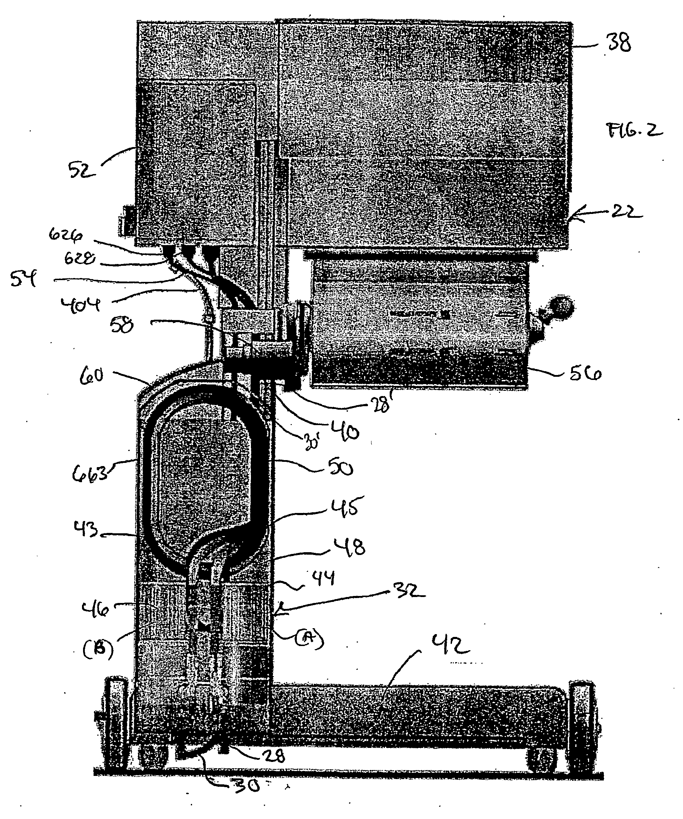

Figure 2 provides a rear elevational view of dispenser system 22 which includes exterior housing 38 supported on telescoping support assembly 40 which in a preferred embodiment comprises a lifter (e.g., electric motor driven gear and rack system with inner and outer telescoping sleeves) and is mounted on base 42 (e.g., a roller platform base to provide some degree of mobility). Further mounted on base 42 is in-line pump system 32 comprising in line chemical A pump 44 and in line chemical B pump 46 housing output or downstream chemical supply conduit sections 43 and 45 that extend into hose manager assembly 48 containing heated coiled hoses and cables set 50. The rear view shown in Figure 2 also illustrates control console 52 and communication links generally represented by communication lines 54. Film roll reception assembly 56 and film roll driver 58 extends out from support assembly 40.

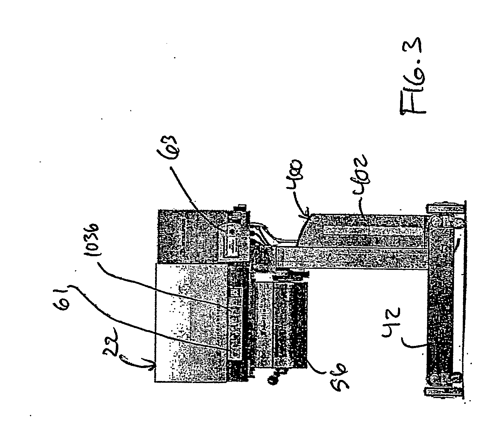

Figure 3 provides a front view of dispenser assembly 22 including first and second control panels 61 and 63 having an improved finger contact means.

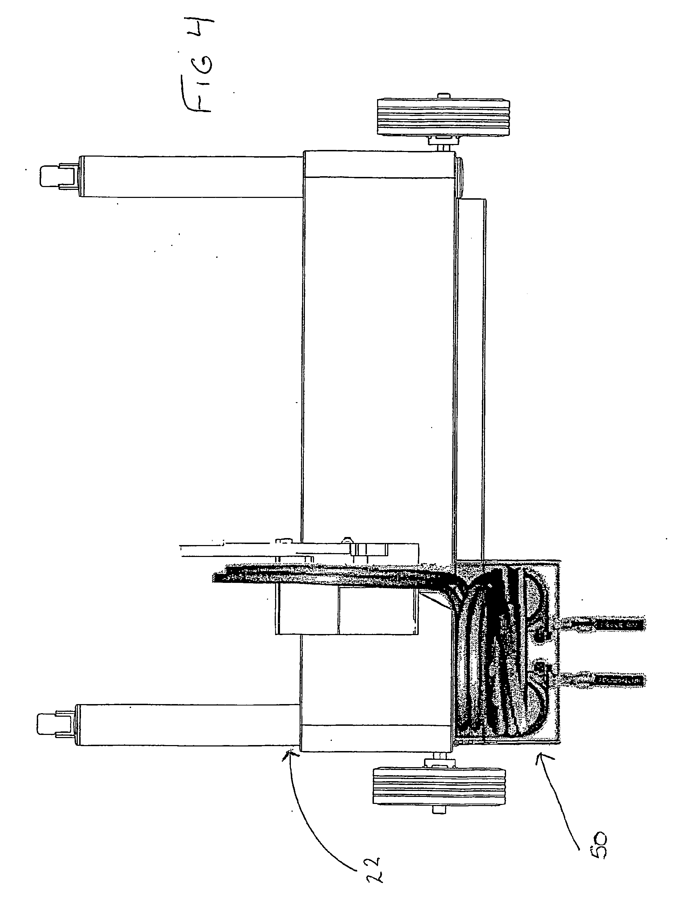

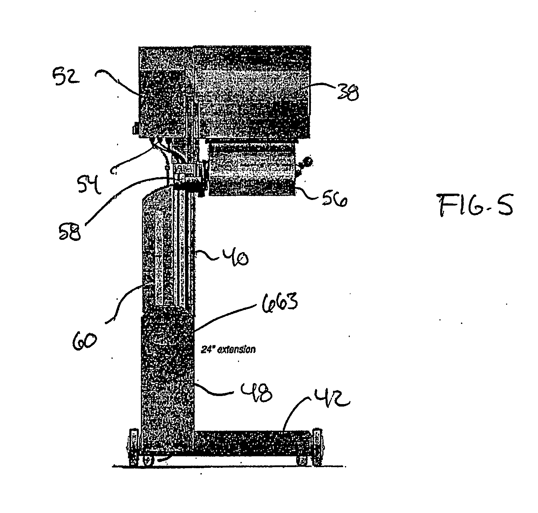

Figure 4 provides a top plan view of dispending system 22 with heated coiled hoses and cables set 50 emphasized relative to the rest of the system 22 shown with dotted lines. Figure 5 provides a similar rear elevational view as in Figure 2, except with extendable support assembly 40 being in a maximum extension state (e.g., a 15 to 40 inch extension with a 24 inch extension being well suited ergonomically from a collapsed maximum height of 3 to 5 feet being illustrative for the dispenser). With reference to Figure 5 and the front view of Figure 1 there is seen solvent container 60 which is fixed to extendable support 40 and rides up and down with the moving component of lifter or extendable support 40.

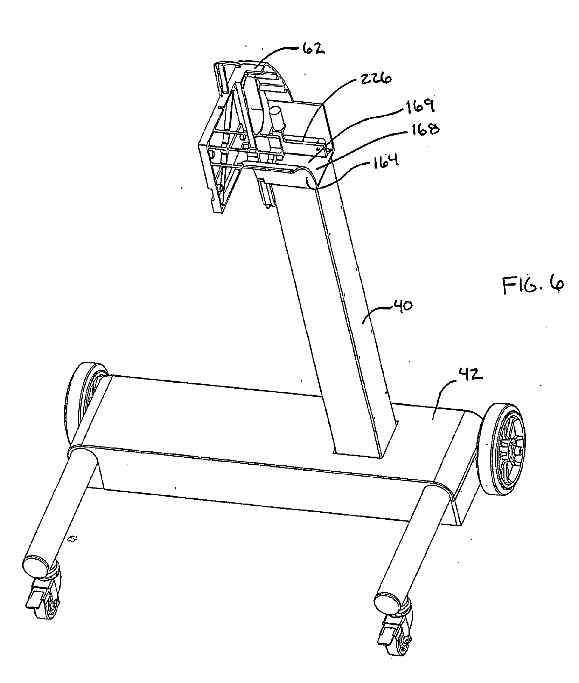

Figure 6 illustrates base 42 and lifter or extendable support assembly 40 (e.g., preferably a hydraulic (air pressure) or gear/rack combination or some other telescoping or slide lift arrangement) extending up from base and having bagger and dispenser assembly support mount 62. Figure 6 also illustrates the mobile nature of base 42 which is a wheeled assembly.

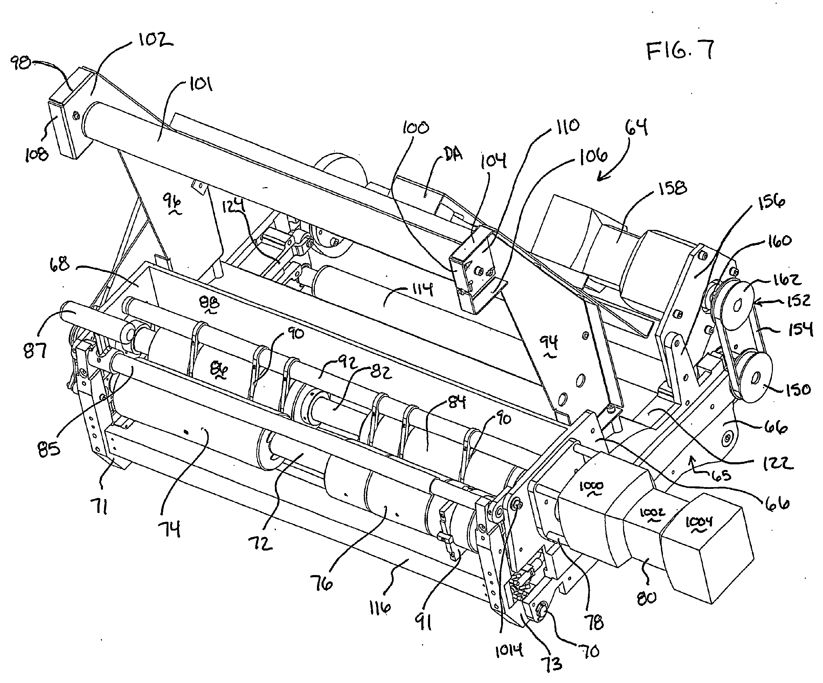

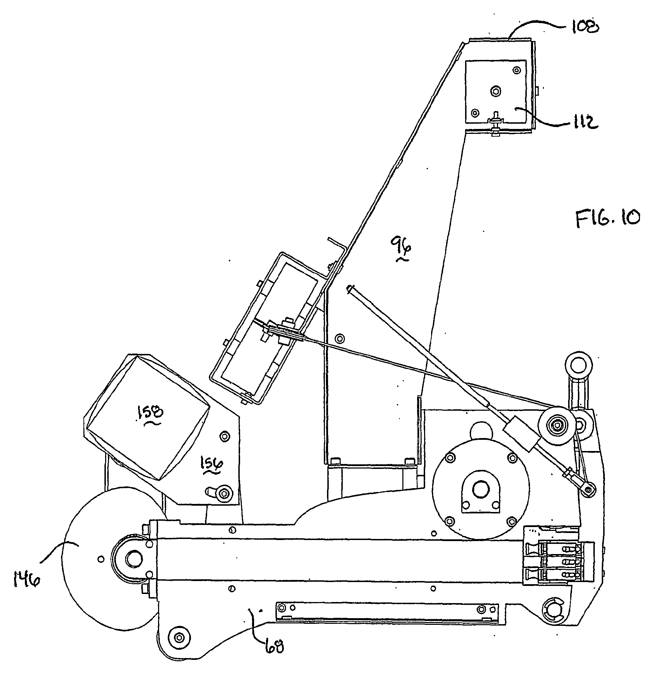

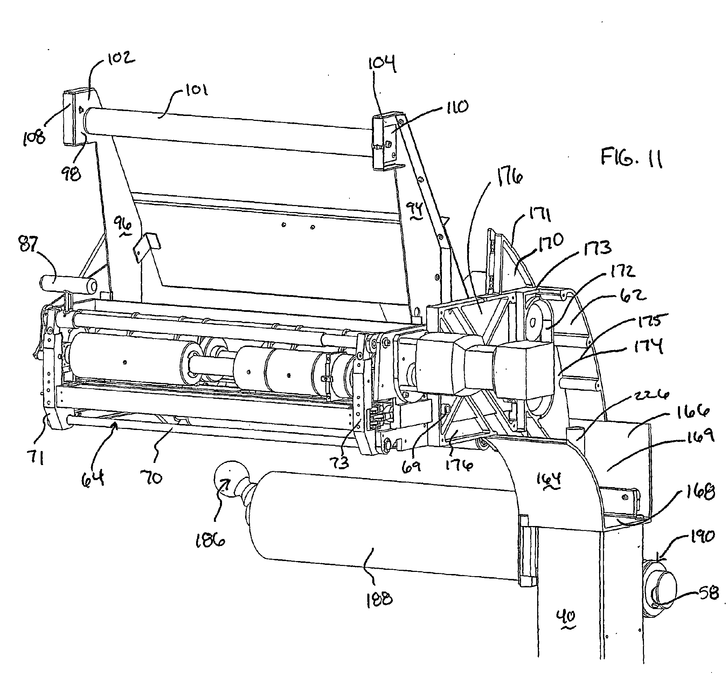

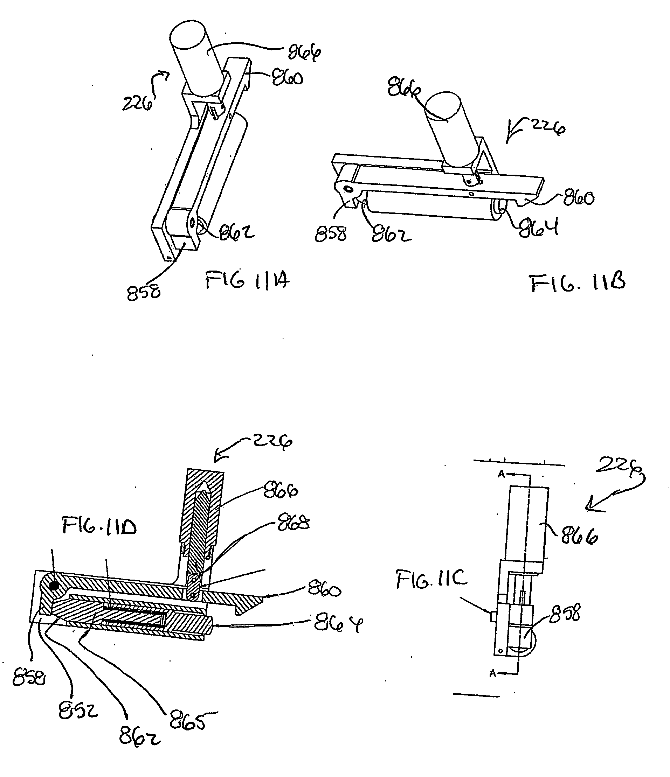

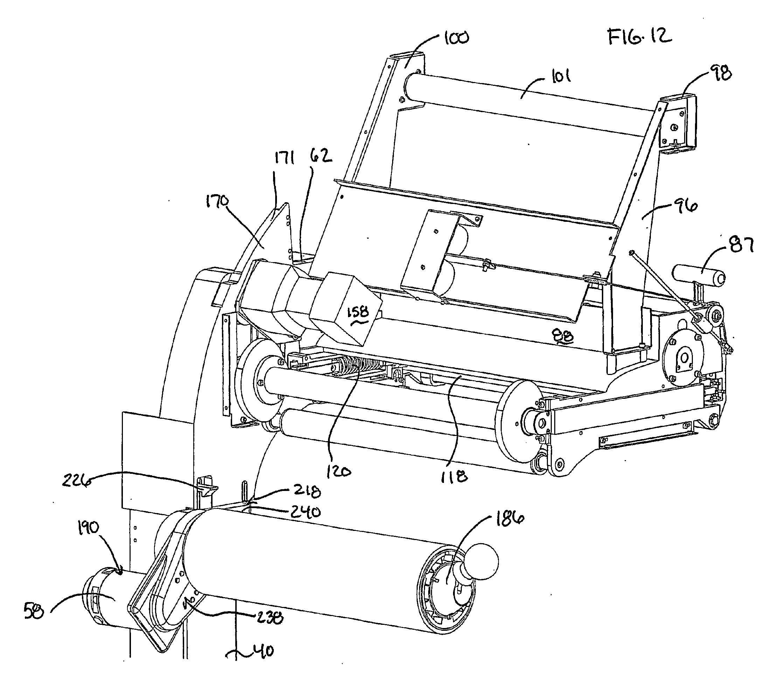

Figures 7-10 show foam-in-bag assembly or "bagger assembly" 64 (with dispenser removed for added clarity) that is designed to be mounted in cantilever fashion on support mount or bracket 62 as shown in Figures 11 and 12. Bagger assembly 64 comprises framework 65 having first side frame 66 (shown on the right side relative to a front view in Figure 7) and second side frame 68 (shown on the left side in the front view Figure 7). Side frame 66 has means for mounting bagger assembly 64 to support bracket 62 (e.g., a set of bolts 69 as shown in Figure 11). Framework 65 further includes front pivot rod 70 extending between the two interior sides of side frames 66, and 68, as well as front face pivot frame sections 71 and 73 which are pivotally supported by pivot rod 70. Rod 70 also extends through the lower end of front face pivot frame sections 71 and 73 to provide a rotation support for sections 71, 73. Driver roller shaft 72, supporting left and right driven or follower nip rollers 74 and 76, also extends between and is supported by side frames 66 and 68. While in a latched state the upper ends of pivot frame sections 71, 73 are also supported (locked in closed position) by door latch rod 85 with handle latch 87.

First frame structure 66 further includes mounting means 78 for roller shaft drive motor 80 in driving engagement with drive shaft 82 extending between and supported by frame structures 66 and 68. Drive shaft 82 supports drive nip rollers 84 and 86. Framework 65 further comprises back frame structure 88 preferably formed as a single piece unit with side frame structures 66 and 68. Driven roller shaft 72 and driver roller shaft 82 are in parallel relationship and spaced apart so as to place the driven nip rollers 74, 76, and drive nip rollers 84, 86 in a film drive relationship with a preferred embodiment featuring a motor driven drive roller set 84, 86 formed of a compressible, high friction material such as an elastomeric material (e.g., synthetic rubber) and the opposite, driven roller 74, 76 is preferably formed of a knurled aluminum nip roller set (although alternate arrangements are also featured as in both sets being formed of a compressible material like rubber). The roller sets are placed in a state of compressive contact by way of the relative diameters of the nip rollers and rotation axis spacing of shafts 72, and 82 when pivot frame sections 71, 73 are in their roller drive operation state. Figure 7 further illustrates door latch rod 85 rotatably supported at its opposite ends by pivot frame sections 71, 73 and having door latch (with handle) 87 fixedly secured to the left end of door latch rod 85. As explained in greater detail below, latch 87 provides for the pivoting open of pivot frame sections 71, 73 of the hinged access door means about pivot rod 70 into an opened access mode. While in a latched state, the upper ends of pivot frame sections 71, 73 are also supported (locked in closed position) by door latch rod 85.

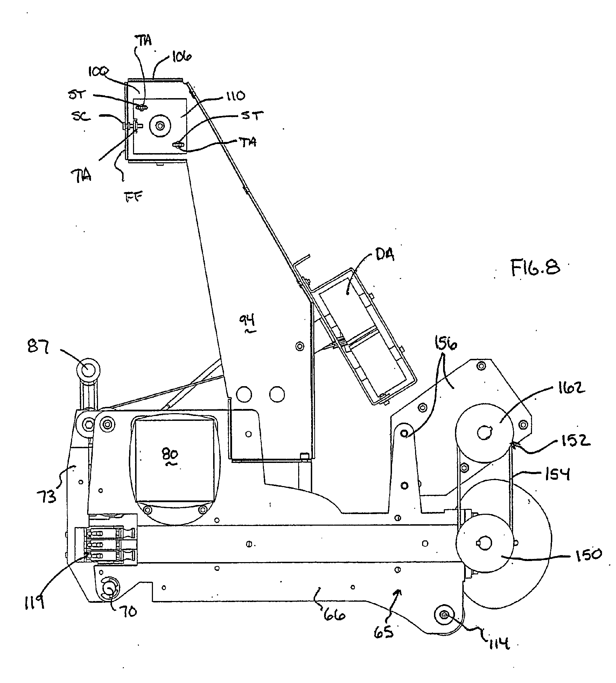

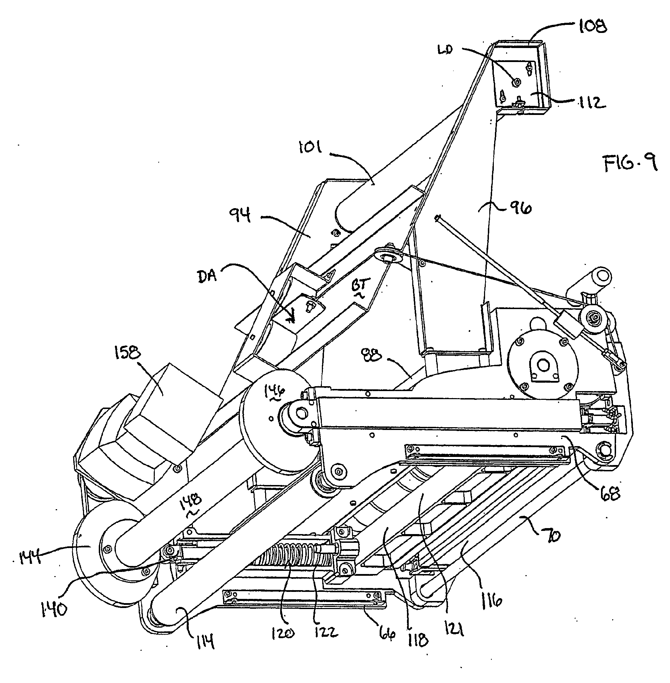

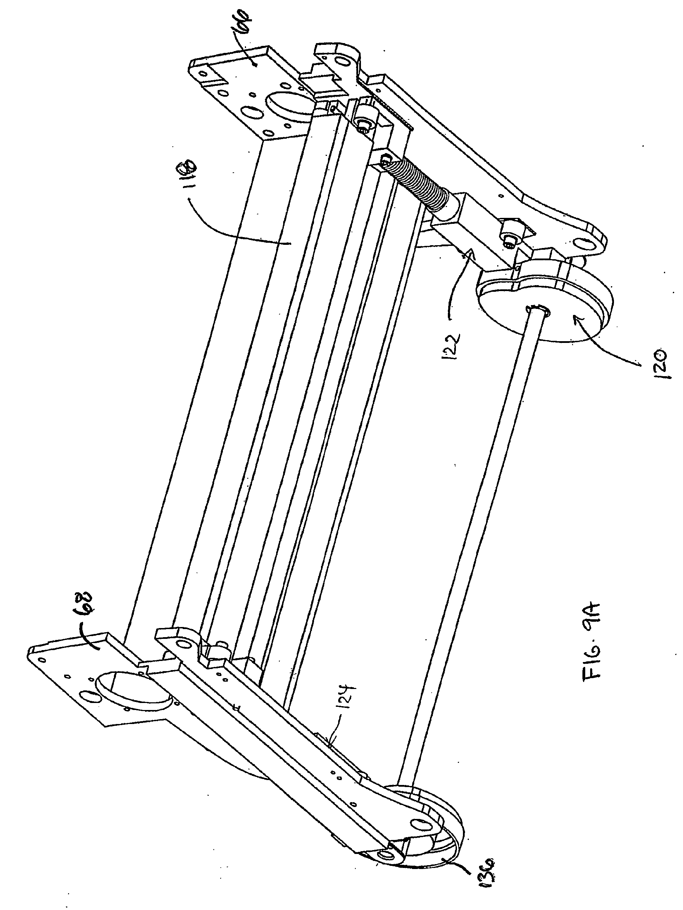

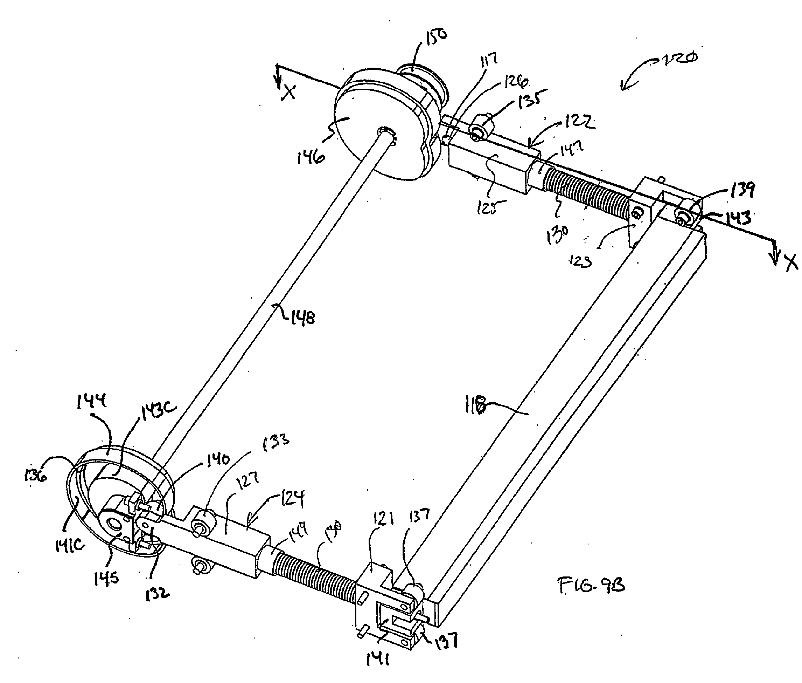

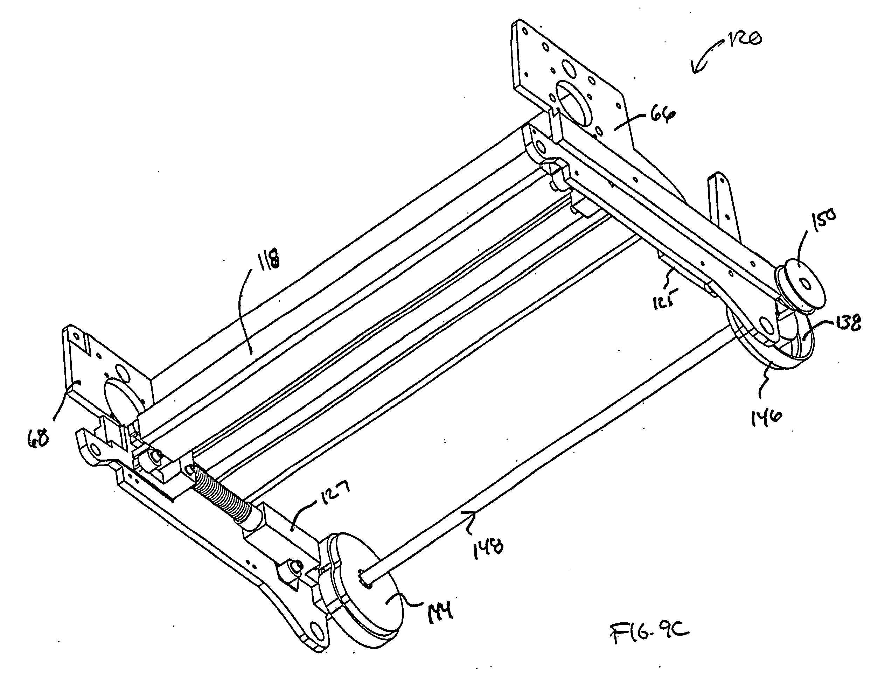

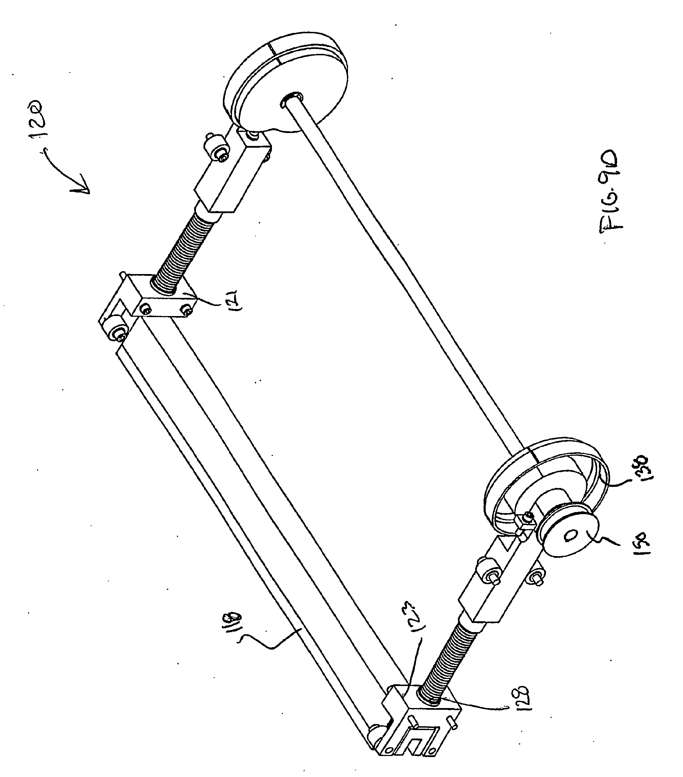

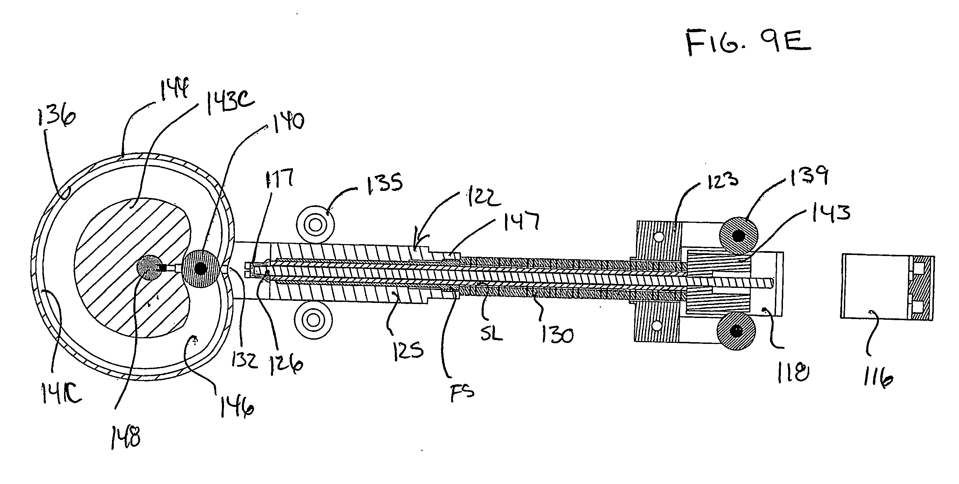

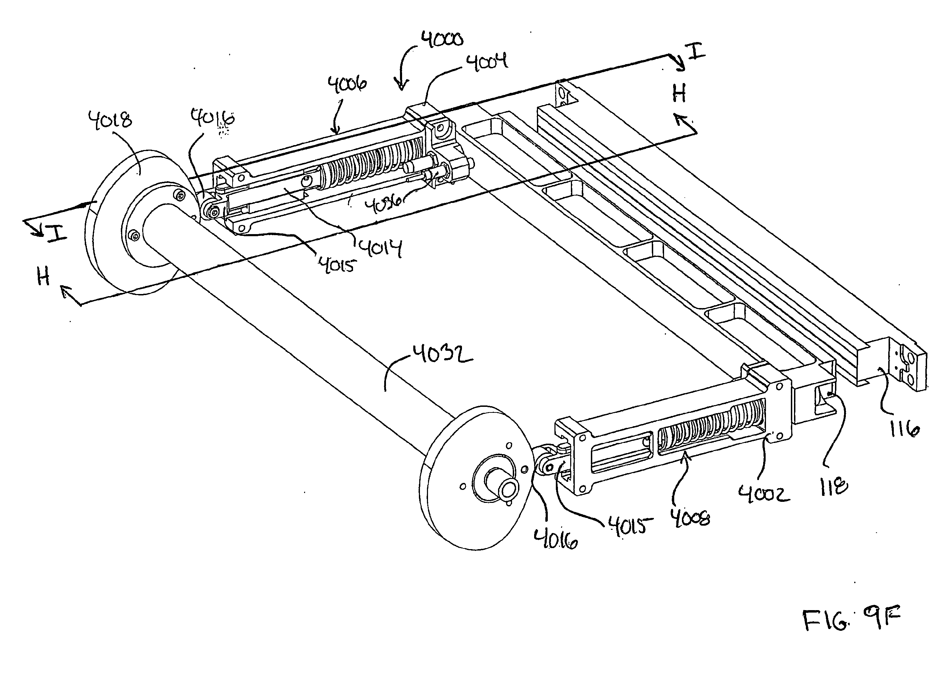

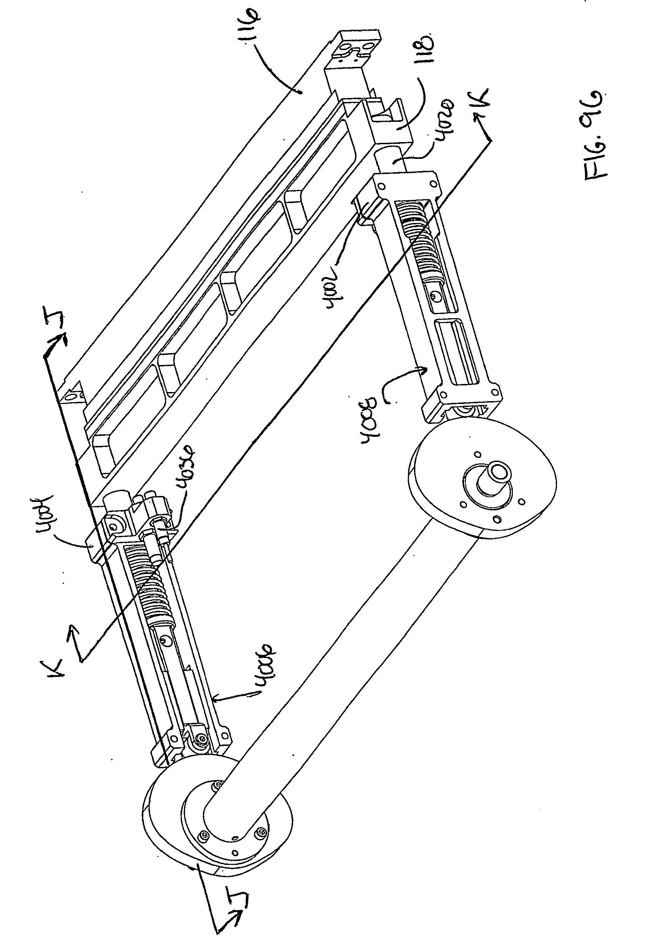

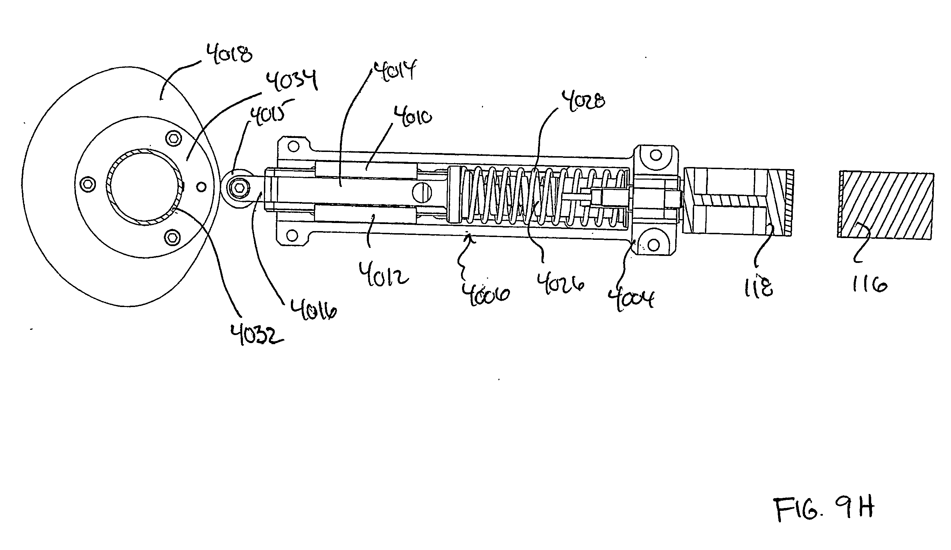

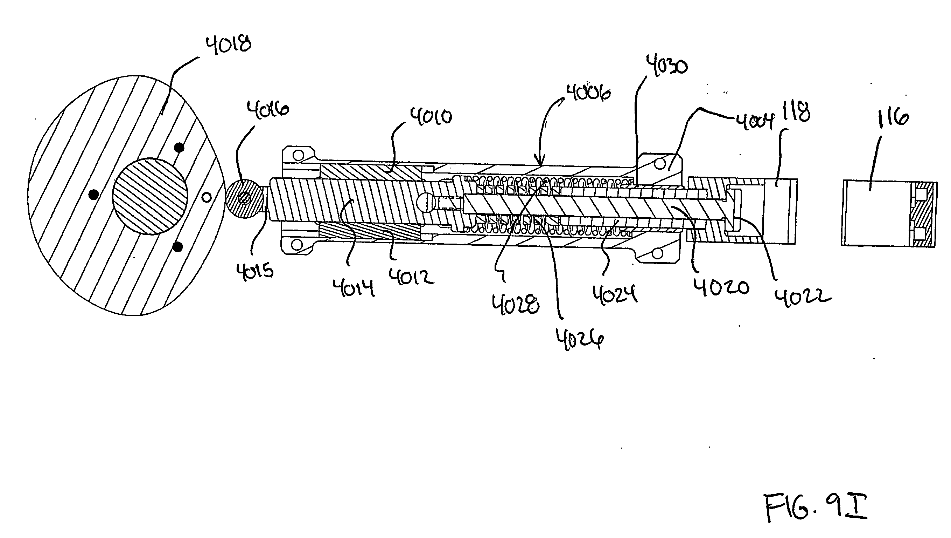

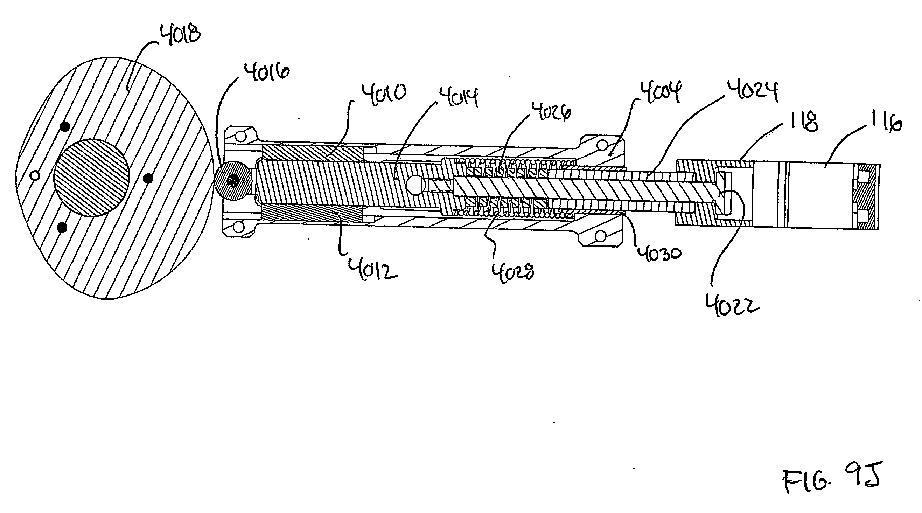

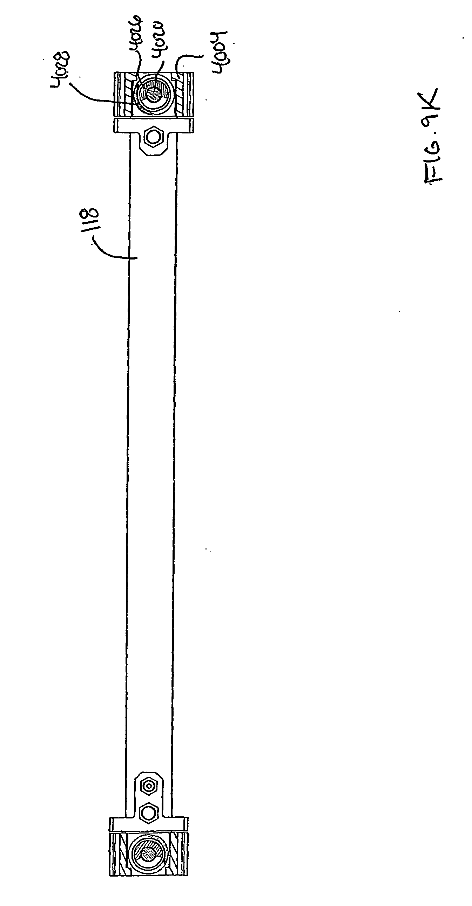

Drive nip rollers 84 and 86 have slots formed for receiving film pinch preventing means 90 (e.g., canes 90) that extend around rod 92 with rod 92 extending between first and second frames 66, 68 and parallel to the rotation axes of shafts 72 and 82. Figure 7 further illustrates bag film edge sealer 91 shown received within a slot in roller 76 and positioned to provide edge sealing to a preferred C-fold film supply. Rear frame structure 88 has secured to its rear surface, at opposite ends, idler roller supports 94 and 96 extending up (e.g., 20.3 to 38.1 cm (8 to 15 inches) or a preferred 27.9 cm (1 inches)) from the nip roller contact location. Idler roller supports 94, 96 include upper ends 98 and 100 each having means for receiving a respective end of upper idler roller 101 (e.g., a roller shaft reception aperture or bearing support). As shown in Figure 7, ends 98, 100 present opposing parallel face walls 102, 104 and outward flanges 106, 108. Within the confines of flanges 106, and 108 there is provided first and second idler roller adjustment mechanisms 110, and 112. In a preferred embodiment, one of the adjustment mechanisms provides vertical adjustment as to the rotation axis of idler roller 101 while the other provides front to back horizontal adjustment to the same idler roller 101 rotation axis. Figure 8 illustrates the horizontal track adjustment means of the present invention which, in combination with the opposite vertical adjustment track plate, helps ensure the film properly tracks through the nip roller (retains a right angle film edge relationship to the roller axis while traveling a pre-set preferably generally centered or intermediate path through the nip roller set). Sliding plate 110 is retained in a frictional slide relationship with surface 100 by way of slide tabs TA extending through elongated horizontal slots SL at opposite corners of the plate. On the front flange 100 FF there is supported adjustment screw SC extending into engagement with tab TA on sliding plate 110 receiving an end of the idle roller 101. Upon rotation of screw SC, plate 110 is shifted together with the end of the idler roller. The opposite side is just the same but for there being a vertical adjustment relationship as shown in Figure 9. In this way, idler roller 101 can be adjusted to accommodate any roller assembly position deviation that can lead to non-proper tracking and also can be used to avoid wrinkled or non-smooth bag film contact. Also, idler roller 101 is preferably a steel or metal roller and not a plastic roller to avoid static charge build up relative to the preferred plastic film supplied. Idler roller is also preferably of the type having roller bearings positioned at its ends (not shown) for smooth performance and smooth, unwrinkled film feed.

With reference particularly to Figures 7 and 9, second or lower idler roller 114 is shown arranged parallel to drive roller shaft 82 and supported between left and right side frames 66 and 68. Idler roller 114 preferably has a common roller/bearing design with that of idler roller 101. Also, these figures show first (preferably fixed in position when locked in its operative position) end or cross-cut seal support block or jaw 116 positioned forward of a vertical plane passing through the nip roller contact location and below the axis of rotation of drive shaft 82. End seal jaw 116, which preferably is operationally fixed in position, is shown having a solid block base of a high strength (not easily deformed over an extended length) material that is of sufficient heat wire heat resistance (e.g., a steel block with a zinc and/or chrome exterior plating), and extends between left and right frame structures 66, and 68, but again, like driven shaft 72 and rollers 74, 76, is preferably supported on pivot frame sections 71, 73 and extends parallel with driven shaft 72. Figure 7 illustrates block 116 rigidly fixed at its ends to the opposing, interior sides of pivot frame sections 71, and 73 for movement therewith when latch 87 is released.

Movable end film sealer and cutter jaw 118 (Fig. 9) is secured to end sealer shifting assembly 120 and is positioned adjacent fixed jaw 116 with fixed jaw 116 having sealer and cutter electrical supply means 119 with associated electric connections (Fig. 8) supported on the opposite ends of jaw 116 positioned closest to the front or closest to the operator. End sealer shifting assembly 120 is positioned rearward and preferably at a common central axis height level relative to end seal contact block 116. During formation of a bag, heater jaw 116 supports a cutter heater wire in-between above and below positioned seal forming wires (e.g., for a total of three vertically spaced apart heater wires) with of, for example, 3.2 to 19.1 mm (1/8 to 3/4 inch) equal spacing with 6.4 to 12.7 mm (¼ to ½ inch) spacing being well suited for providing the seal (SE) cut (CT) seal (SE) sequence in the bag just formed and the bag in the process of being formed. The SE-CT-SE sequence, in conjunction with edge seal ES, forms a complete bag from a preferred C-film source. With the SE-CT-SE arrangement there is provided a more assured bottom bag formation and there is avoided the problems associated with prior art devices that rely on the end or cross-cut only as the means for sealing. For example, if for any reason a perfect end seal is not secured during the cut formation, there can result massive foam spillage and build up as the foam mix is at its most liquid and least foam development stage when the dispenser first shoots the shot into the just formed bag bottom.

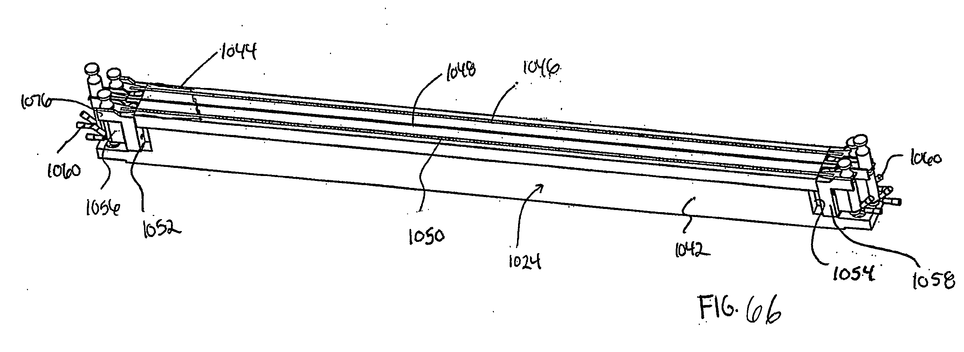

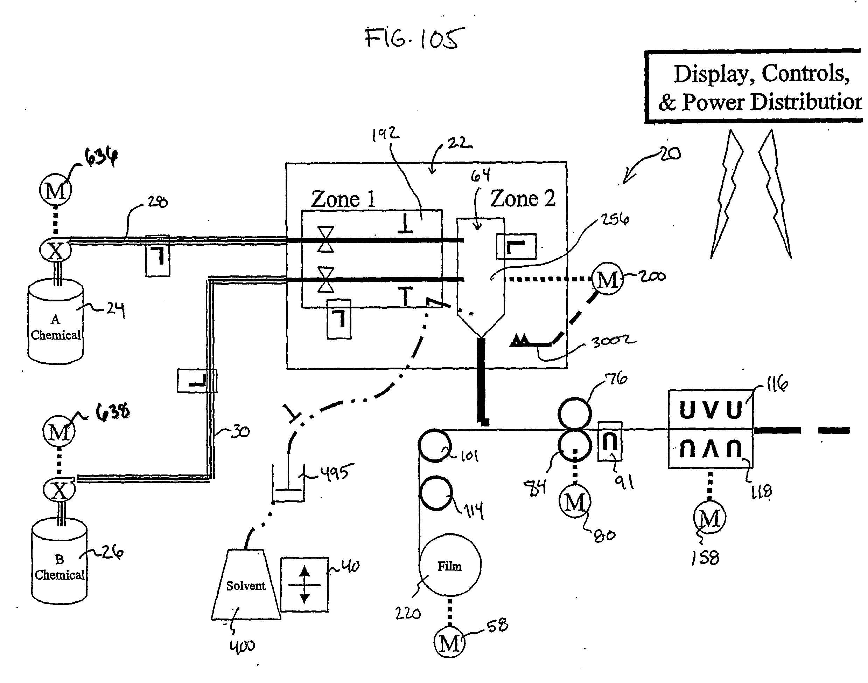

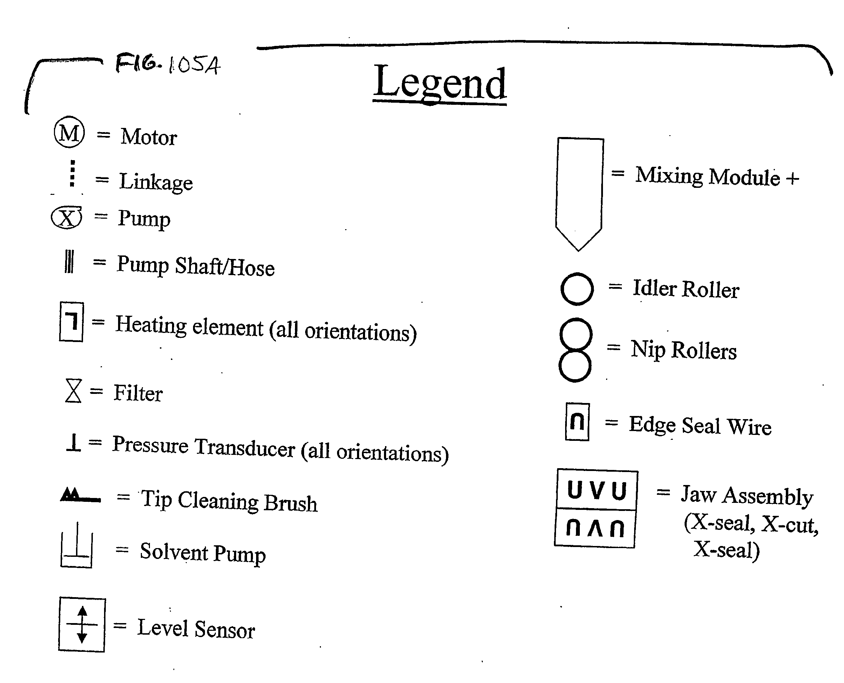

A preferred embodiment features a combination end film sealer means and cutter means 119 (e.g., see Figs. 66 to 68) having three independently controlled cross-cut/cross-seal resistance wire mechanisms preferably extending across the full length of the face of block 116. These wires are connected at their ends with quick release wire end holders. The end seal and cutter means on the fixed block 116 (after access panel locked in place) works in conjunction with movable sealer shifting assembly or jaw support assembly 120. As also explained below, the heater and sealer wires are sensed and thus in communication with a controller such as one associated with a main processor for the system or a dedicated heater wire monitoring sub-processing as illustrated in Figure 105. Venting preferably takes place on the side with the edge seal ES through a temporary lowering of heat below the sealing temperature as the film is fed past or some alternate means as in adjacent mechanical or heat associated slicing or opening techniques. Block 118 also has a forward face positioned rearward (farther away from operator) of the above mentioned nip roller vertical plane when in a stand-by state and is moved into an end seal location when shifting assembly is activated and, in this way, there is provided room for bag film feed past until end sealer shifting assembly 120 is activated.

A first embodiment of sealer shifting assembly 120 is shown in Figures 9, and 9A to 9E and comprises first and second sealer support rod assemblies 122, 124 each having a front, forward end with reception blocks 121, 123 having a recess area securement means for receiving and securing jaw 118. The securement means is preferably in the form of an elongated (end threaded) rod, 126 (Fig. 9E) extending through a respective one of blocks 121, 123 and into threaded engagement with a respective jaw extension 141, 143 laterally external to the main or contact body of jaw 118. The supported rod assemblies 122, 124 are preferably designed the same, but for their mirror image orientation. Rod 126 has a rear end extending through cylinder extensions 147 (Fig. 9B) and out through block 125 and out the rear of block 125 and having blocking member 117 (e.g., threaded cup). Rod 126 is surrounded by cylindrical sleeve SL extending between cap 117 and jaw extension 143. Spring 130 surrounds sleeve SL and extends into contact with jaw extension 143, at one end and, at an opposite end, abuts cup 147 as well as threaded low friction sleeve FS received within block 125. Spring or biasing means 130 is preferably a preloaded spring (e.g., 15 cm (6") free state at 14.3kg/cm (80 lb/in) spring preloaded to about 49.9kg (110 lbs)) to bias block 118 forward against the limiting end of the rod 126 (threaded end and cap 117). With the rear end of rod 126 slidingly received within housing block 125 and having locking protrusion 117 to prevent inadvertent release, there is allowed for absorption of additional compression on the spring during a state of advancement into contact with fixed jaw 116 (e.g., 0.76 to 1.02 mm (.03 to .04 inch)) which is enough to absorb deviations in the relative compressing faces of the two jaws and to improve the length consistency of the heated wire seal and cut formation.

Each of assemblies 122, 124 further comprise cam roller pin support extension 132 secured at a rear end of housing block 125 which respectively receive cam roller 140. Cam rollers 140 are received within respective cam tracks 136, 138 formed in cams 144, 146 which are shown in Figures 9A, and 9B to have an indented cylindrical shape or an ear shape with an outer flange wall defining, on its interior surface, a first cam track surface 141C and an inner wall, defining on its outer surface, a second cam track surface 143C (Fig. 9B). Cams 144, 146 are fixed to cam shaft 148 extending between bearing reception ports provided at the rear end of first and second side frames 66, 68. To lock shaft 148 into position on frame structure 68, there is provided bearing block 145 (Fig. 9B). Jaw 118 is confined to reciprocation essentially (as noted above, some degree of play at connection end to provide for flush contact adjustment relative to the operationally fixed jaw 116) along a horizontal plane in forward and rearward travel by guide roller sets 133 and 135 each featuring upper and lower guide rollers which are provided and supported on frame structures 66, 68 and placed in contact with upper and lower surfaces of housing blocks 125, 127. Second sets of upper and lower guide rollers 137, 139 are supported on frame structures 66 and 68 and in contact with the upper and lower surfaces of jaw extensions 141, 143.

Cam shaft 148 extends into driving engagement with drive pulley 150 forming part of drive pulley assembly 152 which further includes pulley belt 154 (Fig. 7). As seen from Figure 7, side frame 66 includes cam motor support section 156 to which cam motor 158 is secured. Cam motor drive shaft 160 is secured to drive pulley 162 of drive pulley assembly 152. Thus, activation of cam motor 158 leads to drive force transmission by transmission means (represented by the drive pulley assembly in the illustrated preferred embodiment) which in turn rotates cam shaft 148 and cams 144, 146 fixedly mounted thereon to provide for the pushing forward during the push forward cam rotation mode (cam roller 140 riding on a portion of the interior cam track surface 143 to effectuate a push forward to provide for the end seal and cutting function) and the pulling rearward of jaw 118 after the sealing function is completed (can include cutting as sole means of sealing or as a component of multiple seals (non-cutting and cutting) or as a weakening for downstream separation in a bag chain embodiment through control of the level of heat and time of contact with film) by way of cam roller 140 riding on the first cam track surface 141C during a pull back cam rotation mode for cams 140, 142. Alternate transmission means and cam or non-cam push-pull driving means are also featured under the present invention such as a gear based system (e.g., rack and pinion) or hydraulic system for either or both of the drive transmission means or the push-pull driving of the end seal block or jaw 118. However, the illustrated cam arrangement provides for efficient and accurate push and pull movement with controlled force application to help provide improved seals and/or cuts. Thus, blocks 121, 123 and the supported moving jaw 118 are biased forward into a compression state with jaw 118, which compression is accommodated via compression of spring 130 and sliding of rod 126 if need be in each of assemblies 122, 124. In addition, the spring provides for some degree of play relative to up-down/side-to-side and points in-between. In a preferred embodiment the biasing force is about 334 to 668N (75 to 150 lbf) with 490 N(110 lbf) being an illustrative force level. This arrangement provides a non-rigid, compliant system which can accommodates deviations relative to the end seal opposing faces of the jaws in the invention disclosure.

Figures 7 and 9 also illustrate the preferred external support plates 156 for cam motor 158, and plate 66 for drive shaft motor 80.

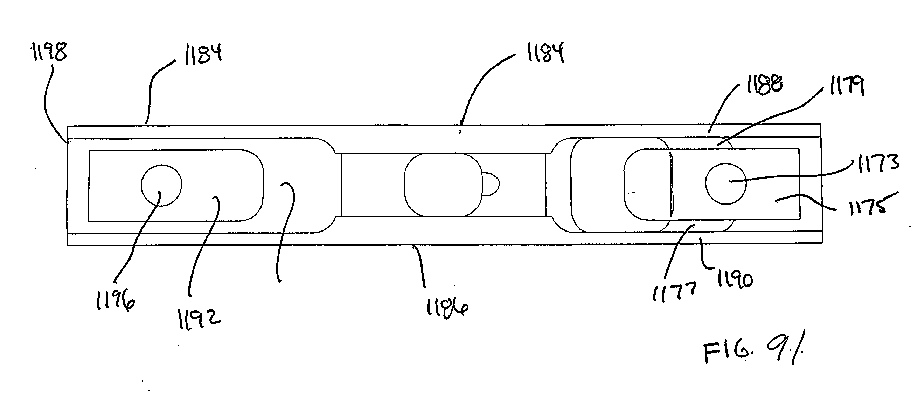

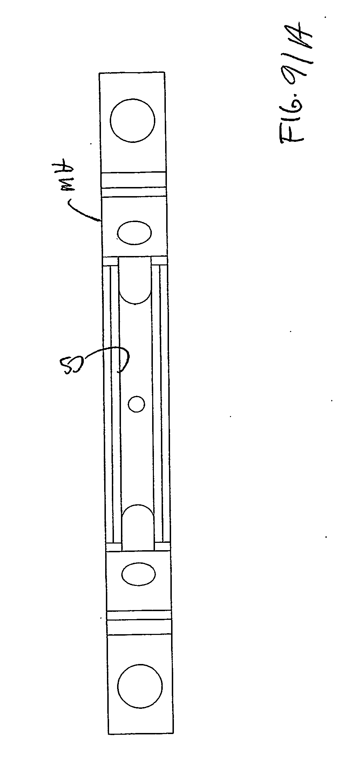

Figure 9F shows a perspective view of a second embodiment of a moving jaw assembly 4000 which retracts and pushes forward jaw block 118 against the preferably stationary jaw 116 with heated cross cut and seal wires, The rear end of block 118 is connected at opposite ends to respective casings 4002 and 4004 with these casings forming a part of the cam force transmission devices 4006 and 4008. Cam force transmission devices 4006 and 4008 are the same except for their mirror image positioning (and below described home positioner) and thus the discussion focuses on transmission device 4006 alone. Casing 4004 is secured to frame structure 66 of bagger assembly 64 at its expanded ends and has an interior reception chamber formed along its inner side. As seen from Figure 91, within this chamber is positioned bearing plates 4010 and 4012 which receive in sliding fashion cam rod 4014. The rear end of cam rod 4014 includes cam yoke 4015 which supports cam roller 4016 which rides along cam 4018 having a eccentric shape with a minimum contact thickness shown in contact with roller 4016 in Figure 91 and a maximum thickness shown in contact with roller 4016 in Figure 9J.

The forward end of cam rod 4014 includes a threaded center hole receiving push rod 4020 having a first end extending into threaded contact with the center hole and a second end that extends through an aperture in block 118 and has enlarged head 4022. Push rod 4020 is encircled by rod sleeve 4024 having a forward end received with a pocket recess in block 118 8 and a rearward end in contact with first (inner) biasing member 4026, which is preferably a coil spring, compressed between a forward end of push rod 4014 and a rear end of sleeve 4024. Surrounding inner spring 4026 is a second (outer) biasing member 4028, also preferably in the form of a coil spring, received by a flanged end of cam follower 4014 at one end and in contact with an outer flanged sleeve 4030 in contact with the forward enlarged end of casing 4004. Outer spring 4028 is designed to hold the cam follower or cam rod 4014 against the cam, while the inner spring 4026 produces the compression for sealing the jaws at the time of forward extension. In view of these, different functions, outer longer spring (e.g., 8.9cm (3.5 inch) free length) preferably has a much lower spring constant (e.g., 2.14kg/cm (12 lbs/in)) as compared to the inner shorter spring (e.g., 4.4cm (1.75 inch) free length) having a higher spring constant (e.g., 134 kg/cm(750lbs/in)). Cams 4018 and 4018' are interconnected by cylindrical drive sleeve 4032 with annular flanges 4034 and associated fasteners providing a means of securement between the sleeve 4032 and a respective eccentric cam, with the cams being driven by cam motor 158 and associated drive transmission as in the other embodiment.

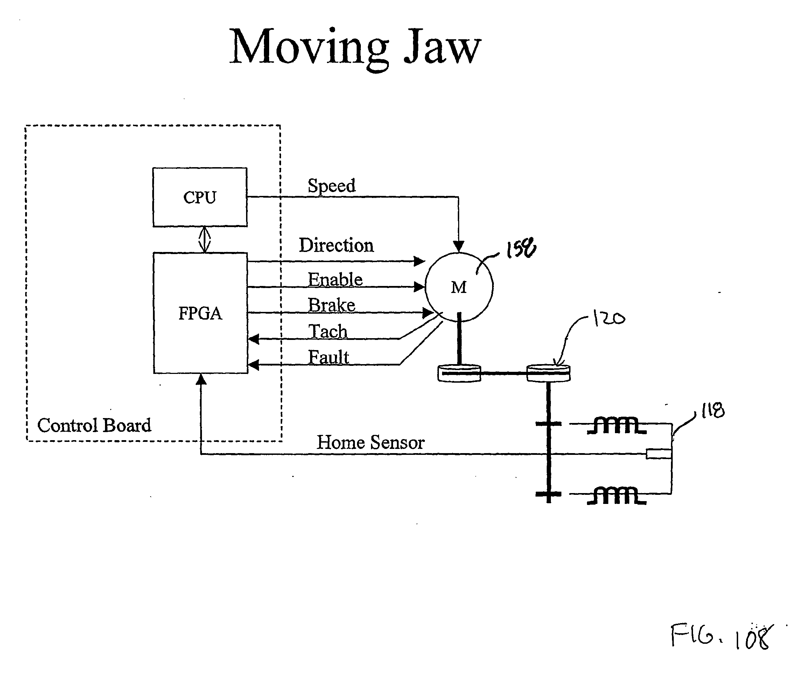

Figure 9F illustrates home sensor 4036 which is connected to an extension of casing 4004 and is positioned for monitoring the exact location of the moving jaw 118 at all times and is in communication with the control and monitoring sub-system shown in Figure 108 and provides position feedback which is useful, together with the encoder information generated by the cam motor 158 in determining current and historic location data.

With reference to Figures 6, and 11 to 13 there is illustrated a preferred mounting means featuring base 42, lifter assembly 40 and securement structure 62, Securement structure 62 comprises curved forward wall 164 and vertical back wall 166 which, together with lifter top plate 168, define cavity 169. As shown in Figures 11 and 12 securement structure 62 further comprises curving interior frame member 170, which has an outer peripheral edge 171 that provides for dispenser hinge bracket support (discussed below) and a back curved flange section 175 extending outward and integral with frame member 170 as well as outer frame wall 174. Frame wall 174 has a pulley drive assembly reception aperture (e.g., an ellipsoidal slot) 172 formed therein.

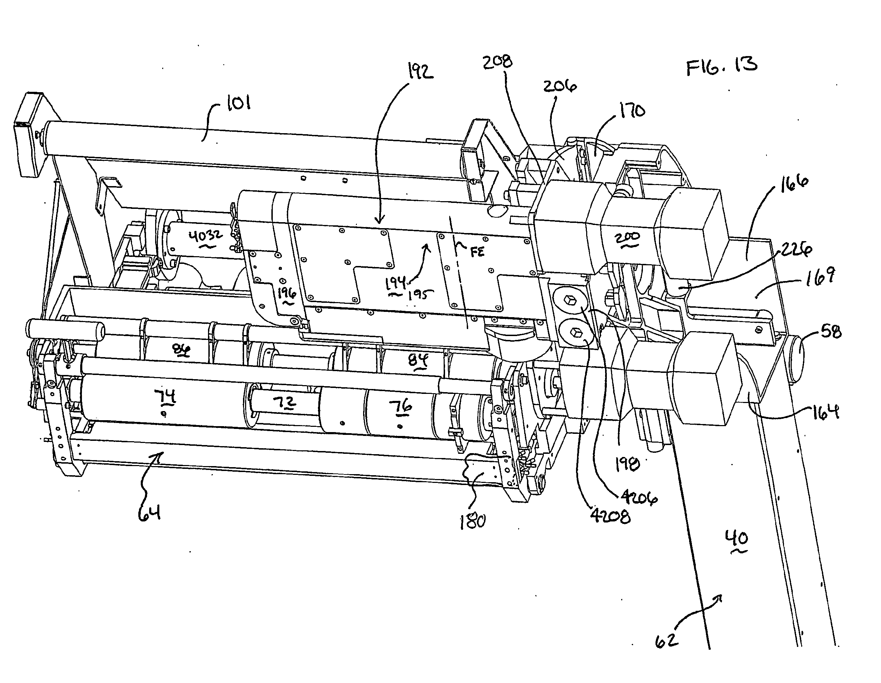

Further longitudinally (right side-to-left side) outward of frame wall 174 is mounting plate 176 which, in conjunction with open area 169, provides a convenient location for securement of the electronics such as the system processor(s), interfaces, drive units, and external communication means such as a modem. In this regard, reference is made to co-pending U.S. Provisional Patent Application Serial No. 60/488,102 entitled "System and Method For Providing Remote Monitoring of a Manufacturing Device" filed on July 18, 2003, and which is incorporated herein by reference describing the remote interfacing of the dispensing system with, among potential recipients, service and supply sources. Figure 11 also illustrates the supporting frame work for the hinged front access door assembly shown open in Figure 139 which comprises front access door plate 180 (partially shown in Fig. 13) supported at opposite ends by pivot frame sections 71 and 73. Pivot frame sections 71 and 73 preferably have a first (e.g., lower) end which is pivotally secured to pivot rod 70 and also between which rod 70 extends.

Figures 11 and 12 further reveal film roll support means 186 shown supporting film roll core 188 about which bag forming film is wrapped (e.g., a roll of C-fold film; not shown in Figures. 11 and 12). Film roll support means 186 is in driving communication with film roll/web tensioning drive assembly 190 (partially shown Fig. 11) with motor 58 shown supported on the back side of lifter assembly 40.

Figure 13 provides a perspective view of bagger assembly 64 mounted on mounting means 78 with dispenser apparatus 192 included (e.g., a two component foam mix dispenser apparatus is shown), which is also secured to support assembly 62 in cantilever fashion so as to have, when in its operational position, a vertical central cross-sectional plane generally aligned with the nip roller contact region positioned below it to dispense material between a forward positioned central axis of shaft 72 and a rearward positioned central axis of shaft 82. As shown in Figure 13, dispenser assembly 192 comprises dispenser housing 194 with main housing section 195, a dispenser end or outward section 196 of the dispenser housing with the dispenser outlet preferably also being positioned above and centrally axially situated between first and second side frame structures 66, and 68. With this positioning, dispensing of material can be carried out in the clearance space defined axially between the two respective nip roller sets 74, 76 and 84, 86.

Also dispenser assembly 192 is preferably supported a short distance above (e.g., a separation distance of 2.5 to 12.7 cm (1 to 5 inches) more preferably 5.1 to 7.6 cm(2 to 3 inches)) the nip contact location or the underlying (preferably horizontal) plane on which both rotation axes of shafts 72, 82 fall. This arrangement allows for receipt of chemical in the bag being formed in direct fashion and with a lessening of spray or spillage due to a higher clearance relationship as in the prior art. Dispenser apparatus 192 further includes chemical inlet section 198 positioned preferably on the opposite side of main dispenser housing 194 relative to dispenser and section 196. The outlet or lower end of dispenser assembly 194 is further shown positioned below idler roller 101 (e.g., a preferred top to bottom distance for housing 194 is 12.7 to 25.4 cm (5 to 10 inches) with 17·8cm (7 inches) preferred, and it is preferable to have only a short distance between the upper curved edge of dispenser housing 194 and the horizontal plane contacting the lower end of upper idler roller 101 (e.g., 2.5 to 7.6cm (1 to 3 inch) clearance with 3.8cm (1.5 inches) preferred). In this way the upper, smooth curved edge of dispenser housing 194 helps in the initiation of the C-fold film or like film with the edges being separated and opened up as the film passes from idler roller 101 and along the smooth sides of dispenser housing 194 into the nip roller set. Thus, a distance of about 30.5 cm (1 foot) $\pm$ 7.6 cm (3 inch) is preferred for the distance between upper idler roller axis and the nip roller contact point

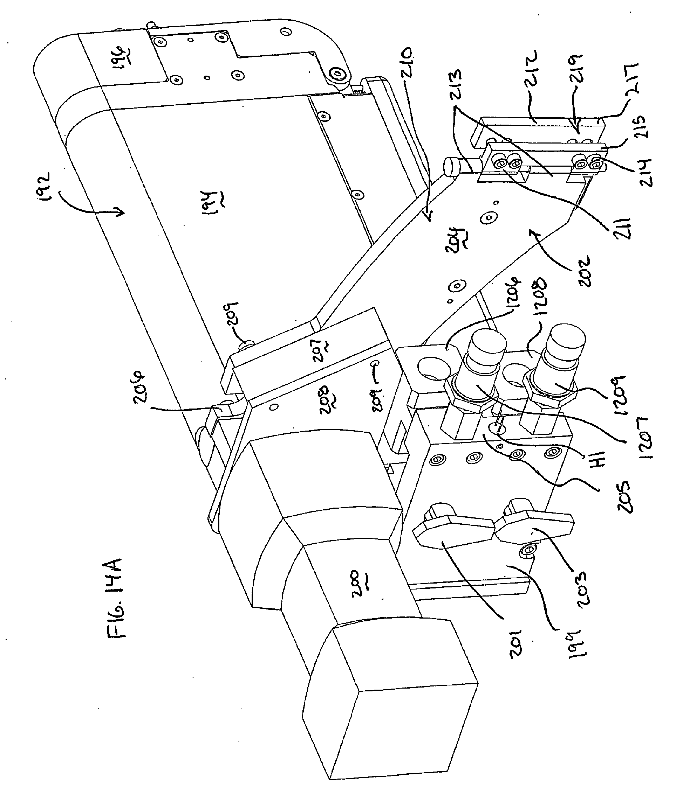

Figure 13 also illustrates dispenser motor 200 used for dispenser valve rod reciprocation as described below. Inlet end section 198 comprises chemical shut off valves with chemical shut off valve handles 201, 203 (Fig. 14A) that are large (e.g., a 1.3 to 2.5 cm (½ to 1 inch) or more in length) because of their placement outside of the film pathway, and thus readily viewed, particularly with color coding (as in blue and red handles) and positioned for easy hand grasping and adjustment without the need for tooling. As shown in Fig. 14A, chemical shutoff valves 201, 203 are supported on manifold housing 205 of main manifold 199 through which the chemicals pass before being forwarded to the manifold housing portion of dispenser housing is and are adjustable between chemical pass and chemical blocked settings. The chemical shutoff valves are also positioned well away from the dispenser outlet so as to help avoid the problem associated with the prior art of having foam harden on the valves rendering them difficult to access. There is thus avoided the prior art disadvantages of having valves of relatively small size that are positioned within the confines of the bag being formed and are designed to make it difficult to view the status of the shut off valves and access the valves particularly after a foam coating.

Inlet end section 198 further includes pressure transducers 1207 and 1209 adjacent heater chemical hose and hose heater feed through manifolds 1206 and 1208 which feed into main manifold 199. Pressure transducers are in electrical communication with the control system of the foam-in-bag dispenser system and used to monitor the general flow state (e.g., monitoring pressure to sense line blockage or chemical run out) as well as to provide pressure signal feedback used by the control system in maintaining the desired chemical characteristics (e.g., pressure level, temperatures, flow rate etc.) for the chemicals in maintaining the desired mix relationship for enhanced foam generation. In this regard, reference is made to Figure 105 for an illustration of chemical temperature control means in the main manifold 199 and housing manifold 194. Figure 14A also illustrates manifold heater H1 which also is in communication with the control system for maintaining a desired temperature in the manifold 199. Filter devices 4206 and 4208 seen in Figure 13 are placed in fluid communication with the heated chemical passing through the manifold and can be made of a relatively large size and also of a fine mesh (e.g., screen mesh size of 100 or more mesh) and arranged so as to present at least one screen section in contact with the through flow of chemical. In view of the filter device's location at the inlet end section 148 they too are also far removed from the chemical dispenser's outlet and thus not prone to hardened chemical coverage (e.g., the inlet end section's 198 closest surface (e.g., the nearest filter's central axis and the closure valves) are positioned 10.2cm or more (4 or more inches) and more preferably 15.2-40.6cm (6-16 inches) from the interior edge of film travel off the dispenser housing). This positioning outside of the film edge provides for the filter enlargement and much greater flexibility in the type and configuration of the filter. As seen, filters 4206 and 4208 are readily accessible and preferably retained in a cylindrical cavity such that a cylindrical filter shape can be inserted in cartridge like fashion. Enhanced removal filters can also be inserted like "depth" filters (100 micron or 50 micron removed or less, as in a two stage depth filter with a first stage soft outer element and a more rigid inner element capable of handling the pressures involved and the chemical type passing therethrough without degradation).

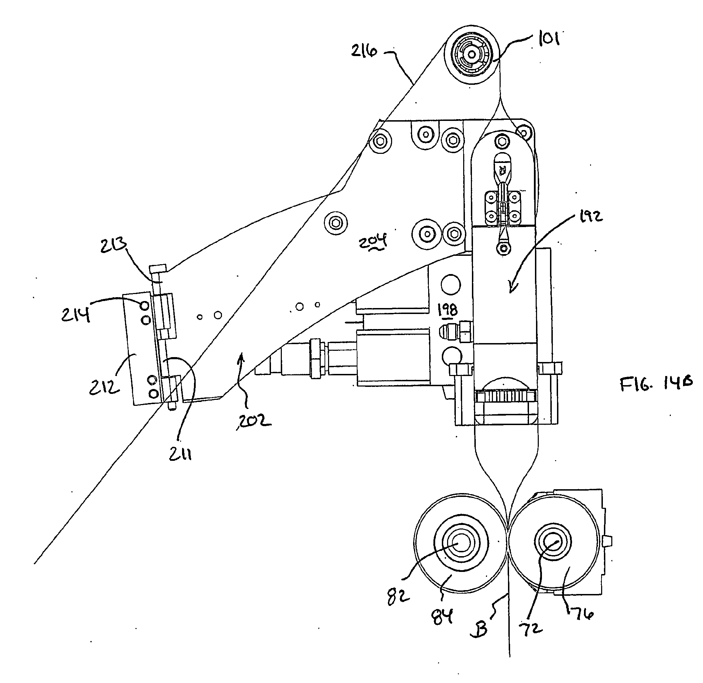

Figure 14A illustrates dispenser apparatus 192 separated from its support location shown in Figure 13 and shows main housing 194, dispenser end 196 as well as additional detail as to inlet end section 198 and dispenser motor 200. As seen from Figures 13,14A and 14B and described in part above, many of the components previously placed in the prior art close to the dispenser outlet and between the left and right edges of the film being fed therepast and thus highly susceptible to foam contact, are moved outside and away from the area between the left and right edges of the film. In Figure 13 there is demarcation line FE representing the most interior film edge with the opposite edge traveling forward of the free end of dispenser system 192. Thus, with a C-fold film the bend edge is free to pass by the cantilevered dispenser system 192 while the interior two sides are joined together with edge sealer 91 while passing along line edge FE. The components which have been moved from the prior art location between the film edges includes the drive motor (and a portion of its transmission), filter screens, electrical wires, chemical hoses and fittings, shut off valves, and pressure sensors.

The aforementioned chemical filter screens for filters 4206, 4208 are needed to protect the small orifice ports in the mixing chamber. These screens need to be cleaned out periodically. In the common prior art design, these screens are adjacent to the mixing block. To access these screens you have to work in this area, which can be a sticky and difficult task because of the chemical and foam buildup. A preferred embodiment of the present invention locates the screens of filters 4206 and 4208 in the main dispenser manifold 199, which is completely outside of the bag. This means that the screens retainers will be cleaner and easier to remove than with the prior art design. The screen retainer caps are also made much larger relative to the above noted prior art design. By moving the filters external to the bag forming area, the screens can be made larger avoiding the situation that the smaller the screen surface area, the more often it has to be cleaned or replaced. The screens in previous foam dispensers were located near the mixing chamber, which were always inside the bag. These screens had to be small because of the miniaturization required to keep everything inside the bag. The filter screens and filters 4206, 4208 supporting the screens of a preferred embodiment are located outside of the bag in the main dispenser manifold, where components can be much larger without affecting machine performance in any way.

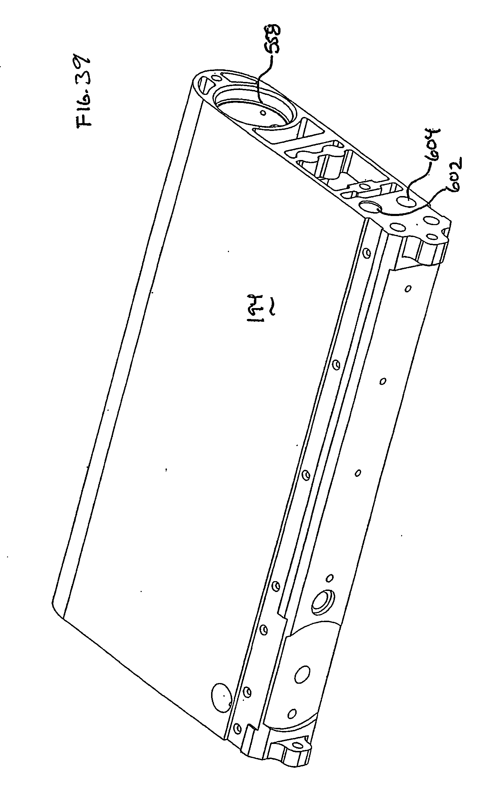

A preferred embodiment of the present invention also has no exposed electrical wires or cables inside of the bag. All electrical connections are made from the outside, or completely isolated inside the dispenser support 194 (which preferably based on an extruded main body as shown in Figure 39).

Common prior art systems have one large multi-conductor electrical (e.g., motor) supply cable that is exposed inside of the bag, often together with a number of single conductor wires inside of the dispenser mechanism that are not protected from the seepage of chemicals and foams. Also, the common prior art designs have chemical hoses that run wide-open right into the middle of the bag, where they are regularly exposed to foam, chemicals, and solvents. These chemical hoses are especially vulnerable because their outer layer is a stainless steel braiding, which presents an obstacle to cleaning when the foam gets into it. Prior art chemical hose fittings, JIC swivel type, are also completely exposed to foam, which can make lit more difficult to loosen the fittings, or to re-tighten them.

The conventional dispenser systems shutoff valves for chemical flow are located adjacent to the mixing block. They are fully exposed, right in the middle of the bag, where they are regularly contacted by foam. As seen from Figure 14A, for example, chemical line shut off valves 201 and 203 of the present invention are supported by manifold 205 and positioned far off from the bag (e.g., more than 12.7cm (5) and preferably more than 17.8cm (7 inches) from the film edge FE).

Figure 14A further illustrates support bracket assembly 202 comprising main bracket body 204, having bracket plate 206 secured to an exterior bracket plate 208 by way of cross plate 207 with securement bolts 209 on which motor 200 is mounted, with dispensing system 192 also being secured to bracket assembly 202. Bracket assembly 202 further comprises dispenser rotation facilitator means 210 such as the hinged bracket support assembly 219 shown in its preferred positioning with the rotation axis being at its rearward most end whereby rotation of the dispenser from the dispense mode (e.g., a vertical orientation with chemical output along a vertical axis preferred) shown in Figure 14A to a servicing mode whereupon both the bracket assembly 202 and rigidly (or also hinged by) attached dispenser system 192 are rotated greater than 60 degrees (e.g., 90° transverse to original position) out toward the operator. Bracket support assembly 219 comprises securement clamp plate assembly 212 with opposing clamp plates 215, 217 with bolt fasteners 214 for securement to interior frame member 170 such that support bracket assembly 202 can be hinged, (together with the dispenser assembly 192 with driving motor 200 out of the way and forward of the front face 181 of bagger assembly 64 (e.g., a counterclockwise rotation)).

Thus, while dispenser apparatus 92 is preferably designed to have its outlet port vertically close to the bag's end seal location, it is also preferably arranged at a height relative to the upper end of support assembly providing mounting means 78 for the bagger assembly 64 to have freedom of adjustment between the dispensing position and the servicing position (e.g., see the curved forward wall 164 whose curvature provides for added clearance relative to the lower edge of dispenser 192). With this arrangement, when servicing is desired, the operator simply rotates the entire dispenser assembly toward the operator (a counterclockwise rotation for the dispenser assembly shown in Figure 13 (e.g., a 45-135° rotation with a preferred 90° rotation placing the axis of elongation of housing 194 transverse to the central axis of drive shaft 82)). Rotation bracket support assembly 202 is preferably made rotatable by way of a hinged connection 219 at the rear end of the support bracket 202, although other rotation arrangements are also featured under the present invention such as the dispenser 192 having a rotation access at its boundary region of bracket assembly 202 and dispenser housing 194 or inlet end section 198.

Figure 14B provides a side elevational view of dispenser system 192 and bracket assembly 202 in relationship to film 216 which in a preferred embodiment is a C-fold film featuring a common fold edge and two free edges at the opposite end of the two fold panel. While a C-fold film is a preferred film choice, a variety of other film types of film or bag material sources are suitable for use of the present invention including gusseted and non-gusseted film, tubular film (preferably with an upstream slit formation means (not shown) for passage past the dispenser) or two separate or independent film sources (in which case an opposite film roll and film path is added together with an added side edge sealer) or a single film roll comprised of two layers with opposite free edges in a stacked and rolled relationship (also requiring a two side edge seal not needed with the preferred C-fold film usage wherein only the non-fold film edging needs to be edge sealed). For example, in a preferred embodiment, in addition to the single fold C-fold film, with planar front and back surfaces, a larger volume bag is provided with the same left to right edge film travel width (e.g., 30.5 cm (12 inch) or 48.3cm (19 inch)) and features a gusseted film such as one having a common fold edge and a. V-fold provided at that fold end and on the other, interior side, free edges for both the front and rear film sheets sharing the common fold line. The interior edges each have a V-fold that is preferably less than a third of the overall width of the sheet (e.g., 6.4 cm (2½ inch) gussets).

As shown in Figure 14B after leaving the film roll and traveling past lower idler roller 114 (not shown in Figure 14B - See Figure 12), the film is wrapped around upper idler roller 101 and exits at a position where it is shown to have a vertical film departure tangent vertically aligned with the nip contact edge of the nip roller sets. Because of the C-fold arrangement, the folded edge is free to travel outward of the cantilever supported dispenser system 192. That is, depending upon film width desired, the folded end of C-fold film 216 travels vertically down to the left side of dispenser end section 196 (from a front view as in relative to Figure 13) for driving nip engagement with the contacting, left set of nip rollers (74, 86). As further shown in Figure 14B the opposite end of film 216 with free edges travels along the smooth surface of dispenser housing whereupon the free edges are brought together for driving engagement relative to contacting right nip roller set (76, 84) whereupon the contacting free film edges are subject to edge sealer 91 to complete the side edge sealing for the bag being formed.

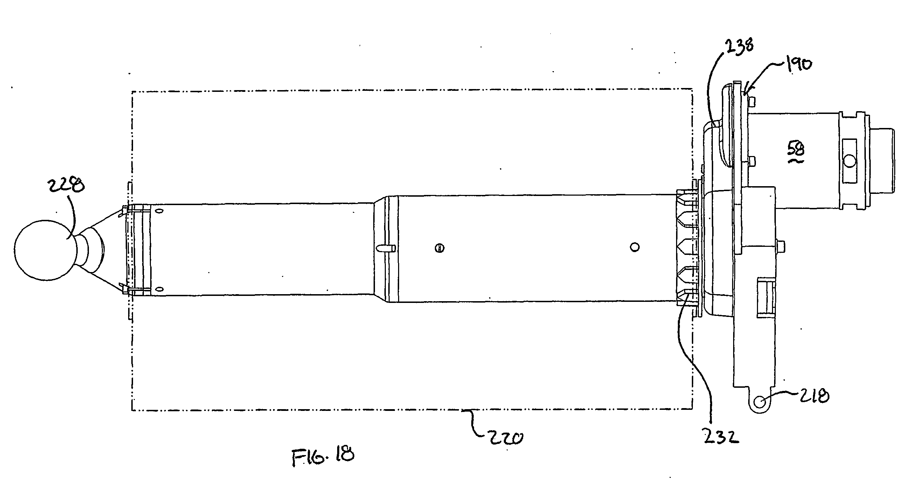

Figures 12, 15 and 16-21 illustrate the film roll spindle loader adjustment means 218 of the present invention that facilitates the loading of a roll of film for use in bagger assembly 64. Rolls of film vary in weight depending upon the width (e.g., a 12 roll or a 48.3 cm (19 inch) bag width with weight of, for example, 11.3 to 15.9 kg (25 to 35 lbs.)) and the amount of film on the roll which is at least partly defined by the radius differential of the rolled film annulus formed between the outer surface of the film roll and the exterior of the roll core 188 (if a core is relied upon), with the preferred outer diameter dimension of the roll being 20.3 to 30.5 cm (8 to 12 inches) (e.g., 26.7cm (10.5 inches)), and the core being 7.6 to 15.3 cm (3 to 6 inches) with (10.2 cm (4 inches) being preferred). The film source is preferably a high density polyurethane blend film wrapped about a film core with at thickness of 0.2mm (0075 in.) times 2 for folded combinations.

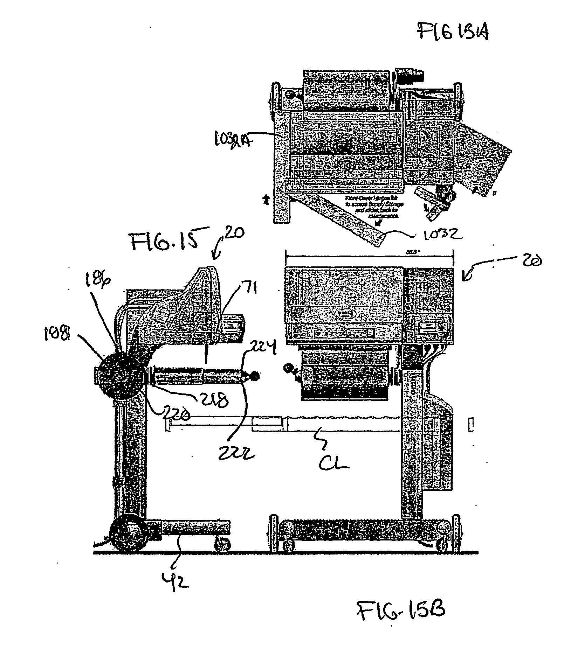

Figure 15 provides a left side elevation view of dispenser system 22 with a full bag film roll 220 shown in a ready to use state (ready for film feed or reel out to nip roller set) by way of dashed lines and wrapped about core 188 while being supported on film support means 186, Figure 15 also illustrates (after film roll run-out and core removal) spindle 222 forming a component of film support means 186 and having been adjusted from the reel out mode to a ready to load (unload) state wherein the axis of elongation of spindle 222 extends transversely to the axis of elongation assumed by the spindle when in a reel out state.

The ability to adjust the axis of elongation of spindle 222 to a location where an operator can simply slide a bag film roll on to the spindle, which roll can weigh 13.6kg (30 lbs) or more, past the free end 224 of the spindle and along its central axis greatly simplifies and speeds up roll film loading as compared to many prior art designs that require the operator to load the film roll into the bottom and/or back of the machine at a very awkward angle. This loading requirement for prior art devices can put a great strain on the back and shoulders muscles and cannot be expected to be performed by some operators. Spindle load adjustment means 218 of the present invention includes an embodiment that allows an operator to rotate an empty film roll (spindle) to a position where the spindle points directly at the operator, whereupon the empty roll core can be readily removed and a new film roll with core can be loaded in a fashion that provides for reduced operator stress through the ability to load from the front of the machine where an operator typically stands during general dispensing operation.

Furthermore, in a preferred embodiment spindle load adjustment means 186 operates in conjunction with lock in-position mechanism 226 (Fig. 11A to 11D) that locks or engages the film support means in a operational film feed state, and which can be disengaged (e.g., a control signal based on the processing of a button on the control panel shown in Figure 15B) to provide for movement of spindle 222 into a loading position. That is, lock mechanism 226 locks the spindle with loaded roll upon locking activation (e.g., following insertion of a new roller spindle 222 and the return of the roll to a ready to feed mode). Upon release activation, lock-in-position mechanism 226 releases film support means from its fixed or reel out state with the spindle axis parallel to driver roller 72 to enable adjustment to the new film roll load state. In a preferred embodiment, there is further provided a release facilitator 221 (Fig. 11D) such as a light load wrapped torsion spring or a compressed helical spring or solenoid driven pusher to initiate the rotation of the spindle toward the load state as illustrated by the rotation arrow in Figure 12. Thus, release facilitator means is provided such as an electrically activated pusher solenoid, a compressible elastomeric block, or some other rotation facilitator.

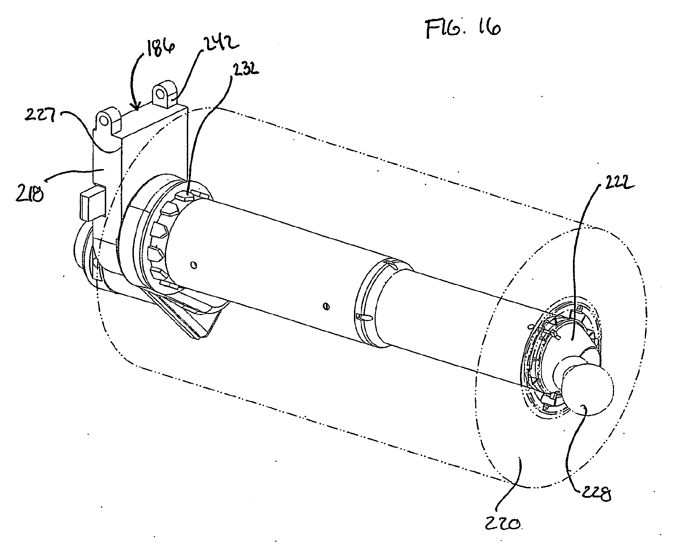

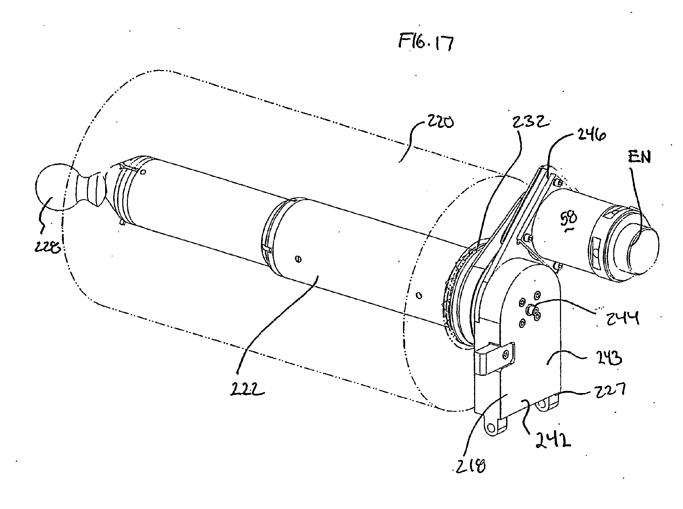

With reference to Figures 16 and 17, there can be seen pivot support frame structure 227 (or the spindle-to-support connector) of spindle load adjustment means 218 to which the non-free or base end of the spindle is connected in a bearing portion of frame structure 227. Spindle locking latch 226 (Fig. 6) locks spindle 222 with film roll 220 in its operational feed mode-automatically upon return rotation from a film load position. In addition, the release mechanism preferably comprises a capture spindle latch mechanism that is solenoid driven (button activated at display panel) into release and has a cam surface which rides over and latches a capture portion of the spindle mechanism when being returned into ready to reel out mode.

Figures 16 - 21 illustrate film roll support means 186 comprising spindle 222 with roll latch 228 for locking the film axially on the spindle. These figures also show drive transmission 238 includes spindle base or proximal end roll engagement means 232. The spindle base end engagement member 232 drives film roll 220 with web tension motor 58 and forms the downstream component of web tension or film source drive transmission 238, with the film source drive means of web tension assembly 190 comprising driver or web tension motor 58 and film source or web tension drive transmission 238.

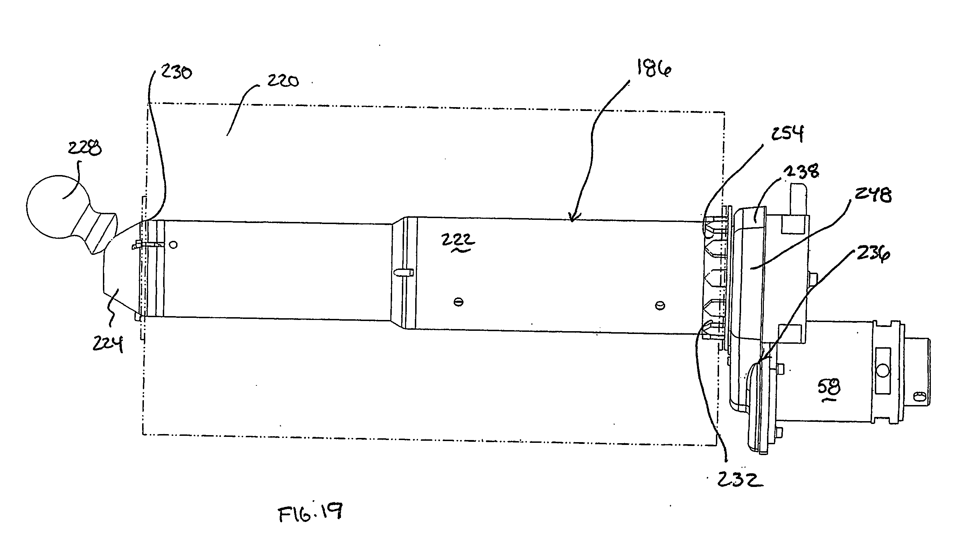

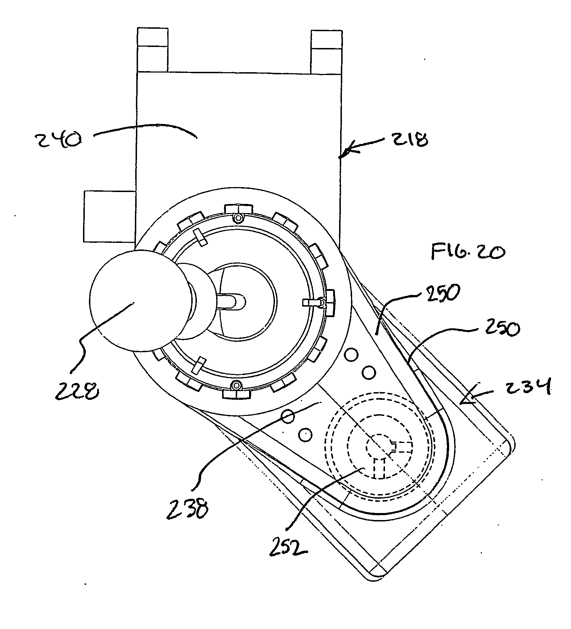

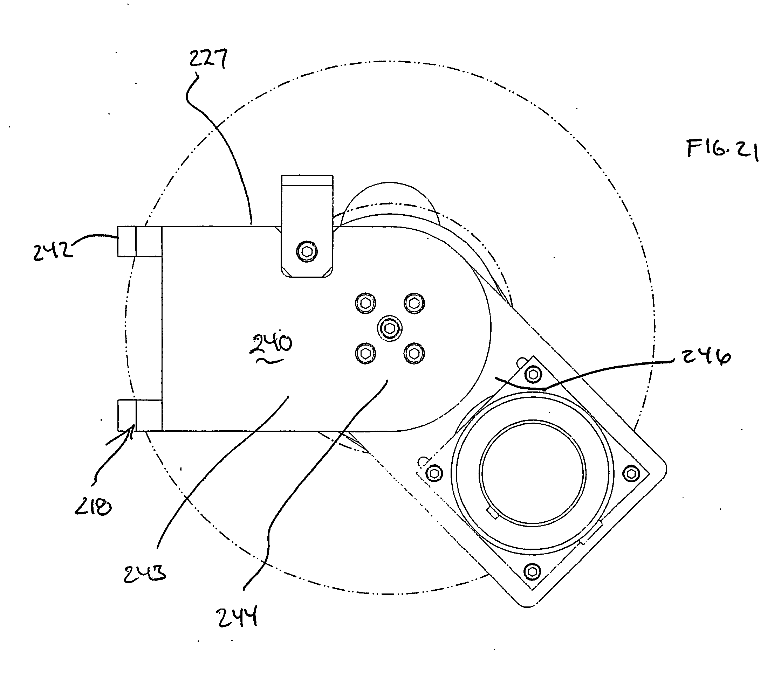

Figures 20 and 21 further illustrates spindle loading adjustment means 218 having load support structure 240 with hinge section 242 at one side of a first support plate (e.g., a metal casting) 243, an intermediate support section 244, aligned with the central axis of spindle 222 and receiving by way of a bearing support the base end of the spindle, and a web tension motor mount support section 246 radially spaced from the noted central spindle axis. As shown in Figures 12 and 19, web tension motor 58 is supported by motor mount support section 246 on a first side opposite to the spindle location side (relative to an extension of the axis of rotation of the roller) and is spaced rearward of lifter assembly 40. On the second or spindle location side of motor mount support section 246 and the interconnected intermediate section 244, there is provided support transmission casing 248 (Fig. 19) which encases a preferred embodiment of web tension drive transmission 238. As shown, drive transmission 238 features a timing belt 250 (shown in dashed lines in Fig. 20), driving pulley 252 and a driven pulley (not shown) with the latter being in driving engagement with engagement member 232.

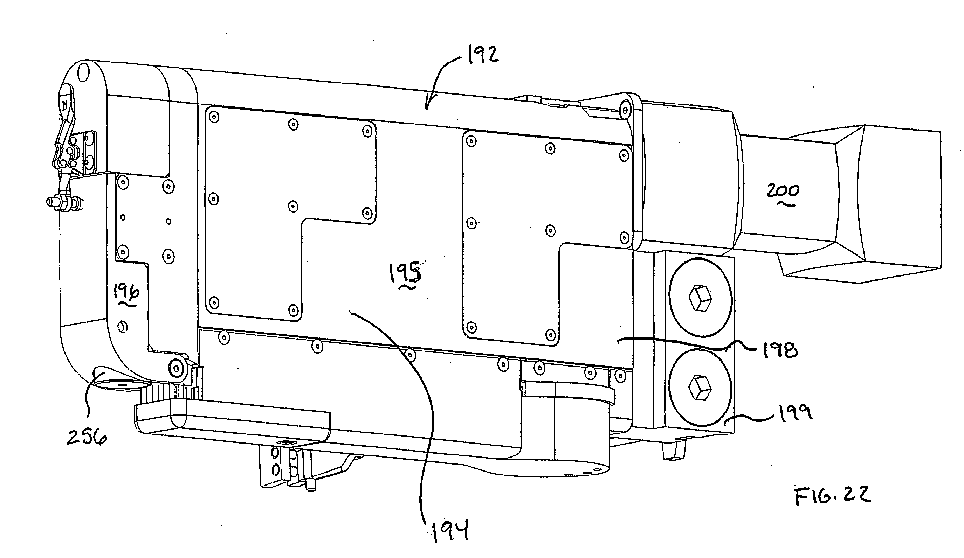

Figure 22 provides a view of dispenser system 192 in similar fashion to that shown in Figure 13, but from a different perspective angle. Figure 22 thus shows dispenser housing 194 comprising main housing section 195, dispenser outlet section 196 and dispenser inlet section 198. Dispenser drive motor 200 is shown mounted on dispenser housing 194. Figure 22 further partially illustrates chemical mixing module 256 from which mixed chemical is dispensed to an awaiting reception area such as a partially completed bag.

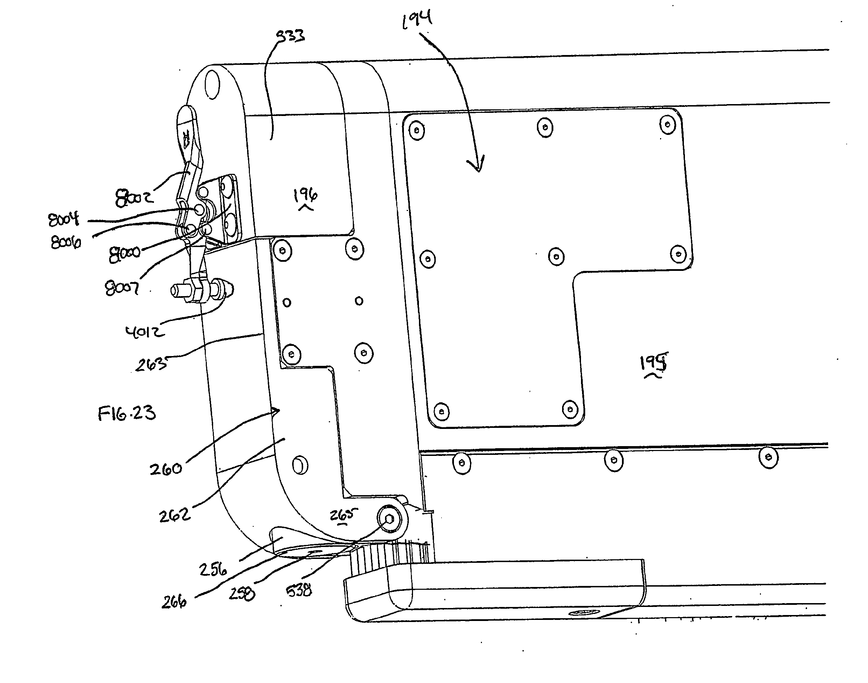

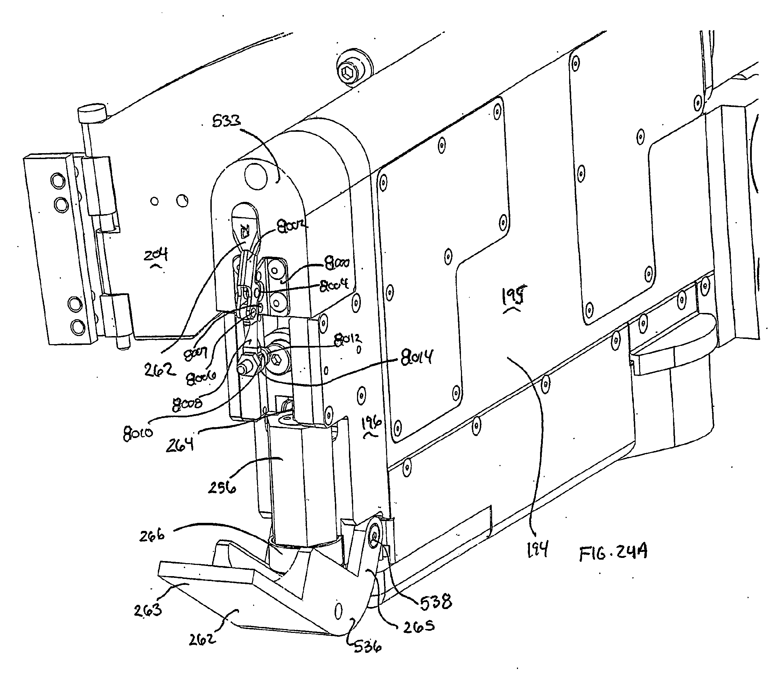

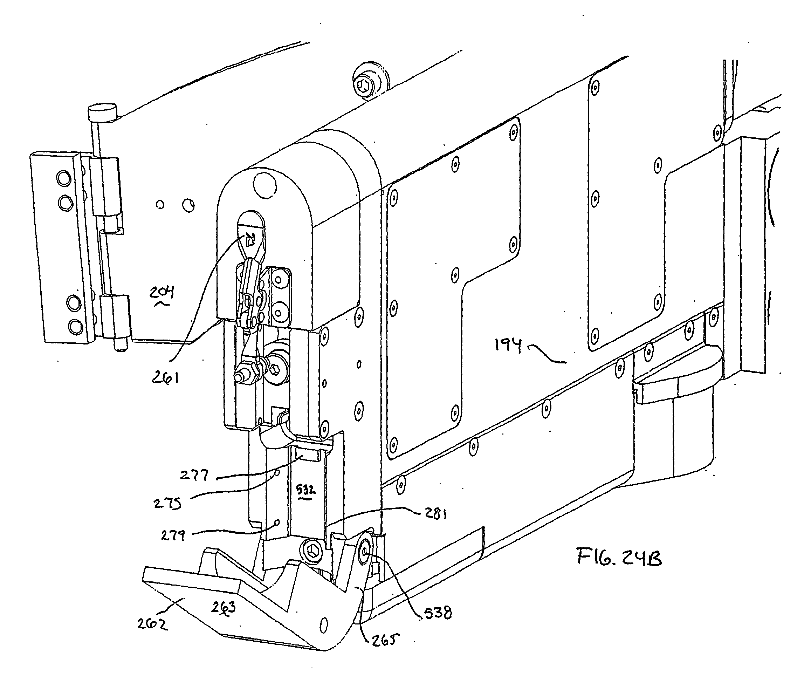

Figure 23 provides an enlarged view of dispenser outlet section 196 and illustrates the outlet port 258 of mixing module 256. Figure 23 further illustrates mixing module retention means 260 which in a preferred embodiment comprises adjustable door 262 comprising a first, outer, upper mixing module enclosure component 263 and a second pivotable base 265 engagement component with the pivot base shown engaged with hinge 538 (e.g., a pair of hinge screws with one shown in Fig. 23) supported by main housing 194. The first upper component 263 is designed for contact with an upper forward section of the housing dispenser outlet section 196 when in a closed mixing module retention and positioning state. Figure 23 illustrates door or closure device 262 in a closed state while Figures 24A and 24B show door 262 in an open state. Door 262 is closed in position relative to a received mixing module 256 sandwiched between the door and the main housing, while providing a biasing function to facilitate a secure compression seal arrangement between the mixing module's chemical and solvent inlet seals and the corresponding chemical feed outlets of the main housing. Figure 24A illustrates closure device 262 in an open, mixing module access mode with mixing module 256 retained in an uncompressed position relative to main housing 194, and with the free end of valving rod 264 in an upper position and the mixing module outlet end cap 266 in a lower position which can be seen partially jutting out in the Figure 23 door closed state. Figure 24B shows a similar view to that of Figure 24A, but with the mixing module removed.

The mixing module mounting means of the present invention is designed to be entirely functional in a tool free manner which is unlike the prior art systems requiring tools to access the mixing cartridges for servicing or replacement and require that same tooling to fix back in position a mixing cartridge. Also, the area required for tool insertion in the prior art systems is also prone to foam coverage, making accessing and removal even more difficult. The tool free design of the present invention features toggle clamp 262 having its pivot base 8000 secured to dispenser housing 194 preferably at the forward face of upper housing cap 533 and supports in pivotable fashion, at first pivot pin 8004, "over center" toggle level handle 8002 which has a second pivot pin 8006 receiving, in pivotable fashion, compression lever 8008 having at its free end abutment member 8010 and which is supported on base 8000 with a third pivot pin 8007 to provide for over center latching which compression lever is preferably a threaded pin with a compressible (e.g., electrometric) tip 8012 at its interior end and its opposite and fixed by nut 8014 (which renders compression pin 8010 adjustable in the level of compression imposed while in the over center latch mode).

Figure 23 illustrates the mixing module closure door pivoted up into its closure state and with toggle clamp 262 in its initial contact immediately preceding being put in the toggle or over center latch state upon pivoting lever 4002 into its final over center state (pointing down and not shown in the drawings) which can be achieved with a simple one finger action (same true for release). Preferably tip 8012 is a hard rubber tip and the compression level is factory set so that the hinged door firmly clamps the mixing module when the toggle clamp is closed. Field adjustments can also be made. Various other mixing module mounting closure means are also featured under the present invention such as a rotating disk or lever with a cam riding surface ramp with temporary holding depression or a sliding wedge in bracket supported by housing 194. The toggle clamp provides, however, a system taking advantage of the mechanical advantage of the over center latch and housing arrangement. In the over center closed state with pin tip 8012 in a compression state, tip 8012 makes contact with the upper end of the pivoted door. The electrometric seals about the solvent ports and chemical ports sealing off the interchange between the dispenser housing 194 and mixing module are thus compressed into the desired sealing compression state. Thus, there is provided an easy manner for properly and accurately mounting the mixing module in dispenser 192 of the present invention.

Mixing module 256 of the present invention shares similarities with the mixing module described in co-pending U.S. Patent Application No. 10/623,716, filed on July 22, 2003 and entitled Dispenser Mixing Module and Method of Assembling and Using Same, which application is incorporated herein by reference in its entirety. Through the use of mixing chamber shift prevention means there is prevented movement of a mixing chamber within its housing due to rod stick and compression and return of the compression means with the mixing chamber and thus there is avoided a variety of problems associated with the movement of the mixing chamber in the prior art. The present invention also preferably features mixing chamber shift prevention means used together with an additional solvent distribution system that together provide a tip management system with both mixing chamber position maintenance and efficient solvent application to those areas of the mixing module otherwise having the potential for foam build up such as the dispenser outlet tip.

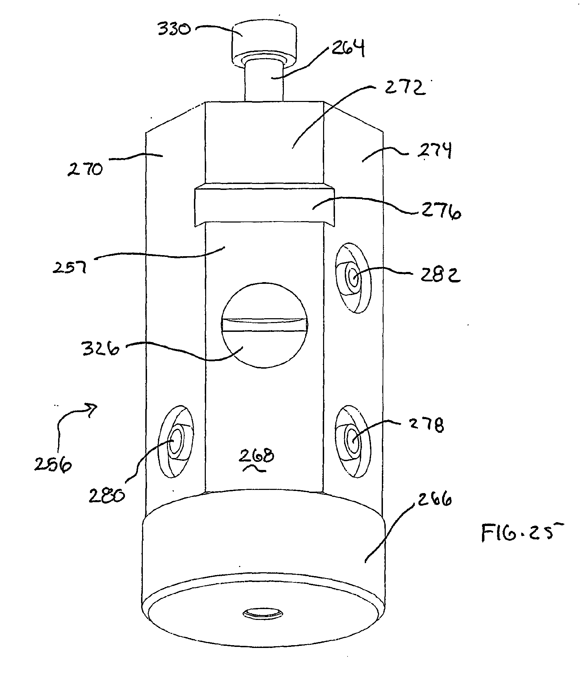

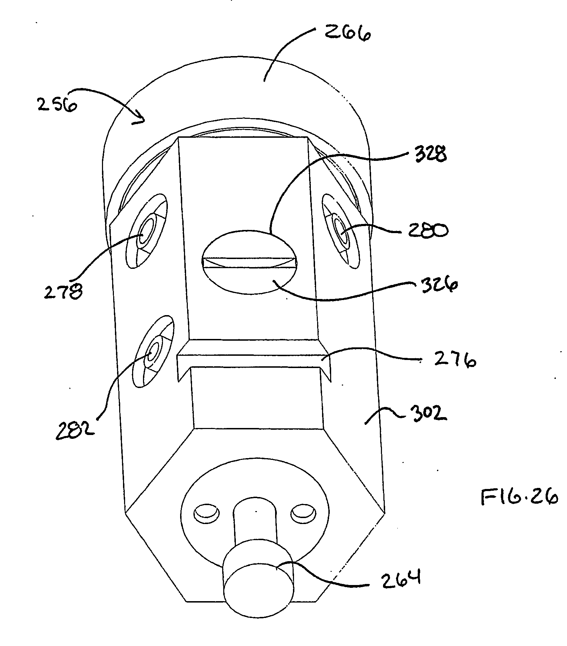

With reference to figures 25 to 28 there is provided a discussion of a preferred embodiment of mixing module 256 of the present invention. Figure 25 illustrates the contact side 268 of mixing module housing 257 encompassing mixing chamber 312 with shift prevention means 313 and also, preferably provided with solvent flow distribution means having solvent entrance port 282. Housing 257 features, first, second and third side walls 270, 272 and 274 which together provide housing contact side 268 representing half of the walls of the preferred hexagonal cross-sectioned mixing module. Wall 272 includes main housing positioner 276, with a preferred embodiment being a positioner recess configured to receive a corresponding positioner projection 277 provided in main housing component 532 (Fig. 24B). Positioner 276, when engaged by projection 277, acts to position first and second mixing module chemical inlet ports 278, 280 in proper alignment with chemical outlet feed ports 279, 281 of housing module support 532 (Fig. 24B). Similarly, the positioning means for the mixing module further aligns the mixing module solvent inlet port 282 in proper position relative to solvent outlet port 275 (Fig. 24B) of module support housing 532. While a two component system is a preferred embodiment of the present invention, the present invention is also suitable for use with single or more than two chemical component systems, particularly where there is a potential stick and move problem in a mixing or dispensing chamber of a dispenser (mixing being used in a broad sense to include multi-source chemical mixing or the spraying into a rod passageway of a chemical through a single, sole inlet source and an internal intermingling of the sole chemical material's constitution).

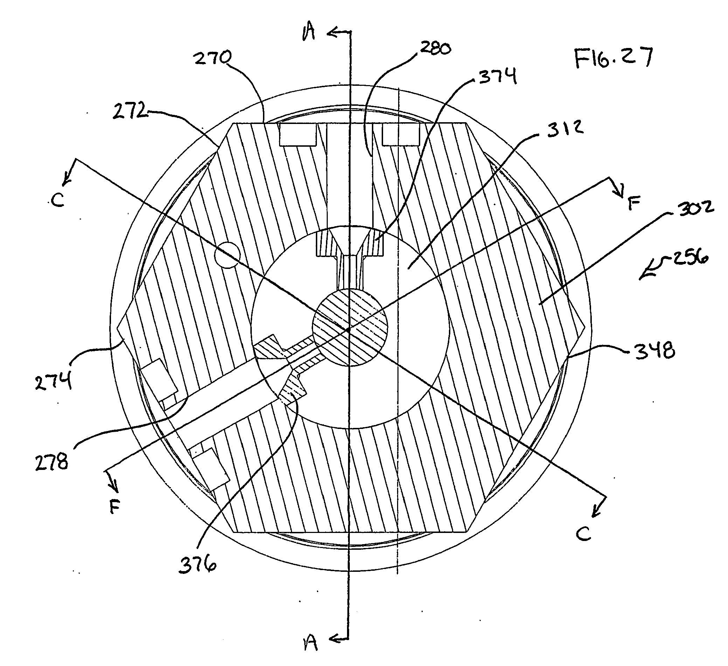

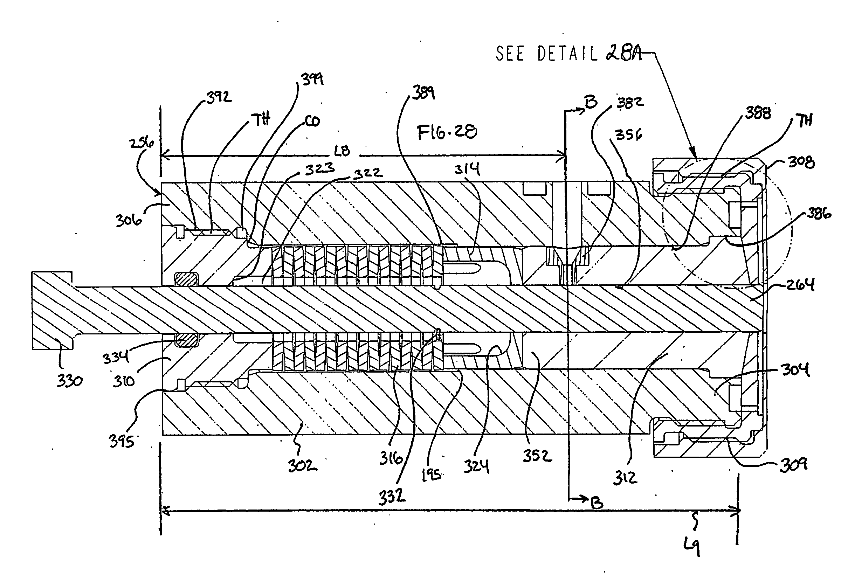

Figures 27 and 28 illustrate mixing module 256 in an assembled state comprising module housing 302 having a "front"(open) end 304 and a "rear" (open) end 306 with associated front end solvent dispensing front cap assembly 308 or cap covering and back cap 310. Front cap assembly 308 and back (e.g., compression) cap 310 retain in operating position mixing chamber 312, slotted cup-shaped spacer 314 and Belleville washer stack 316 (the preferred form of compression means). Each of the face cap assembly 308, mixing chamber 312, spacer 314, washer stack 316 and back cap 310 have an axial passageway for receiving valving or purge rod ("rod" hereafter) 264. Mixing module 256 also preferably has internal solvent chamber 322 with spacer 314 and back cap 310 preferably formed with solvent reception cavities (323,324). The Belleville washers in stack 316 are also shown as having an annular clearance space which facilitates solvent flow along the received portion of rod 318 and provides room for limit ring 332 for limiting axial movement of rod 264.

Solvent cap 326 is attached (e.g., threaded) to housing 302 to close off solvent access opening 328 formed in one of the sides (e.g., side wall 272) of the multi-sided housing 302. Solvent cap 326 is preferably positioned to axially overlap part of the internally positioned Belleville washer stack 316 and the spacer 314 positioned between the compression means 316 and Teflon block 312. The Belleville washer stack 316 is also preferably arranged in opposing pairs (e.g., 8 washer pairs with each pair set having oppositely facing washers) which provides a preferred level of 890N (200 lbf.) relative to spacer contact with the mixing chamber. Solvent cap 326 provides an access port for emptying and filling the solvent chamber 322 which provides for a pooling of solvent (continuous replenishment flow pooling under a preferred embodiment of the present invention) at a location which retains fluid contact with an exposed surface of the valving rod as it reciprocates in the mixing chamber. There is further provided solvent feed port 282 which provides an inlet port for solvent from a separate source (preferably a pumped continuous or periodic flow solvent system as described below) for feeding the flow through dispenser tip cleaning solvent system for the front cap assembly 308 and replenishing solvent chamber 322 after its initial filling via access cap 326.

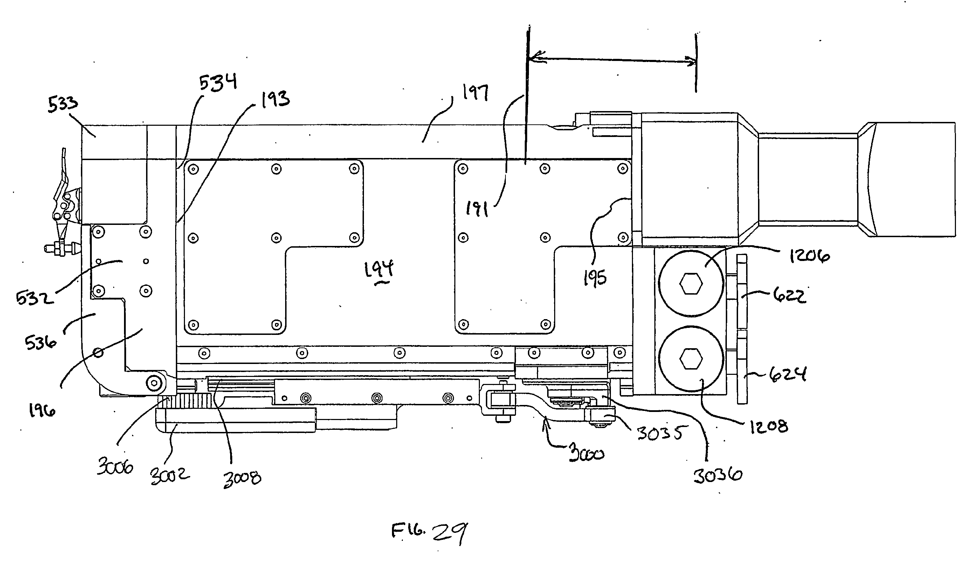

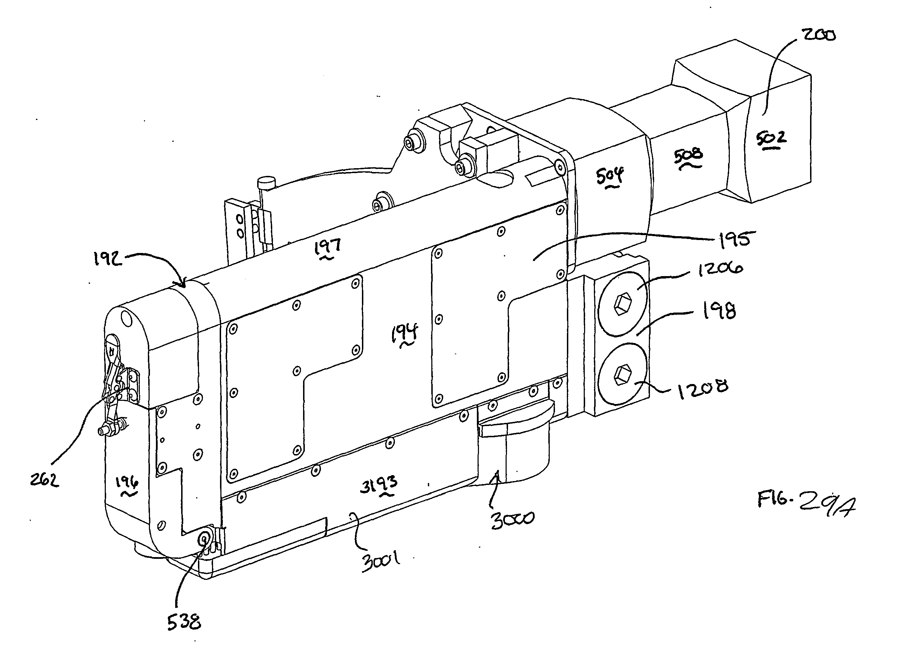

Valving rod 264 has a reciprocating means capture end 330 (o.g., an enlarged end as in a radially enlarged cylindrical end member) for attachment to a motorized rod reciprocator. Rod 264 axially extends completely through the housing so as to extend out past respective face and back caps 308 and 310. Rod 264 also comprises annular limit ring 332 (Fig. 29) to avoid a complete pull out of rod 264 from the mixing module. A rod contracting seal 334 is further preferably provided such as an inserted O-ring into an O-ring reception cavity formed in back cap 310. Housing 302 further includes chemical passage inlet holes 278, 280 (Fig. 27) formed at midway points across side walls 270 and 274 which are positioned to opposite sides of intermediate side wall 272 in the preferred hexagonal configured housing 302. Wall 348 is preferably diametrically opposed to wall 272. Walls 270 and 274 position chemical inlets 278, 280 in the preferred 120° chemical inlet spacing.

While the illustrated looking protrusion 358 can take on a variety of configurations (e.g., either peripherally continuous or interrupted with common or different length/height protrusion(s) about the periphery of the mixing chamber 312) as well as a variety of axial extension lengths and a variety of radial extension lengths (e.g., a radial distance) between surface 364 and the forward most outer, exposed surface 366' of main body 366, of 0.64 to 12.7 mm(.025 to 5 inch) with 0.89 to 1.27 mm (.035 to .05 inch) being suitable). The utilized axial length and radial protrusion for the locking projection 358 is designed to provide a sufficient locking in position function (despite rod stick due to the static friction/adhesion relationship between the rod and mixing chamber) while avoiding an inefficient use of material.

Port holes 374, 376 are shown in Figure 29B and 29C and are formed through the radial thickness of main body portion 366 and are shown circumferentially spaced apart and lying on a common cross-section plane (rather than being axially offset which is a less preferred arrangement). The central axis of each port hole 374, 376 is designed to be common with a respective central axis of inlet passage holes 278, 280, in housing 257 and the respective central axis for chemical output ports 279 and 281 feeding the mixing module. The central axis for port holes 374, 376 also are preferably arranged to intersect the central axis of passageway 356 at a preferred angle of 120°.

Also, port holes 374, 376 preferably have a step configuration with an outer large reception cavity 378 and a smaller interior cavity 380. The step configuration is dimensioned to accommodate ports 382, 384 (Fig. 28) which are preferably stainless steel ports designed to produce streams of chemicals that jet out from the ports to impinge at the central axis, based on, for example, a 120° angle orientation to avoid chemical cross-over problems in the mixing chamber cavity.

Prior to describing the additional upstream components associated with feeding chemical to the dispenser outlet, a discussion of solvent supply system 400 and its in line relationship with the above described mixing module 256 is provided. As described in the background of the present application, the outlet dispenser region or tip area of the mixing module 256 is an area highly prone to hardened foam build up. If not addressed, it can cause problems such as misdirected output shots or spraying into areas external to the intended target. This in turn can further increase build up problems as the misdirected output hardens on other areas of the solvent dispenser system.

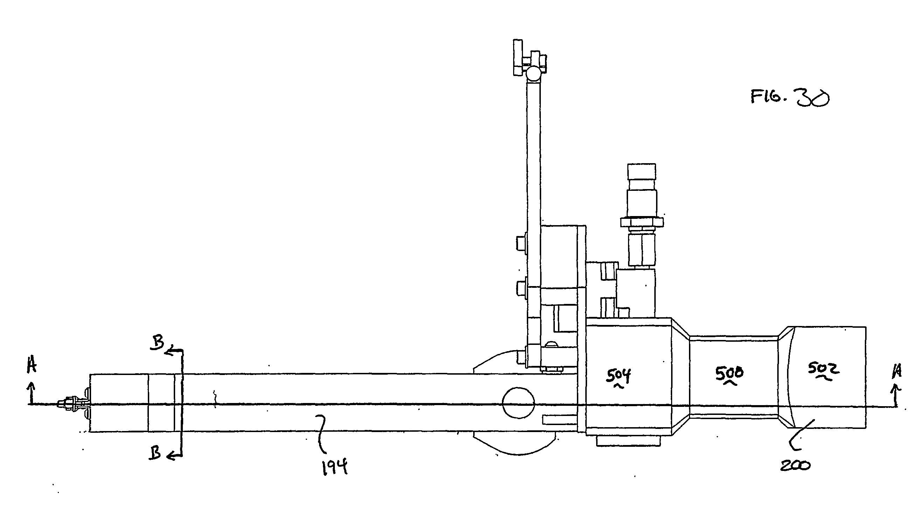

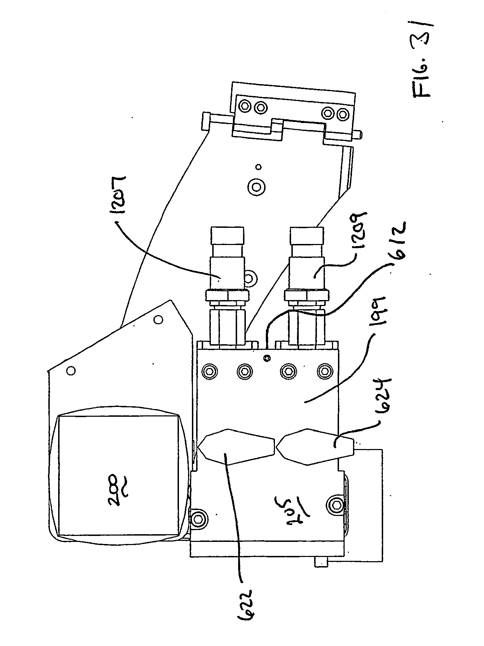

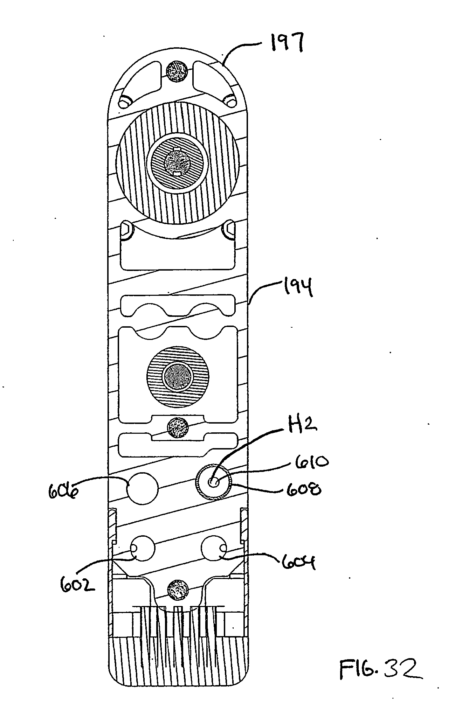

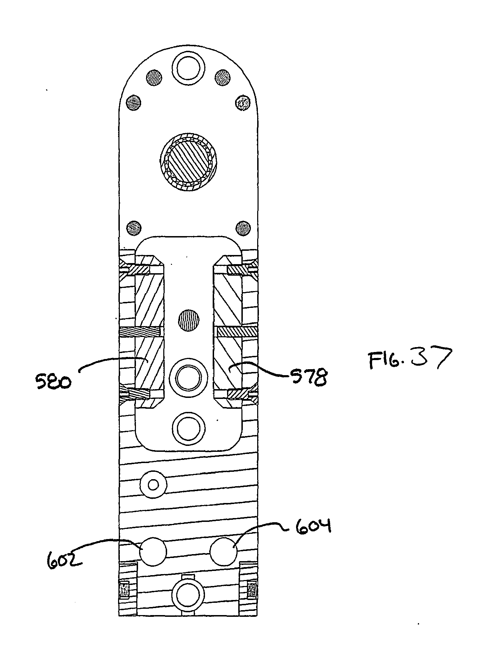

As a means for reciprocating rod 264 and thus controlling the on-off flow of mixed chemicals from the mixing module, reference is now made to the mixing module drive mechanism 500 of a preferred embodiment of the present invention. In this regard, reference is made to, for example, Figures 29 to 38 for an illustration of a preferred embodiment of the means for reciprocating purge/valve rod 264 extending in mixing module 256.

Figure 29A provides a perspective view of dispenser system 192 (similar to Figure 22 but at a different perspective angle). Dispenser system 192 is shown in these figures to include dispenser housing 194 with main housing 195 section, dispenser end section 196 and chemical inlet section 198, with at least the main housing and dispenser end sections each having an upper convex or curved upper surface 197 corresponding in configuration with each other so as to provide a smooth, non-interrupted or essentially seamless transitions between the two. The preferably parallel side walls of the main housing 194 and dispenser end section 196 of dispenser apparatus 192 also fall along a common smooth plane and are flush such that corresponding side walls of each provide an uninterrupted or essentially seamless transition from one to the next (the access plates shown being mounted so as to be flush with the surrounding dispenser housing side walls with, for example, countersunk screws). Dispenser apparatus thus provides smooth, continuous contact surfaces on the top and sides of the portion of dispenser apparatus 192 forward of line 191 representing generally the back edge location of the film being fed past dispenser apparatus 192.

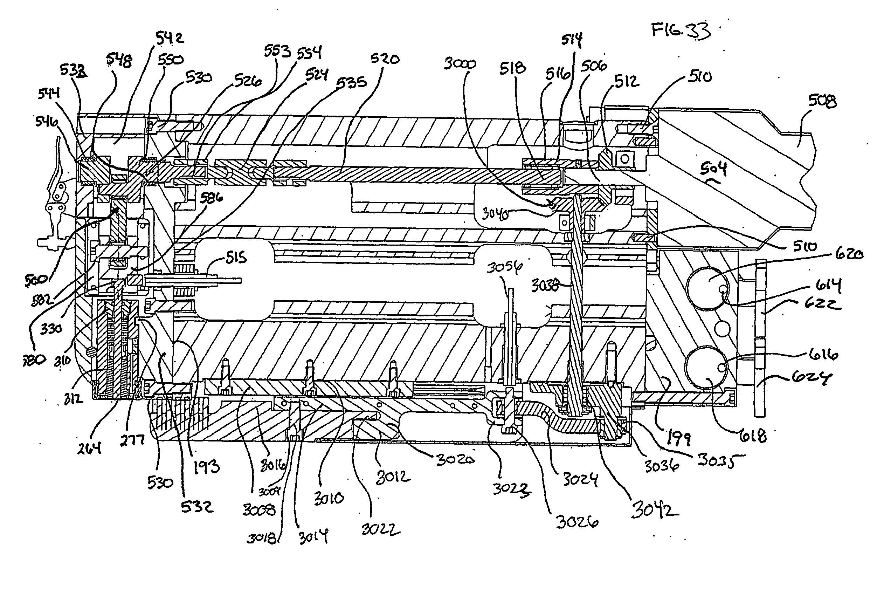

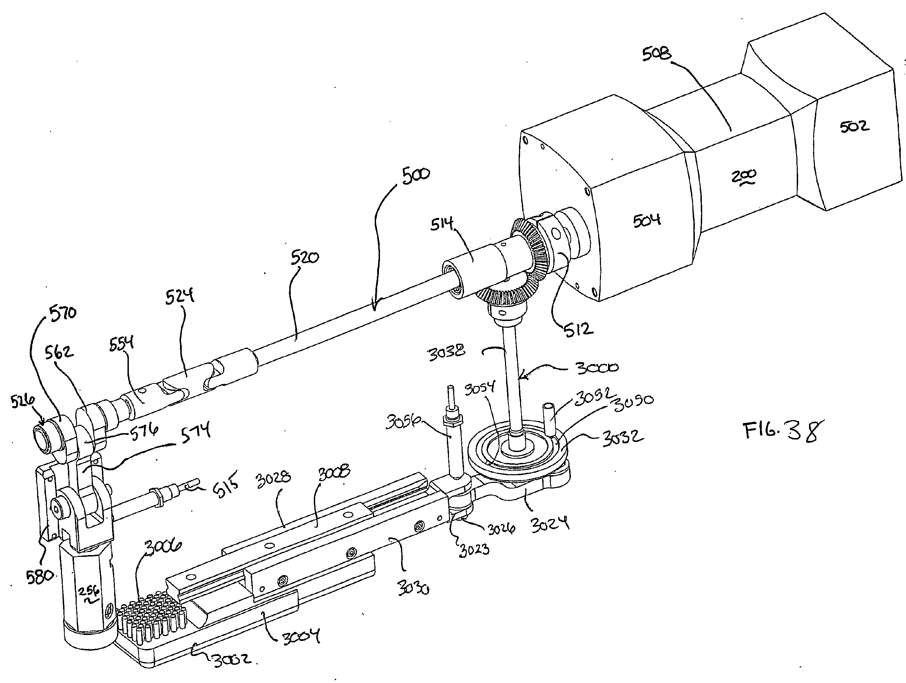

With reference particularly to Figure 33 and 38 there is illustrated dispenser drive mechanism 500 which is used to reciprocate rod 264 within mixing module 256 and is housed in dispenser system 192 and, at least, for the most part, is confined within the smoothly contoured housing of dispenser system 192. Dispenser drive mechanism 500 includes dispenser drive motor system 200 ("motor" for short which entails either a motor by itself or more preferably a motor system having a motor, an encoder means and/or gear reduction means). Motor 200 (the system "driver") preferably comprises a brushless DC motor 508 with an integral controller 502 mounted to the back section of the motor and encased within the motor housing, and gear reduction assembly 504. Motor controller 502 provides encoder feedback (e.g., a Hall effect or optically based encoder system) to the controller such as one provided as a component of main system control board which is used to determine speed and position of the various drive components in the drive mechanism 500. Figure 105 illustrate the control system for operating, monitoring and interfacing the data concerning the rod drive mechanism. The motor controller input from the main system control board preferably includes a 0 to 5 volt speed signal from the main system controller, a brake signal, a direction signal and an enable signal. Motor 200 further preferably includes a gear reduction front section 504 out from which motor output drive shaft 506 extends (Figure 33). The motor drive source is located in the central section 508.

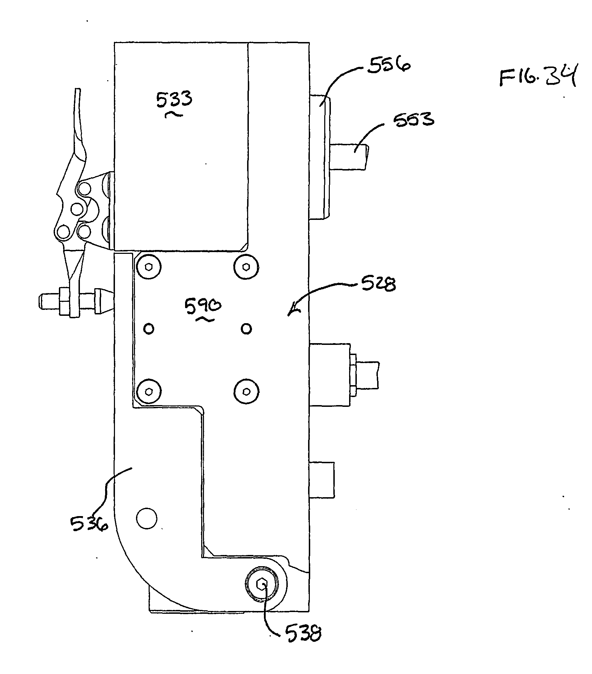

As seen from Figure 33, front section 504 of motor 200 is mounted with fasteners 510 (e.g., pins and bolts) to the rear end dispenser housing 194. As shown by Figures 33 and 38, output shaft 506 has fixed thereon bevel gear 512 and one-way clutch 514. One way clutch 514 is fixedly attached to drive shaft 506 and has clutch reception section 516 receiving first end 518 of main drive shaft 520. Clutch reception section 516 includes means for allowing drive transmission during one direction of rotation (e.g., clockwise) such that rod 264 is reciprocated in mixing module 256, while one way clutch 514 freewheels when drive shaft 506 rotates in an opposite direction (e.g., counter clockwise) such that bevel gear 512 can drive the below described tip brush cleaning system rather then the reciprocating rod. This provides an efficient means of assuring the timing of any dispenser tip brushing and dispenser output avoiding an extension of this cleaning brush described below at a time when chemical is being output. In a preferred embodiment the second end of main drive shaft 520 is connected to flexible coupling 524, although other arrangements, as in a direct force application without flexible coupling 524, is also featured under the present invention. Flexible coupling 524 is in driving engagement with dispenser crank assembly 526 (Figure 38). Dispenser crank assembly 526 is contained in dispenser component housing (see Figure 29). Dispenser component housing 528 is a self contained unit that is connected to the front end of main housing portion 195 as previously discussed and forms forward dispenser end section 196. The connection is achieved with suitable fasteners such as fasteners 530. Dispenser component housing 528 comprises main crank (and mixing module) support housing component 532 and upper dispenser housing cap 533, with support housing 532 having a generally planar interior end 535 for flush engagement with the forward end 193 of support housing 194. Dispenser component housing 532 includes pivot recesses 534 to which is pivotably attached closure door 536 (see Figure 22 and 34 for a closed closure door state and Figure 24 for an open closure door state) by way of pivot screws 538 (one shown) or the like.

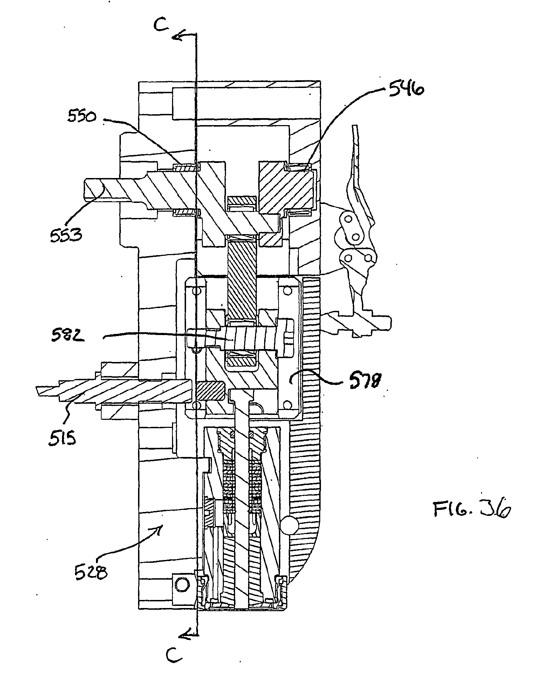

Dispenser housing cap 533, illustrated in Figs. 33 and 34 is secured to the top front of support structure 194 and is shown as having a common axial outline with support structure 194 (such that all potentially film contact surfaces of dispenser 192 are made with a non-interrupted smooth surface). Housing cap 533 has a large crank clearance recess 542 and a bearing recess 544 sized for receipt of a first of two bearings such as the illustrated first (forwardmost) needle bearing 546 shown in Figures 33 and 36. Housing cap 533 is secured in position on the forward top face of main crank support housing component 532 by suitable fasteners (not shown). Bearing recess 544 is axially aligned with inner bearing recess 548 provided on the forward face of housing component 532. Inner bearing device 550 (Fig. 33) represents the second of the two bearings within cap 533 and is received in inner bearing recess 548. Crank assembly 526 has opposite ends rotatably received within respective inner and outer bearings 545, 550 and is preferably formed of two interconnected components with a first crank assembly component 552 with key slot shaft extension 553 designed to extend past the innermost surface of main housing component 532 and into driving connection with the forward flexible coupling connector 554.

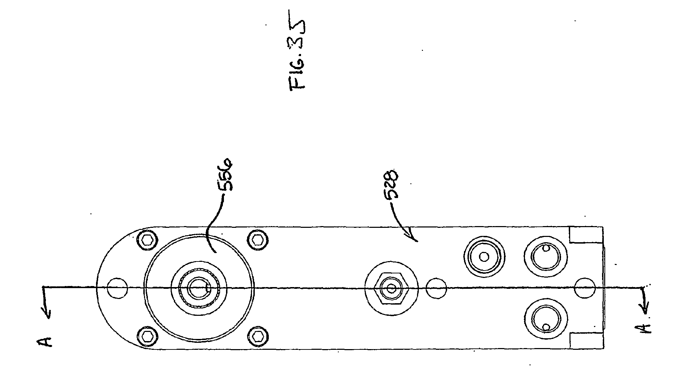

For added stability and positioning assurance, rear end 534 of housing component 532 further includes annular projection 556 (see Figure 35), that is dimensioned for friction fit connection with circular recess 558 (Fig. 38) formed in support housing structure 194. First crank assembly component 552 further includes bearing extension 560 sized for bearing engagement with inner bearing 550 and is positioned between slotted shaft extension 553 and inner crank extension 562. Inner crank extension is elliptical is shape and has bearing extension 560 having a central axis aligned with a first end (foci) of the ellipsoidal inner crank extension and crank pin 564 extending forward (to an opposite side as extension 560) from the opposite end (foci) of inner crank extension 562. Crank pin 564 has a reduced diameter free end which is dimensioned for reception in pin reception hole 566 formed in outer crank extension 568 of second crank component 570 having a peripheral elliptical or elongated shape conforming to that of the first crank component. At the opposite end of the elliptical extension 568, and aligned with the central axis of first or inner bearing extension 560, is provided outer or second bearing extension 572. Second bearing extension 572 is dimensioned for reception in outer bearing 546.

Slide mechanism 586 has a base engagement section with a slot matching the curvature of the enlarged rod head 330 of rod 264 and capture recess extends rearward past the rear end of slot 573 so as to provide a capture reception region relative to the enlarged head of rod 330 shown in Figure 25, for example. Accordingly the connecting rod 574 converts the rotational motion of crank arm or connecting rod 574 into linear motion in the slider mechanism 586 which in turn, based on its releasable capture connection with the enlarged end 330 of rod 264, reciprocates rod 264 within the mixing chamber to purge and/or perform a valve function relative to the chemical mixing chamber feed ports.

The mixing module drive means of the present invention, which, derives its power from motor 200 and achieves rod reciprocation, is highly effective in the environment of a mixing module dispenser in that it coordinates its cycle of high force push and pull levels with the ends of travel of slider mechanism 586 which corresponds with the reciprocation end points of the rod 264 between a forward purge extension to a rearward (upward in the illustrated Figure 38) valve open retracted position. The calculated pulling or pushing force is over 4450 N (1000 lbf) at these two positions. This higher pushing/pulling force will not necessarily be applied to the mixing module as it is only applied when needed (e.g., the drive mechanism will only apply enough force to move whatever is attached to it). If the item does not want to move (e.g., stuck), the drive mechanism can generate its maximum force level attributable to the system at that point to break any resistance to movement. This feature is well suited for the mixing module's characteristics as the high force is available at the start of the opening stroke, exactly where it is needed, because this is the location where prior art mixing modules have a tendency to bind up if they are left idle for even a few minutes. For example, if urethane is building up on the inside diameter of the mixing chamber, it will bond the valving rod to the chamber. The drive mechanism of the present invention can effectuate rod reciprocation even if there is a lot of urethane buildup, unlike the prior art wherein an increase in "stick" from urethane build up which often occurs at the end of idle periods and/or when the solvent runs out or gets contaminated. In the prior art systems the binding forces can be high enough to stall, for example, the drive mechanism of the prior art mechanisms leading to a shut down signal and/or breakage of a rod or some other component.

The placement of the motor 200 external or out away from the film edging and bag forming area allows for a much more robust motor than utilized in the prior art (e.g., a weight difference of, for example, 3.2 kg (7 pounds) (for drive motor, gearbox and controller) relative to for example 0.34 kg (12 ounces) for a typical prior art systems motor, gearbox and controller positioned inside or between the film edges). A conventional motor drive system sized for insertion between the bag film edges (e.g., a ball screw motor drive system) has about 90.7kg (200 pounds) when operating at optimum performance levels which was not often the case. This difference provides in the present invention, for example, a torque of at least 5 to 10 times greater than > the noted prior art motor and the capability to run at peak torque for the full life of the motor. The preferred motor type for the mixing module driver of the present invention is a brushless DC motor (for example, a Bodine Brushless Torque motor with RAM of 100 to 2000 RPM). The built in encoder of the present invention's brushless motor provides for accurate dispenser use and avoidance of cold shots in that a preferred embodiment of the invention features a built in encoder that generates a position feedback signal to the control means (i.e., a closed loop system unlike the prior art open loop system). Thus unlike the prior art systems that run open loop and have no way of knowing the positioning of the mixing module rod relative to the axial length of the mixing module passageway and direction of travel therein, the present invention's closed loop arrangement allows the controller to monitor at all times the status of the drive system and hence whether the mixing module is in an opening or closing cycle. This information is valuable in monitoring the drive performance and the early flagging of potential problems (e.g., build up of hardened foam in the mixing chamber) before the potential problems build up to a level causing major problems. Figures 33 and 36 further illustrate drive mechanism home position sensor 515 that identifies the starting position of the drive mechanism so as to provide added feedback for performance monitoring of the mechanism including operation of the encoder itself. If there is sensed a position problem by the home sensor (e.g., a broken crank) a stop signal is generated to prevent additional system damage (similar functions can be provided by the moving jaw home sensor 4036 as well as the cleaning brush reciprocation system home sensor 3056 discussed below). Figures 105 and 105A illustrate the control system with the mixing module home sensor shown in conjunction with the chemical dispensing and tip cleaning control and monitoring sub-system.

As described in the background section, the outlet tip region of a dispensing mixing module is a particularly problematic area with regard to foam buildup and disruption of the desired foam output characteristics. Once the output nozzle is sufficiently blocked, the foam stream is deflected from its normal path and can easily be deflected 90° if left unattended having negative consequences in the build up of essentially non-removable foam in other areas of the dispensing system. It is believed that left unattended such a build up can happen in as little as 20 shots. The aforementioned features of the present invention's tip management means including providing a solvent supply system to the front end of the mixing module with a high pressure solvent pump, flow through or flushing/continuous replenishment solvent chamber, heated solvent and directed tip region flow of solvent through the face of the mixing module and around the valving rod is highly effective in precluding build up. However, even with the advantages or arrangement described above, foam can accumulate at the tip of the dispenser in a softened state during solvent flow supply with the potential to harden during periods where the system is shut down and during times in which solvent flow may not be provided. The present inventions tip management means thus preferably includes an auxiliary cleaning component which is directed at physical removal of any chemical build up in the tip region or outlet port region of the mixing module such as in a wiping or brushing fashion. In a preferred embodiment there is provided a brush or a alternate physical chemical build up removal means preferably connected with means for reciprocating or moving that cleaning member (e.g., brush) between cleaning contact and non-contact states relative to the nozzle tip 29, 29A and 38.

Figures 29, 29A and 38 illustrate various features of a preferred embodiment of physical nozzle tip cleaning means 3000.

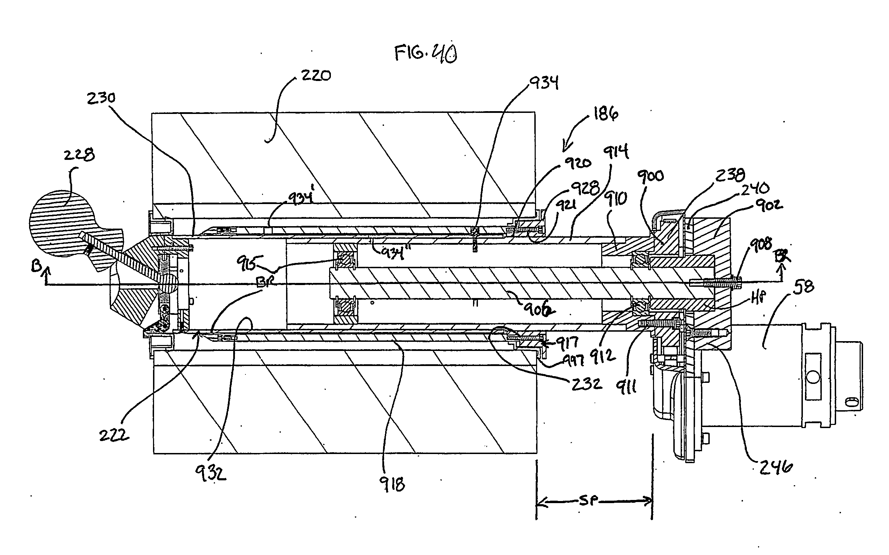

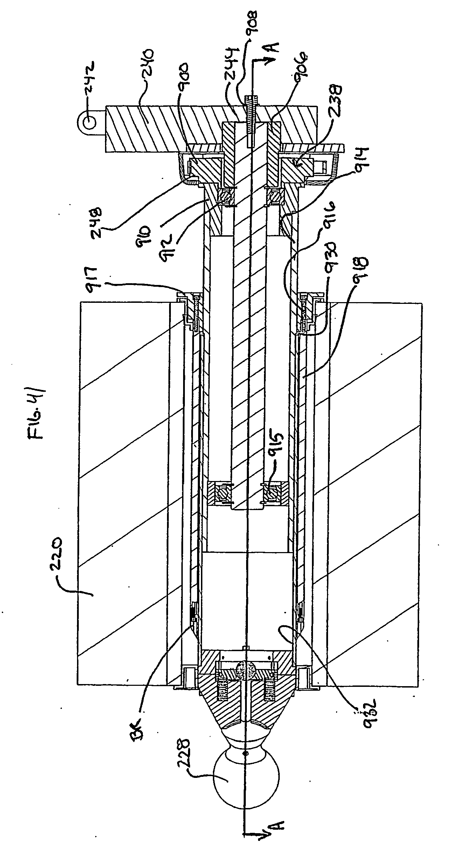

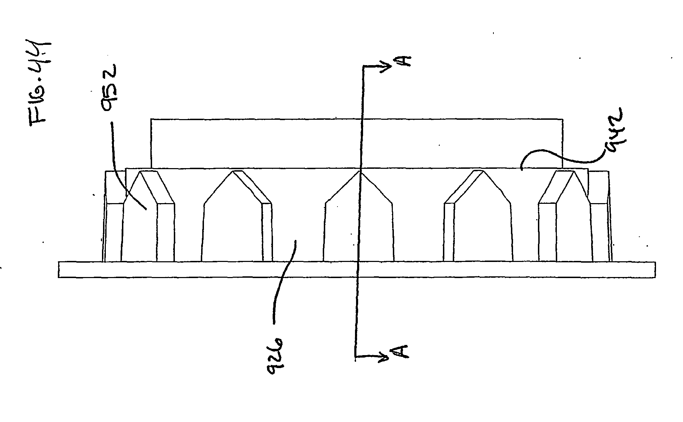

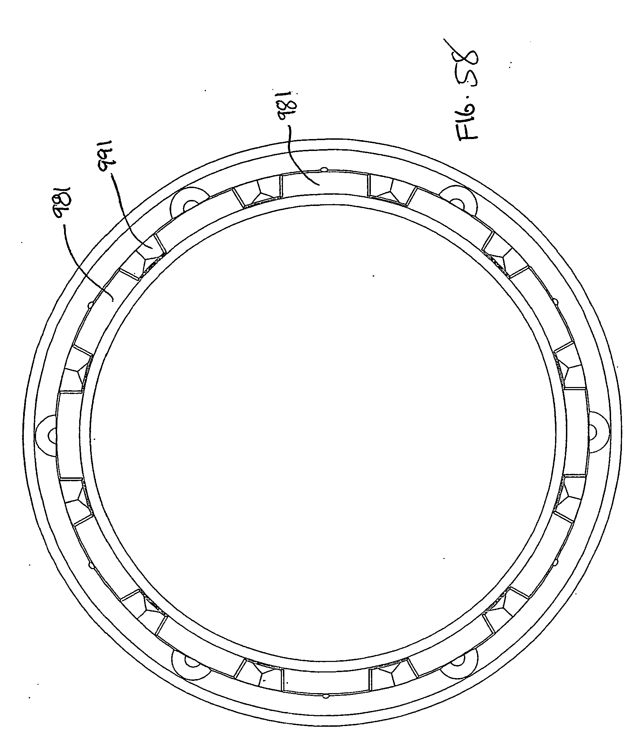

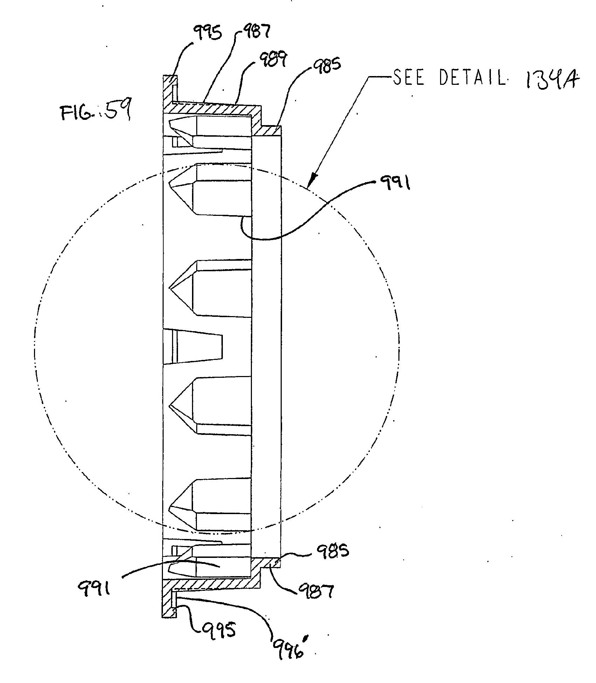

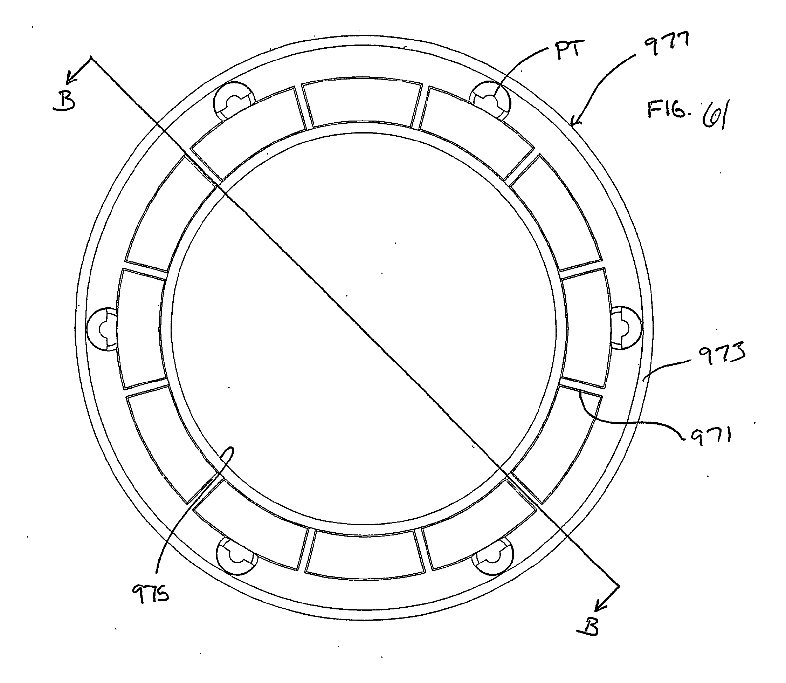

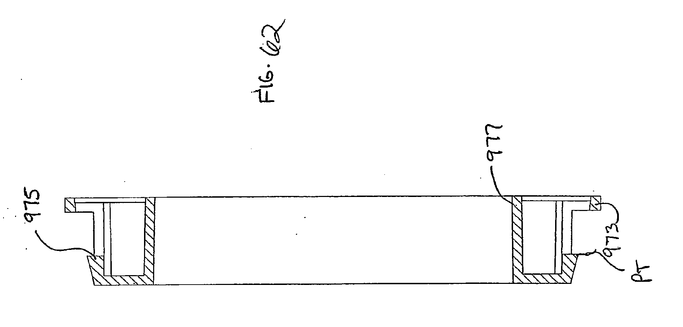

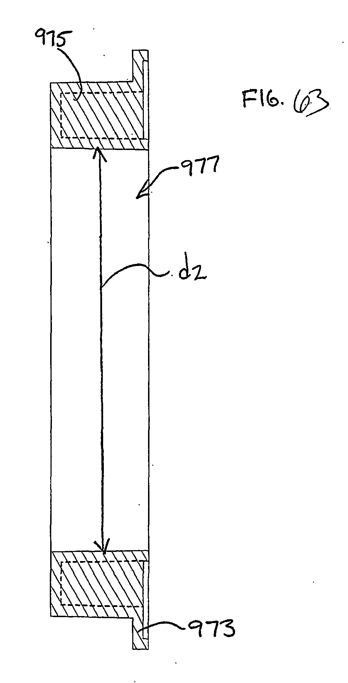

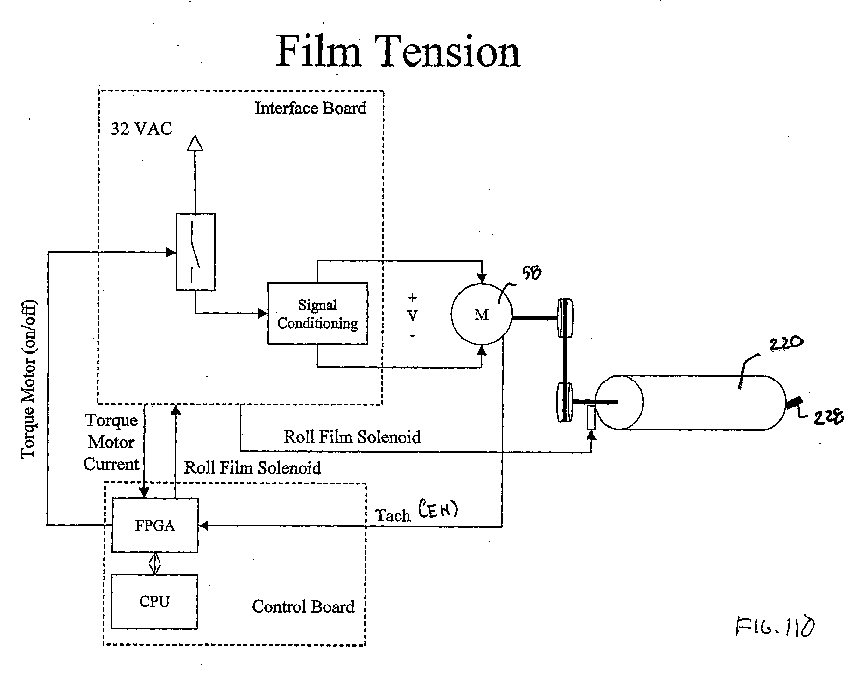

With reference back to the earlier described Figures 2 and 16 - 21 and the below described Figures 40 to 63, there is described a preferred embodiment of a film unwind system of the present invention. Figures 40 and 41 provide a cross sectional view of the film support means 186 with spindle 222 supporting film roll 220 locked in position thereon and with spindle supported engagement member 232 providing driving communication from the web tension drive transmission 238 directly to film roll via a film roll core insert. Under the present invention web tension is monitored and controlled with the controller sub-system illustrated in Figure 110 (preferably in conjunction with the controller sub-system shown in Figure 191 used for film advance and web tracking). Web tension motor 58 is mounted on spindle load adjustment means 218 (Fig. 16) that includes hinge section 242 or a support-to-spindle connector for achieving the previously described spindle load rotation between a load and film unwind state. Figures 40 and 41 illustrate in greater detail the rotation drive arrangement for the spindle which includes web tension drive transmission 238 with main gear 900 encircling stationary support shaft extension 906 extending axially in and is received by hub pocket HP (Fig. 40) formed in load support structure 240 and is fixed there with fastener 908. Attached to main gear (e.g., see fastener 911 in Figure 40) is stub shaft 910 which rotates together with main gear 900. Between fixed axial shaft 906 and the rotating stub shaft there is located first roller bearing 912. Stub shaft 910 includes a free end minor step down over which is slid and fixed in position the illustrated radially interior cylindrical extension sleeve 914. At the free end of fixed axial shaft 906 there is located a second roller bearing 915 which is in bearing contact with the rotating interior cylindrical extension sleeve 914.

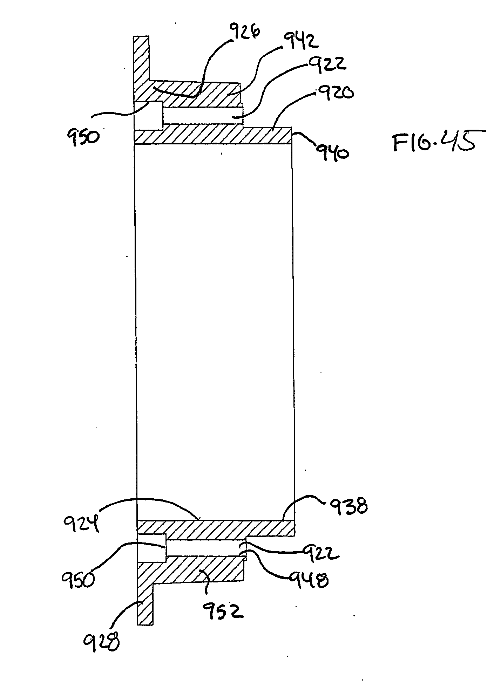

Figures 40 and 41 further illustrate spindle spline drive 917 which includes engagement member 232 and outer sleeve 918. Engagement member 232 is shown independently in Figures 117 to 122 while Figures 40 and 41 show spindle spline drive 917 received by fixed interior cylinder 914 in a rotation transmission manner when the sliding or telescoping sleeve 918 is locked in position via locking fastener 934, but with the capability to axial slide along sleeve 914 when locking fastener 934 is released. The interior annular surface 924 of outer cylindrical sleeve 918 is mounted over and onto the outer flange extension 920 of engagement member 232 of spindle spline drive 917, and fixed in position through use of fasteners 921 extending through fastener holes 922 shown formed in a thickened base region 926 of engagement member 232 as best shown in Figure 45. Fasteners 921 are threaded through fastener holes 922 into threaded reception holes formed in the abutting edge of outer cylindrical shaft 918. Radial extension flange 928 extends radially off base region 926 out for a distance sufficient for film roll contact retention as shown in Figures 40 and 41. Thus, when fastener 934 locks cylindrical sleeves 914 and 918 together, the connection of engagement member 232 to outer sleeve 918 provides for transmission of the rotation gear 900 and stub shaft rotation to roll 20. Intermediate cylindrical shaft 932 has an inner surface which is concentrically spaced relative to the outer surface of interior cylindrical sleeve 914 and has an open forward end into which is inserted the base of roll lock assembly 228. The free end of the outer cylindrical sleeve 918 has a radially inward extending annular bearing ring BR in contact with sleeve 932.

Figures 40 and 41 illustrate a relatively short (e.g., 30.5 cm (12 inch) roll) extension state in the roll support wherein there is spacing "SP" between the interior end of stub shaft 910 and the engagement member of spline drive 917 (e.g. 15.2 to 25.4 cm (6 to 10 inches)). Upon detaching locking fastener 934 (once or a plurality of circumferentially spaced fasteners), the combination of engagement member 232 and outer sleeve 918 can be slid to reduce spacing SP while annular ring BR slides on sleeve 932. When SP is reduced down a sufficient amount, drive spline 917 is sufficiently placed away from the opposite core plug 977 location to handle a larger axial length roll, (e.g., a 48.3cm (19 inch roll)). For example, with spacing SP down to 0 to 15.2cm (0 to 6 inches), there is a provided a more elongated roll length support arrangement. In a preferred arrangement SP is reduced by 17.8 cm (7 inches) to switch from a 30.5cm (12 inch) roll to and 48.3cm (19 inch) roll. Upon such a reduction of SP empty fastener hole 934' becomes aligned with empty thread hole 934" and fastener 934 inserted to lock into the mode.

Thus, spindle 222 is comprised of a plurality of cylindrical sleeves that fit tightly into a telescoping assembly, either extending or contracting to provide for different film width usage on the same support spindle. The ability to adjust for different film width provides the overall system with much greater versatility then prior art systems, with the ability to drive the roll adding web tensioning capability having the below described advantage. While only two roll film widths (e.g., 30.5 cm (12 inch) and 48.3 cm (19 inch)) are illustrated in the preferred embodiment, variations are featured under the present invention including the number of adjustment options (e.g., three, four, five or more) or limiting the device to one size whereupon the telescoping arrangement can be removed, or various other roll width support adjustment means being provided as in a helical groove having a series of holes with a spring electronically controlled latch or with a geared or hydraulic telescope arrangement as means for adjusting spindle roll reception length as a few examples.

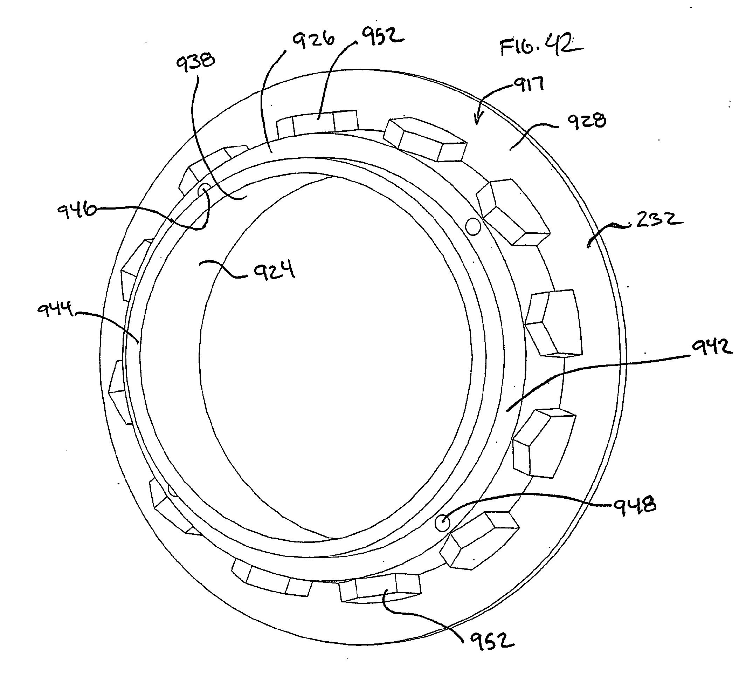

As noted in Figures 42 to 47, engagement member 232 of spline drive 917 (which is preferably a plastic or metal molded member as in a casting or plastic injection mold product) features a plurality of locking members 952 which are shown in the referenced figures as being a plurality of protrusions spaced (preferably equally) about the circumference of base region 926. In a preferred embodiment the protrusions or means for engaging are teeth shaped and feature a sloped lead in section 964 and a tooth base 962 presenting a straight line side contact surface extending parallel to the axis of rotation. Also in a preferred embodiment the lead in sections 964 are provided by a triangular extension with the apex positioned at a location spaced farthest from the base, with the apex shown being one that is circumferentially centered relative to the opposite straight side walls of the base presenting a "house profile" plan configuration. The base is preferably at least about 50% and more preferably about 60 -80% of the total axial length of the tooth to ensure good rotational engagement with the corresponding roll plug 977 described below, which in a preferred embodiment features similar shaped teeth pointed in the opposite direction such that the triangular, sloped or divergent apex portion are less than the total base axial length. In this way, there is a portion of base side wall to base side wall contact between the teeth of the roll core plug and the teeth of the spline drive engagement member. Also, there is preferably a friction fit contact between the adjacent base portion of the roll film drive plug received within the roll film core and the base of the spindle spline drive or engagement member 232 (a minimum of circumferential play, as in less than a 0.3cm (1/8 inch) play, between adjacent most different source teeth enhances web tension control is preferred). For example, in a preferred embodiment there are 12 teeth on each of the roll drive plug (997, Fig. 12) and the spindle drive spline engager each occupying about 15° of the supporting base surface for the radially protruding teeth and each spaced by about 15° so as to provide a no play circumferential engagement that is preferred for good web tension control relative to the offset but similarly spaced teeth of the below described roll insert. A variety of alternate roll film drive plug and spindle drive spline engagement means are also featured under the present invention such as a set of deflectable tabs that preferably have curved or cammed surfaces designed for receipt within reception cavities in one or the other of the interengaging members with the deflectable cam surfaced tabs being adjustable in the axial direction with sufficient separation force but arranged for non-adjustable rotational drive engagement. Alternate engagement means includes, for example, axially extending pins or fasteners in one that are received in corresponding recesses in the other for rotational drive engagement.

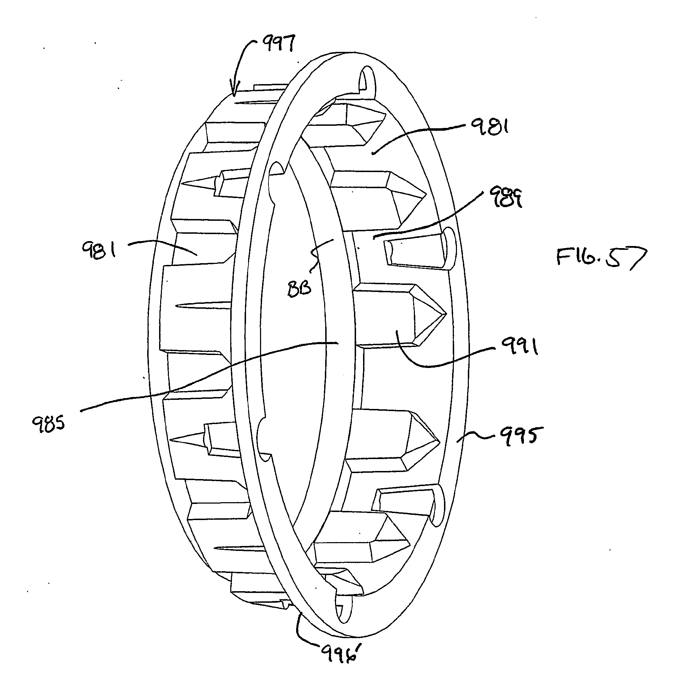

The mate and lock means of the present invention, illustrated by the intermeshing protrusions for each of the spindle drive spline and roll drive spline (997, Figure 57), with the web tension motor 58, facilitates providing a positive drag or drive to the film 216 (Fig. 14B) of the film source roll 20. For if the core 188 (Fig. 12) were allowed to slip on the outside diameter of roll spindle 222, web tensioning at the preferred level of control would be made more difficult to achieve. Spindle spline drive engager 232 is thus sized to properly mate both axially and radially with roll film drive 997 which in turn is preferably sized to provide a no slip interrelationship relative to the core 188 having the film wrapped thereon.

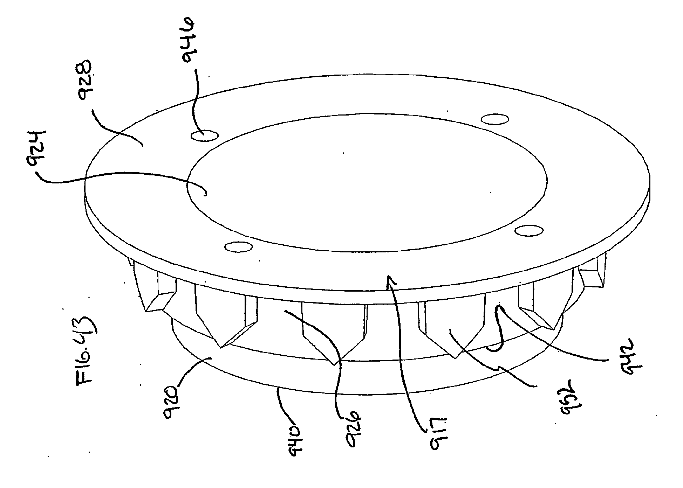

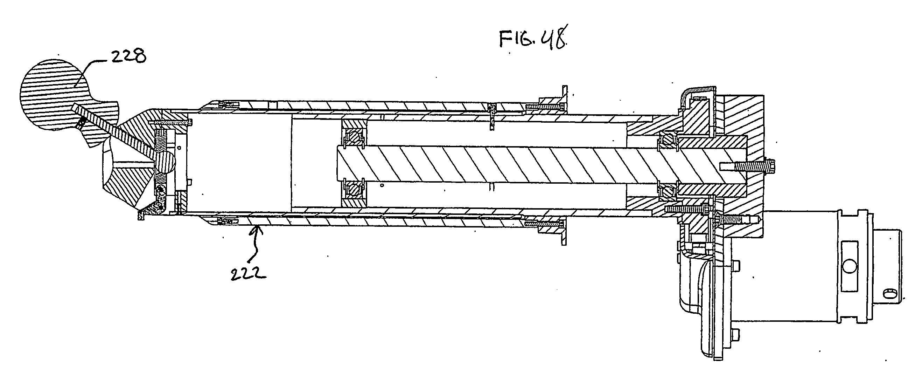

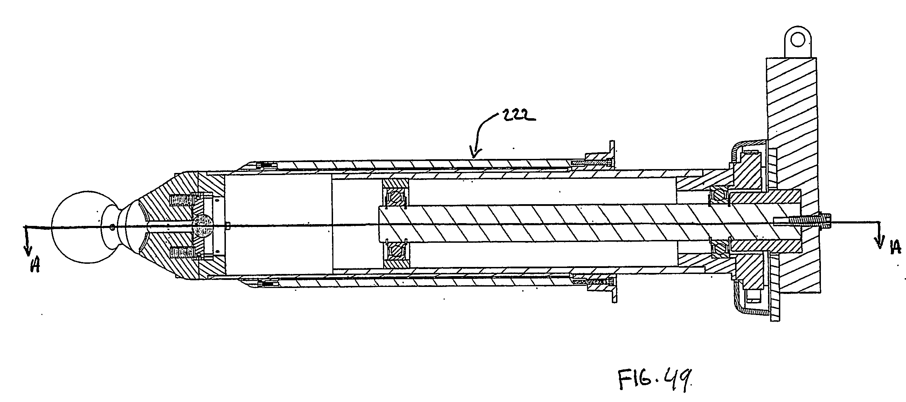

Figures 42 to 46 illustrate engagement member 232 (monolithic preferred but can be multi-component as well) of spline drive 917 well suited for providing accurate web tensioning and having a cylindrical section 938 extending the full axial length from radial base 926 out to the rim 940 with a smooth interior surface 924 which provides for the axial adjustment shown in Figures 48 and 49 when the locking fastener 934 is disengaged. As seen from Figure 43, radial extension flange 928 extends radially out from the base end of cylindrical section 938 and has a roll side surface out from which extends thickened base region 926 (forming teeth 952) that extends toward rim 940 but ends axially short of rim 940 so as to define step down wall 942 (Fig. 45). Step down wall 942 extends radially inward into the thinner cylindrical free extension portion 920 of cylindrical section 938 (while the preferred embodiment features a cylindrical configuration for the spindle and roll drives, various other configurations are also featured under the present invention which are compatible with a supported film source as well as various other meshing arrangements which provide for rotational drive transmission while preferably also allowing for axial sliding off and on of rolls when roll latch 228 is released).

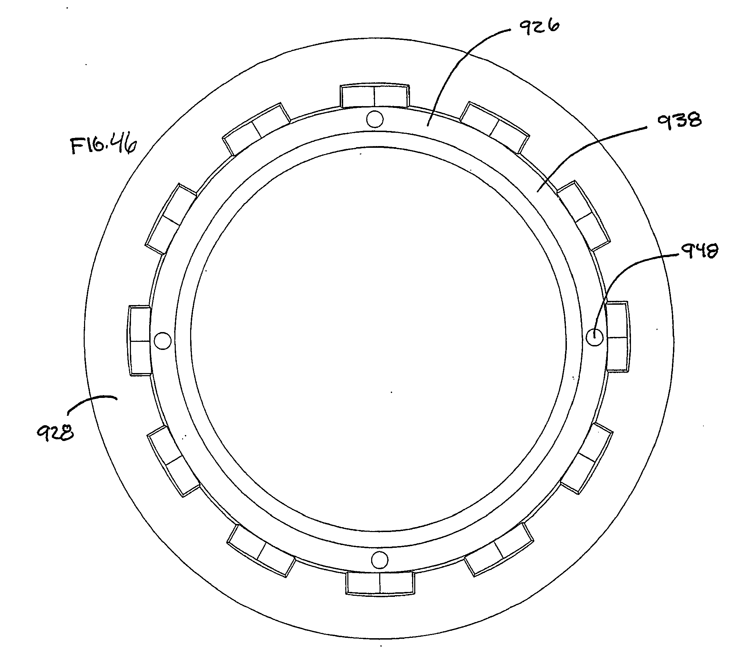

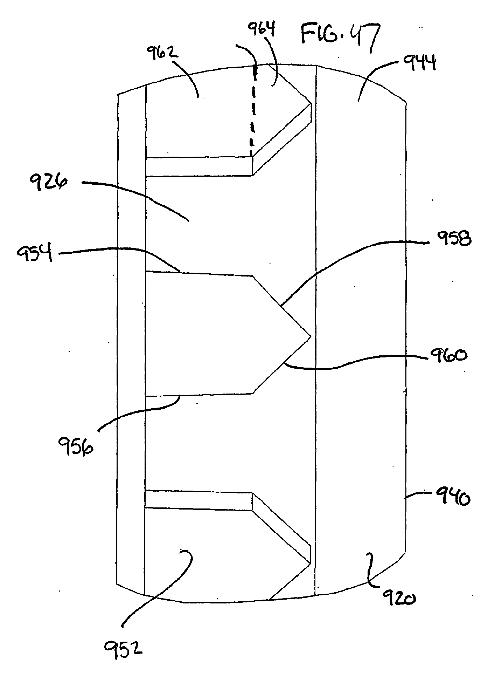

Figures 43, 45 and 46 further illustrate fastener holes 922 being aligned so as to open out at open ends 948 (Fig. 45) close to the radial inner edge of step down wall 942 where, upon insertion of outer cylindrical shaft 918 with its rim thread apertures (Fig. 41), fasteners 921 can be inserted through the four holes (with enlarged fastener head end recesses 950 as shown in Figure 45) and threaded into aligned holes in the rim of outer cylindrical shaft 918. The fastener holes are shown in Figures 45 and 46 as being aligned with the thickest regions of the thickened base region where the teeth 952 are formed. With reference to Figure 47 there can be seen teeth 952 and the parallel straight edges 954, 956 at their base and the sloping mating initiation edges 958, 960. As seen from Figure 47, thickened base region 926 preferably represents about 2/3 of the entire length of cylindrical section 938 with a 1/3 of that length represented by free extension portion 920 with exterior surface 944. Within the exterior surface of thickened base region 926, the tooth base 962 represents about 2/3 of the axial length of thickened base region 926, with the remaining 1/3 occupied by the sloped mating tooth portion 964 (shown separated by an imaginary dashed line in Figure 47).

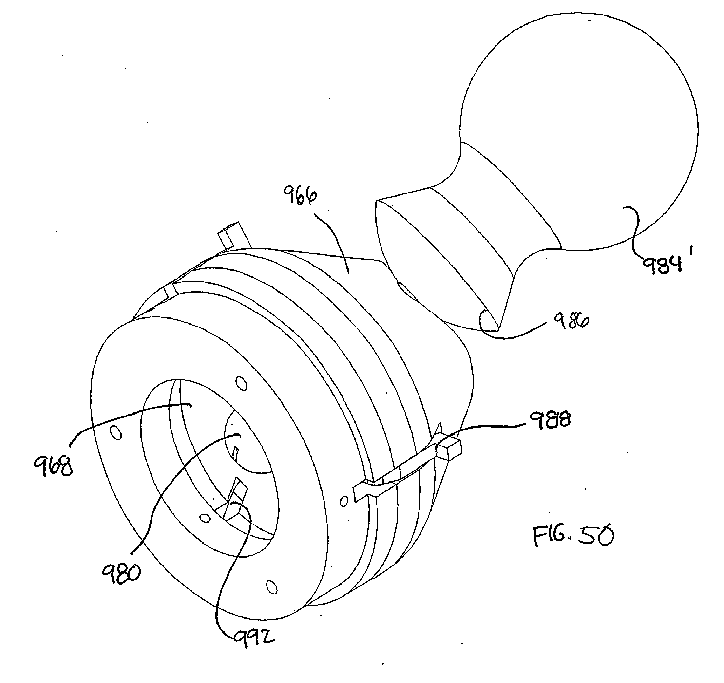

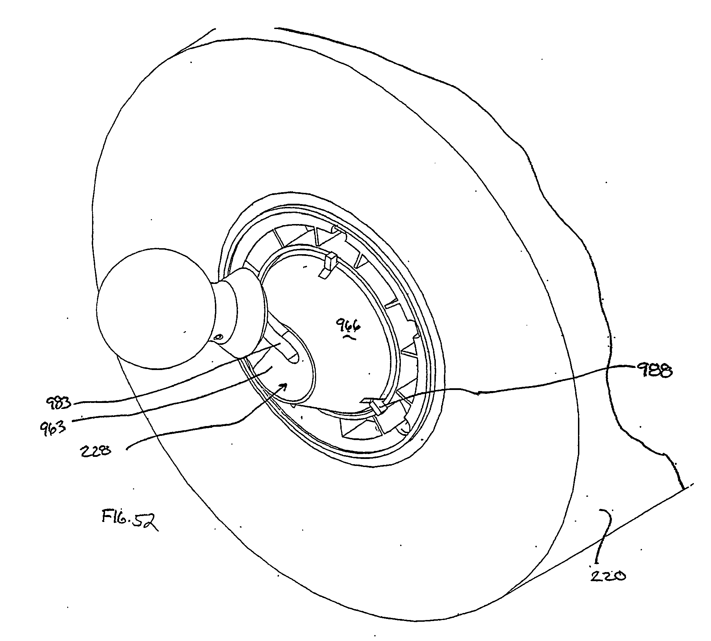

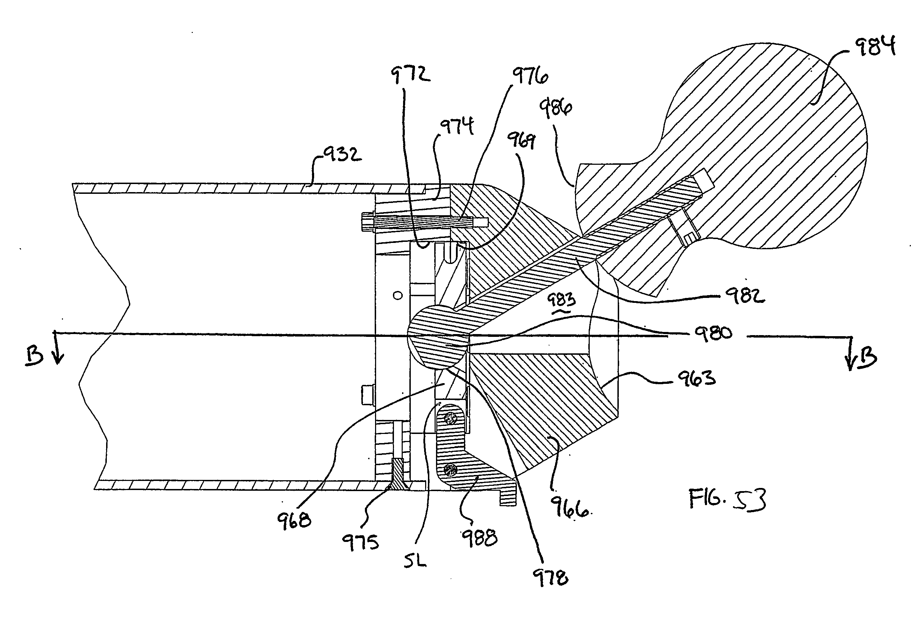

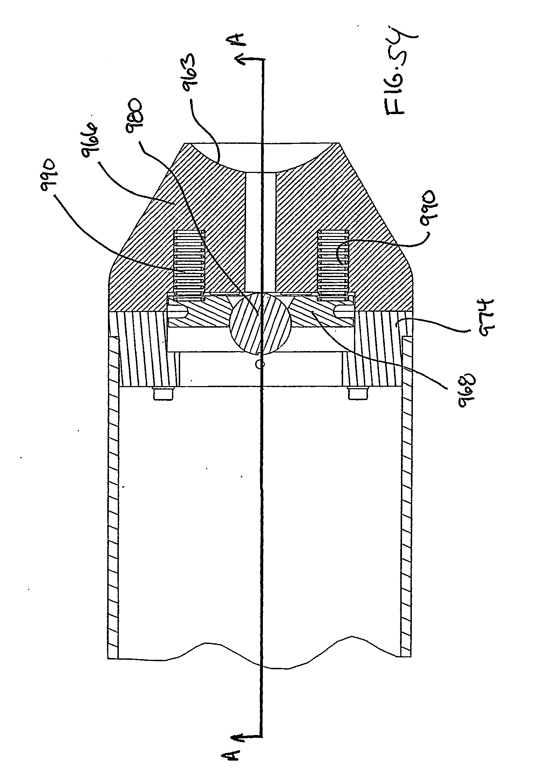

Figures 50 to 54 provide additional views of embodiments of roll latch 228 with the cross sectional view of Figure 53 illustrating its mounting on the end of cylindrical shaft 932. Roll latch 228 includes outer housing 966 having a handle adjustment slot 983, an upper handle reception recess 963, an interior central recess 969 for receiving axial adjusting and biased pivot ball contact plate 968. Plate 968 is shown attached to housing 966 by way of a plurality of springs 990 (Fig. 54) and slidingly received within cylindrical recess 972 formed in insert plug 974. Insert plug is attached (e.g., screw(s) 975) to the open end of tubular shaft 932 and has a Z-shaped cross section so as to share a common peripheral surface with that of shaft 932 at its outer end and to provide a stop or limit to plate 968. Housing 966 is fastened to plug 974 by way of fasteners 976. Ball end securement means 978 receives and captures the pivotable ball 980 of lever 982. Lever 982 has an opposite end section extending into an axial cavity in the handle 984. Handle 984 further includes a curved lower end 986 which functions in cam fashion to facilitate movement between a lock mode wherein the handle is in contact and fixed in position on a peripheral edge of the housing's cavity 963 and slot 983 and plate 968 is pulled axially within housing 966 so as to compress biasing springs 990. This positioning causes sliders SL to move causing an outward rotation of the catch levers 988 in to a roll lock position as shown in Figure 52.

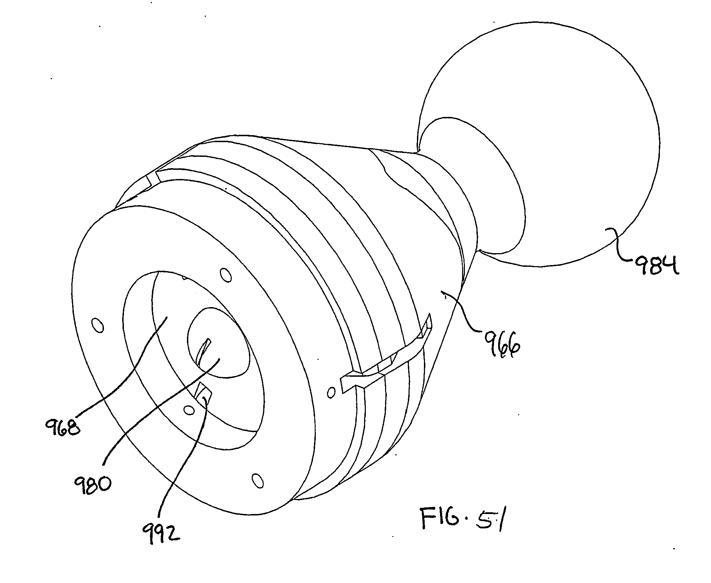

Upon on operator adjusting the handle so as to have the handle cam surface move from the periphery of the housing into handle catch recess 963 the springs are free to axially move the plate away from the housing causing the sliding pins to draw in the locking levers upon contact with the pivotable lever ends and counterclockwise rotation of the levers. Thus upon adjustment of the handle, catch levers 988 (preferably three or four equally circumferentially spaced about the housing) are moved between the above noted lock location and into an unlocked location wherein the handle lever is generally aligned axially with the central axis of shaft 932 and received within handle cavity 963 with the latches 988 in a retracted state allowing for the removal or insertion of roll core 220. As shown in Figure 51 a spherical ball 984 without surface extension 986 is suitable as well for the handle. A comparison of plate 968 in Figures 50 and 51 illustrates the sliding axial adjustment that is relayed by slider pins 992 into radial adjustment of catch levers 988. Figure 52 also illustrates three catch levers in operation.

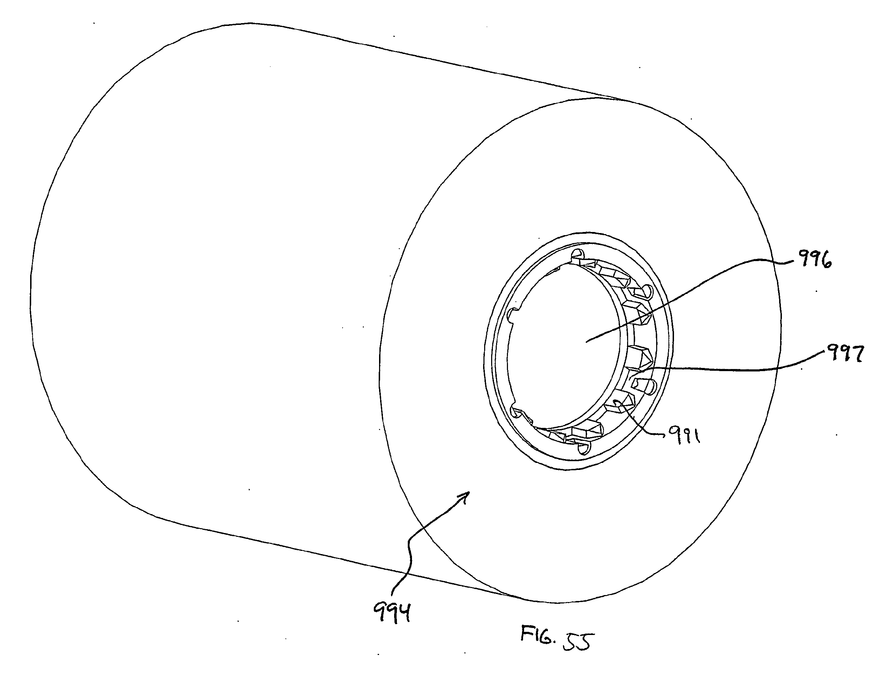

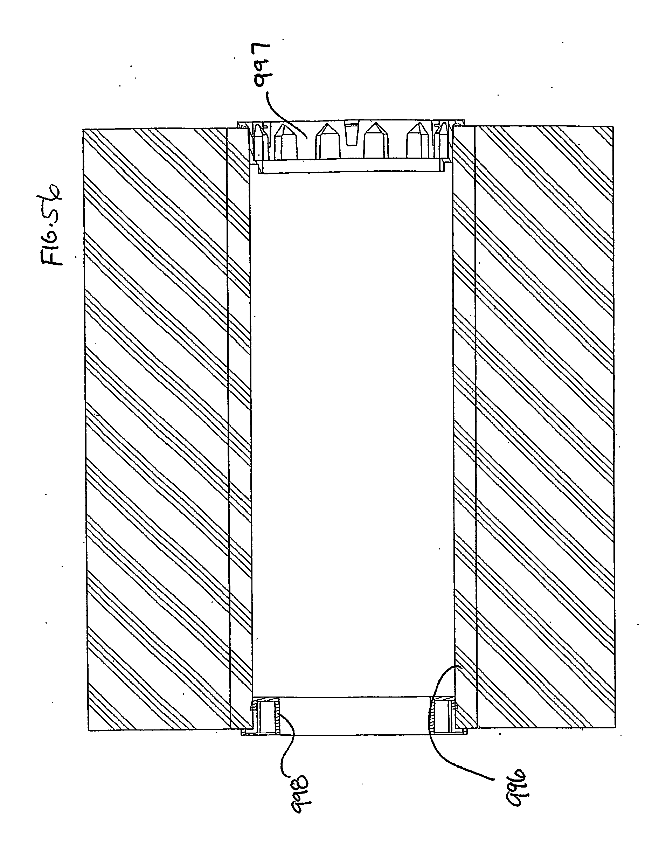

Figures 55 and 56 provide a perspective and a cross-sectional view of roll assembly 994 (a 30.5cm (12 inch) version illustrated although a, for example 48.3cm (19 inch) version would have the same features but for an axially longer core and film roll) comprising core 996 (e.g., a 10.2 cm (4") outer diameter core) with roll film drive or core plug 997 and roll support core plug 998 positioned at the opposite open ends of core 996.

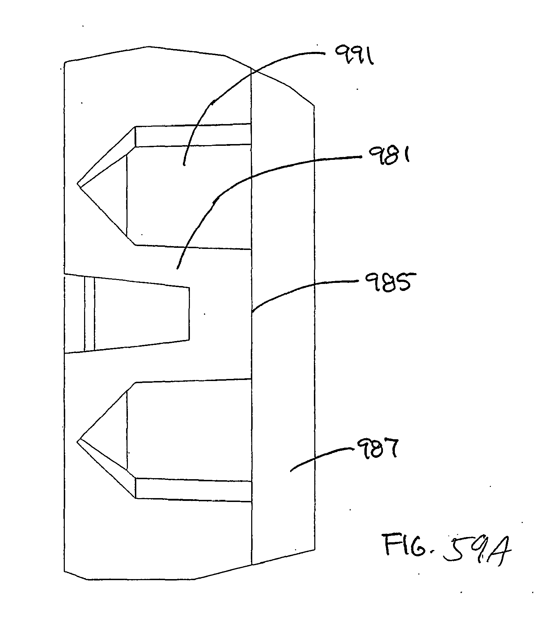

Figures 57 to 59A illustrate roll film drive core plug 997 designed for mounting and rotation transmission with spindle spline drive 917 as described above. As shown in the cross sectional view of Figure 59, roll film drive core plug 997 includes a peripheral flange 995 having a core plug rim contact surface 996' for limiting the degree of insertion of core plug in core 996. The core plugs at each end are preferably sized for tight frictional fit with the interior surface of the core which are preferably formed of a cardboard material, although friction enhancing serrations or some other more permanent position retention means as in fasteners or sharpened catches, spring biased tabs are also featured under the present invention. Alternatively, non-disposable cores can be manufactured out of plastic or the like combining the core and core insert compounds into a single monolithic device.

As with the spline spline drive 917, the illustrated roll film drive core plug 997 is preferably an injected molded monolithic element that is designed to mate with spindle spline drive at the base of the roll spindle 222. As shown at Figure 57, plug 997 includes interior teeth 991 formed as thickened portions formed on an interior surface of a continuous cylindrical extension 989 which extension further includes a free cylidrical extension 987 shown stepped in by Figure 59 and having an edge rim 985. Figure 57 illustrates that the teeth can be formed by radially extending depressions corresponding with the inwardly radially extending teeth 991 which are separated by the adjacent non-radially extending or neutral sections 981 formed between and at the base of the teeth. This relationship provides for the above described mating with the spindle spline drive engagement member 232. Also as shown in Figure 57 there is a common base band BB which is the interior surface of edge rim 985 and extends about the roots of the teeth 991. The sizing of the teeth are similar to those described above for engagement member 232. Also the interior surface of band 985 is generally commensurate with the interior planar surface of teeth 991 and thus represents the portion slid along spline until meshes in supported fashion with the base of the spindle drive assembly.

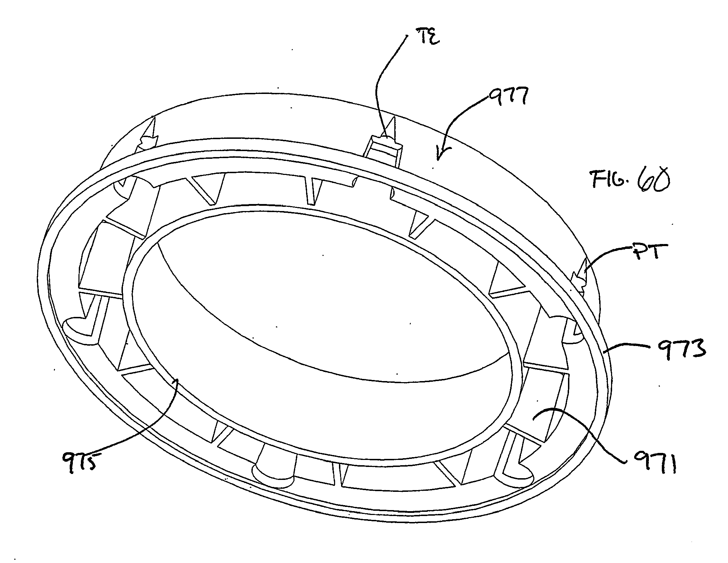

Figures 60 to 63 illustrate roll support core insert 977 which is preferably formed with a double walled cylindrical section 975 having an outwardly extending flange at a first end 973 which provides an insertion limitation means relative to the core as it is slid into position into the open end of the roll film core. In addition, double walled cylindrical section preferably has a plurality of strengthening spokes 971 circumferentially spaced about the circumference of the core plug and in between the respective walls of the double wall cylinder. Also, radial protrusions PT extend out and enhance fixation of roll core insert 977 within core 996 upon the forward transverse edge TE embedding in the softer material of the core. The combination of the two roll film core plugs provide sufficient axial support relative to the preferably cardboard or plastic roll core either in a suspended state relative to the outer cylindrical sleeve 918 or in frictional contact over the length of the outer spindle cylinder. Also, the inner diameter of the non-transmission engaging core plug is preferably less than that of the transmission engaging core plug and the spindle preferably has a smaller diameter to larger diameter section that precludes an operator inserting the wrong end of the film core on to the spindle.

With reference to Figures 9, 12 and 14B, there is illustrated the path of film exiting the film roll supported on the spindle extends tangentially off the top of the film roll and into contact with the forward side of idler roller 114, and then up as shown in Figure 14B into engagement with the rear side of upper idler roller 101 where it is redirected downward. From idler roller 101, film 216, in its preferred C-fold form, is separated over a portion of its non-fold side (the fold side passing externally and in front of the front end 196 of the dispenser 192) and then brought back together as both sides of the film enter the nip roller assembly comprised of drive nip roller pair 84 and 86 supported on shaft 82 and driven nip roller pair 74,76 on shaft 72 (in a preferred embodiment a pair of rollers is supported on each shaft with a preferred intermediate spacing although alternate arrangements are also featured under the present invention such as single, full length rollers provided on each shaft). Reference is again made to Figures 17-21 following the above explanation as to how the roll core is locked in place and is rotated and (electronically) controlled based on its relationship with the spline drive driven by web tension motor in communication with a controller preferably with a general or web tension dedicated processor. Figure 110 illustrates the control and interfacing features of the film tensioning sub-system (as well as the spindle latch release sub-system). This ability to control film tension and to counteract film slacking events provides advantages over the prior art devices relying on braking for example, in an effort to avoid film slacking.

The present invention thus features electronic (e.g., digital signal) web tension control that provides for film tensioning and tracking. Film tension and tracking relates to how the film is handled once it is loaded into the machine. Any film handling or bag making system is only as good as its ability to control tension and to provide proper tracking for the moving web. Poor control of web tension has a negative effect on web tracking, which can cause all sorts of problems with bag quality. The preferred present invention features means for providing active, digital control of web tension, provided by, for example, the illustrated DC motor/encoder 58 driver (motor), which is mounted directly to the film roll spindle and the transmission line from the motor to the roll as explained above. The motor torque, hence web tension, is accurately controlled by the system processors, and based on algorithms installed in the system processors to carry out the below described web tensioning functions.

Under the arrangement of the present invention, the active control capability allows the present invention to adjust tension in the web in response to the rapidly changing dynamics of the bag making process. This type of active web tension control is beneficial with this application, because it can even move the roll backwards, unlike prior art passive or braking web tensioning systems wherein web tension may be lost if the film drive rollers run in reverse, which such prior art devices do at the end of every bag making cycle to pull the film away from the cross-cut wire. For example, the web tensioner on a commonly used prior art device provides web tension via a set of spring loaded drag plates that are positioned to drag on the ends of the film roll. This has proven to be a system with significant room for improvement.

Under the present invention tension control is available while the system is in an idle mode. During idle mode, the web tension torque motor of the present invention pulls back on the film (being fed through the system by the nip rollers and associated nip roller driver) with a slight torque, just enough to keep the film from going slack. The motor torque for the web tension driver, hence the web tension, are controlled by the main system control board in conjunction with a correspondingly designed motor control circuit (e.g., tach motor encoder EN- Figures 17 and 110) that allows the system to control torque via the control of current through the motor windings.

The present web tensioning means is also active in controlling tension while dispensing film. For example, while running, the web tensioning control takes into consideration dynamic changes, such as inertia and roll momentum changes based on the continuous decrease in mass of roll film. For example, in a preferred embodiment, film level monitoring is achieved through a continuous monitoring of the DC motor on the film unwind shaft (film roll support) and compared to the film advance motor. For instance, the rotational momentum of the film roll is considered in the calculation of motor torque when the roll is starting or stopping. When starting film drawing, the torque on the motor will be rapidly reduced so as not to over tension the web. When stopping film drawing, the torque on the motor will be rapidly increased so that the film roll's own momentum does not overrun and cause the web to become slack. The web tensioning device thus works in association with the film feed rollers and other sensors such as system shut down triggering.

In a preferred embodiment of the invention, tension calculation includes consideration of film roll diameter by way of knowledge of the tach state of the film advance motor and web tensioning motor. The control system of the present invention and the web tensioning device of the present invention provide for adjustment in the torque in the web tension motor based on, for example, the amount of film left on the spindle. Motor torque will generally be higher when there is less film on the roll, to make up for the loss of moment arm due to the smaller radius film roll. The encoder on the back of the web tension motor, in conjunction with data on speed of the film drive motor on the nip rollers, provides the information that the control system uses to calculate film roll diameter using standard formulation.

An additional advantage of the web tension system of the present invention is in the ability of the system to sense when out of film as well as when approaching a film run out state (roll diameter sensed at a minimum level and signal generated as in an audible sound - so as to facilitate preparation for roll replacement when the roll does run out as described below) . Encoder EN on the back of the web tension motor 58 provides the system controller with the ability to sense a run out of film on the film roll. If the roll runs out of film, the web tension motor will have nothing to resist the torque that it is generating, so it will start to spin, more rapidly than normal, in the reverse direction. This speed change is sensed by the encoder, which is monitored by the system control board, which will quickly shut the system down as soon as it occurs. This provides an efficient out-of-film sensing mechanism, and uses no extra components. Thus the present system can be run until it completely runs out of film, and then safely shuts down. An added benefit with such a system is that there are no wasted feet of film left on the roll, and the audible or some other signaling means indicating running low allows the operator to be in a ready to replace state when the system does indeed shut down upon completion of a film roll.

In addition to the web tension system rapidly detecting an out-of-film situation, the web tension system of the present invention also provides a film jam or the like safety check and shut down. For example, if there is a film jam somewhere in the system, and the film can no longer move forward in response to the turning of the drive and driver rollers 74, 76 and 84, 86 or nip rollers (a likely occurrence in response to a major foam-up), the nip rollers keep turning, but the web tension motor stops turning as there is sensed no film feed occurring. In other words, the system controller sees that the encoder pulses from the web tension motor are not keeping up with the speed of the film as determined by the speed of the film drive motor on the nip rolls. The discrepancy causes a quick shutdown, and can save the system from further damage. Once again, no additional components are required for this feature illustrating the multifaceted benefits associated with the web tensioning and monitoring film unwinding means of the present invention.

By utilizing, for example, the control and monitoring system of the present invention with the film tension and film advance/tracking sub-systems of the present invention, there can be achieved high performance web tensioning under the present invention. The web tensioning, control and monitoring involves, in one technique, the calculation of film roll size to determine motor torque. That is, the film drive motor (that drives the aluminum nip roller) has an encoder signal that allows the central processing unit to monitor its speed of rotation, by counting the number of pulses received during a known time. The motor produces about 200 encoder pulses per revolution.

Since the film does not slip between the two nip rollers, if you know the diameter of the driven nip roller and its speed of rotation, you can easily calculate the web velocity.

$$\text{Web Velocity} = (\text{Roller RPM}) \times (\text{Roller Circumference})$$

Where:

- Web Velocity is measured in inches per minute
- Roller RPM is the revolutions per minute of the film drive roller
- Roller Circumference is the circumference of the film drive roller measured in inches. Calculated as ($\Pi$ x Roller Diameter)

The other motor on the web path is located on the film unwind spindle. Its purpose is to provide web tension so that the web does not become slack during operation. Slackness in the web will usually lead to film tracking problems, which are highly problematic to the foam-in-bag process.

The web tension motor must not be allowed to over-tension the web, as this can create serious problems like film stretching, tearing, or slippage in the nip rolls.

This motor also has an encoder output, which, for example, provides 500 pulses per revolution. This encoder output is used, in conjunction with the encoder signal on the film drive motor, to calculate the diameter of the film roll on the unwind spindle. The film roll diameter gets smaller as the film is used, and suddenly gets larger when a roll is replaced.

The roll diameter can easily be calculated, when the film is moving at a steady speed, by comparing the web velocity to the angular velocity of the film roll as it unwinds.

Roll Diameter can be calculated as follows:

$$\text{Roll Diameter} = (\text{Web Velocity}) / [\Pi \times (\text{RPM of Web Tension Motor})]$$

Where web velocity is calculated by the formula shown above, and the RPM of the Web Tension Motor is measured by the encoder on the output shaft of the web tension motor. For instance, RPM of the web tension motor can be calculated by dividing the number of encoder pulses received per minute by the number of encoder pulses in a complete revolution.

The film roll diameter is informative because the torque output of the web tension motor is preferably adjusted as a function of the diameter, to maintain web tension, as measured in pounds per inch of web width, at a constant level. The tension motor torque will track armature current very closely, with a response time measured in milliseconds.

*Motor Torque* is related to *Web Tension* in the following equation. This equation applies to the greatest extent if the motor and the web are moving at a constant velocity, or are stationary. If the motor and the web are accelerating or decelerating, the equation relating these two variables involves further adjustment which takes into consideration the acceleration of deceleration with associated acceleration/deceleration formulas.

$$\text{Motor Torque} = \text{Desired Web Tension} \times \text{Web Width} \times \text{Film Roll Diameter}/2$$

Where:

    a) Web Tension is measured in Pounds per Inch of Web Width
    b) Web Width is measured in inches
    c) Roll Diameter is measured in inches
    d) Motor Torque is measured in Inch-Pounds

The central processor controls the torque output of the web tension motor by, for example, measuring and controlling the current flow through the armature coil of the motor. In a preferred embodiment, the web tension motor is a Permanent Magnet DC Brush Motor. In this type of motor, output torque is directly proportional to armature current. The intention of this control system is to maintain within the parameters involved a constant web tension.

As noted above, the web tension motor can be used in other situations to help keep web tension constant, or to change it as desired.

For long idle periods, where the system is left idle for long periods, the web tension can be reduced to a lower level than what is normally used during operation. This will extend the life of the motor, by reducing current flow through the brushes.

For a starting of web motion, during the start of the bag making cycle, the web has to be accelerated to its final velocity. This means that the web has to yank the film roll to get it moving, an act that inherently increases the web tension because the film roll has rotational inertia. During these acceleration periods, the web motor torque can be reduced to compensate for the increase in tension that is inherent to accelerating the film roll. This reduction is preferably based on trial runs and a monitoring of performance of the web tensioner for given roll settings.

At the end of the web motion, or the end of the bag making cycle, the film roll has to stop, or a lot of slack will be induced into the web. Since the rotational inertia of the film roll is quite high, the web tension motor torque must be increased to prevent the roll from overrunning the web as it comes to a stop. As with the start of motion, this torque profile is typically determined through trial runs.

The encoder output on the web tension motor also provides shutdown information that is useful to machine operation. For example, if the nip rolls are turning, and the web tension motor is not turning, then something has jammed the web. An immediate machine shutdown is required. If this happens at the end of a film roll, it probably means that the tape holding the film to the core is too strong, and the film cannot pull off the paper core. This appears to be a jam as far as the machine control system is concerned.

Also, if the web tension motor turns in reverse of its direction of rotation when the film is unwinding, then the roll is out of film. When the film pulls off the core, at the end of a roll, this is the expected shutdown mode.

Another problem with film feed in prior art systems is poor web tracking. Web tracking refers to the direction of the film as it runs through the machine. If tracking is good, the film runs straight and true through the machine, with the centerline of the web path being very close to the centerline of the nip rollers. If web tracking is poor, the film will track to the left or to the right, with the centerline of the web shifted from the centerline of the nip rolls. Tracking becomes an issue when the film tracks away from the edge seal wire. This results in a bag without an edge seal, which can easily become a bag that leaks foam on the operator, the product that the operator is trying to package, or simply onto the factory floor. In the present invention there is provided a web tracking adjustment means represented by the adjustment mechanisms 98 and 100 (earlier described with reference to Fig. 7) which feature screw adjustable plates that the upper shift idler roller either horizontally, vertically or both. The means is preferably used at the factory for offsetting any tolerance deviations that might lead to off line tracking, and locked in place prior to shipment. However, the adjustment mechanism can also be adjusted by the operator such that field adjustment is possible if needed.

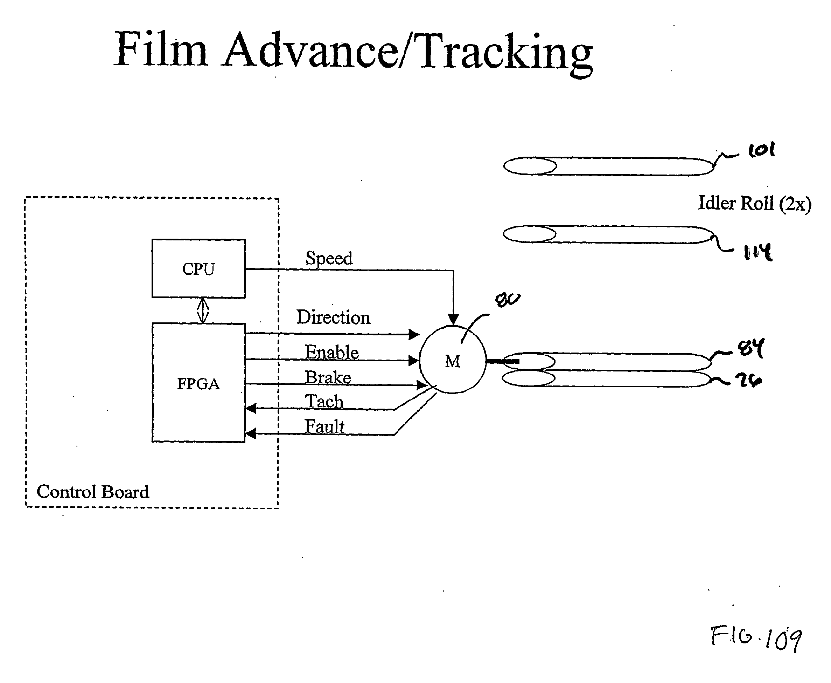

A comparison of Fig. 7 with the film advance/tracking controller sub-system shown in Figure 109 illustrates the control systems' arrangement for carrying out the film advance and monitored. As shown, the control board comprises, for example, the central processing unit working in conjunction with a field programmable gate array ("FPGA") and control circuitry receiving signals and sending data on the real time characteristic of the film advance. The FPGA can receive programmed data input from the memory stored in the processor upon machine start up, for example. Figure 7 illustrates the drive roller shaft 82 being driven by driver 80 whose output shaft is in direct engagement with the roller shaft via step down gearing 1000 of driver 80, with driver 80 also preferably comprising a brushless DC motor 1002 with encoder sensor 1004 as in the previous discussed motor 200 for the mixing module drive assembly. As described above, the control board film advance sub-system shown in Figure 109 can thus monitor, via the encoder sensor, the status of the drive roller shaft 82 with fixed roller set 84 and 86. As shown in Fig. 7, for example, each roller (84, 86) includes slots for receiving canes 90 supported on fixed rod 92 to help avoid undesirable film back travel. This monitoring is useful for monitoring general tracking of film feed and, as noted above, can be used in conjunction with the web tension driver encoder to monitor system conditions like the above noted film out condition.

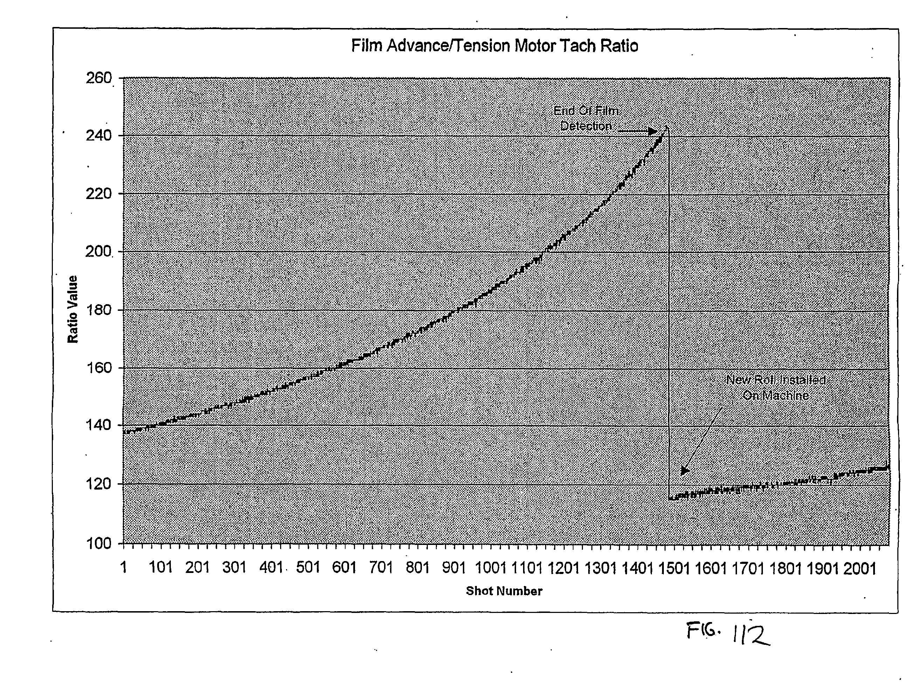

Figure 112 provides an illustration of a film advance versus tension motor ratio and its use in monitoring the relationship between roll usage and the interrelationship between the film advance and web tension tachometer feed to the control system. The "shot number" along the X-axis illustrates a history line of the number of dispensed shots for a given bag volume and foam output volume (useful in comparison from one roll to the next as to film usage). This information is useful in the monitoring of film re-supply needs as described in the above noted provisional application entitled "System and Method For Providing Remote Monitoring of a Manufacturing Device". As described in that application, the remote monitoring, and re-supply of material capabilities facilitated with the control system of the present invention.

For example, three main supply requirements for a foam-in-bag dispenser are film (for bags), chemicals (for foam) and solvent (to prevent foam build up in the valving/purge rod and a tip of dispenser). To monitor solvent, there is provided a certain volume solvent container (e.g., 11.4 l (3 gallons)) that is in line with a metering pump (e.g., a pump that dispensers a fixed volume of fluid with every cycle (e.g., .57 ml based on a preferred 3 pump pulses of .19 ml per bag cycle). The controller thus receives signals from the pump as to cycles and/or correlates with bag cycle history such that by monitoring the number of cycles of known solvent volume usage there can be determined usage of solvent and when re-supply is needed. The solvent container also has a float valve or the like which signals when a first low level is reached and sends out a warning via controller interfacing. There is also provided an even lower level sensor that when triggered shuts down system to prevent purge rod binding and other problems involved with no solvent flow is provided. With the monitoring of solvent level based on usage and/or container levels, a new supply of solvent can be automatically sent out from a supplier when there is reached either a certain level of closed amounts or a container level signal allowing a review of history of usage for machine (re-supply could be triggered by the first low signal or at a higher level depending on re-supply time etc.).

A somewhat similar arrangement is provided to monitor the chemical usage for re-supply, for example. The preferred gerotor pump system used to pump the chemical to the dispenser is not a fixed volume pump per se so there is monitored with the controller the chemical mass of each bag produced is maintained in the database. This is a calculated field based on the 'dispenser open time' and the respective flow rate standard with the know source supply (e.g., a 208 l (55 gallon drum)) a monitoring of usage and re-supply needs can be actively made by the controller.

One way to monitor the film usage is to use the encoder on the nip roller set to determine number of rotations and with estimated film passage length per rotation can compare against overall length on a roll of film or film source. Under the present invention there is an alternate way to monitor film usage and that is to utilize facets of the above noted web tensioning comparison wherein the output of the film tensioning system (e.g., the encoder of a web tension torque motor having a torque drive transmission system in direct engagement with a roll core drive insert) and the output of a motor driving the nip roller set are used with the controller to compare the interrelationship, and with a review of roll unwinding charcteristics a determination can be made as to how much film has been fed out from the roller. The comparison of motor torque method is the preferred method since it is independent of the machine keeping track of when a roll of film is changed and how much film is on the roll. The DC motor on the film unwind shaft is constantly being monitored and compared to the film advance motor to compensate for the continual decrease in mass of a roll of film.

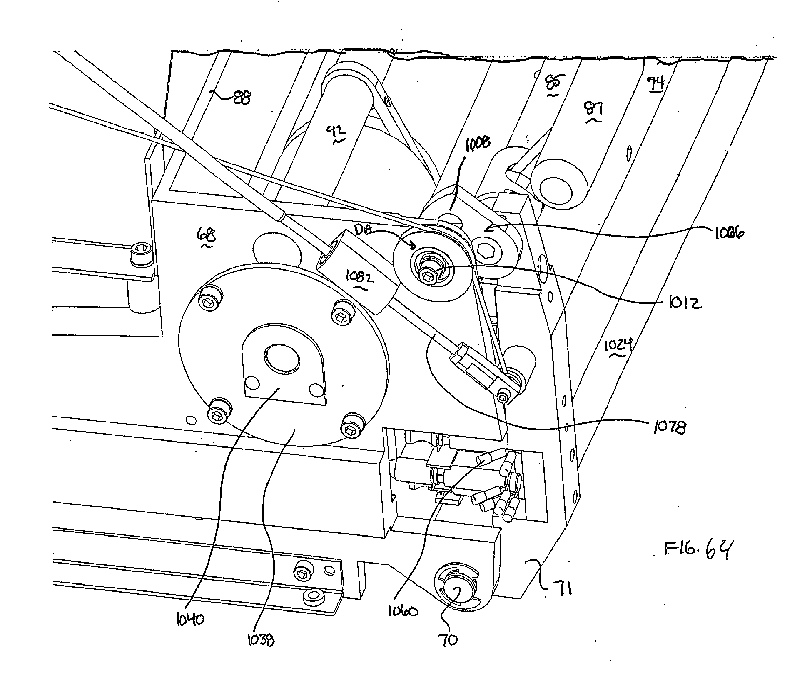

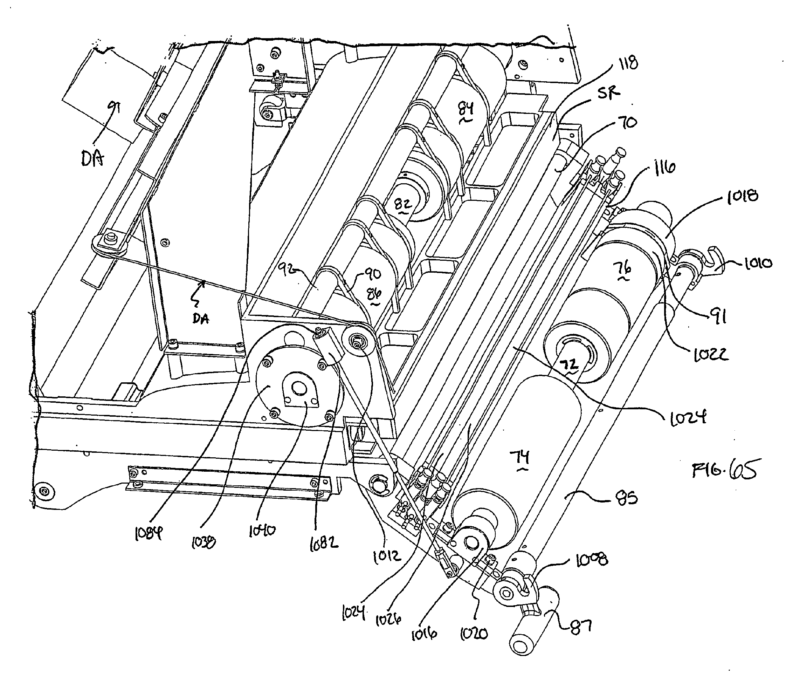

Operator servicing under the present invention is also greatly facilitated. For example, Figure 64 provides an enlarged view of the roller set assembly shown in Figure 7 as well as a close up view of the front door latch handle 87 which is a component of the adjustable front panel access means 1006 for gaining access to the below described components as depicted in Figure 65. As shown in Figures 64 and 65, door access latch handle 87 is fixed to door latch rod 85 which has opposite end cam latches 1008 and 1010 non-rotatably attached to latch rod 85. Cam latches 1008 and 1010 are shown in Figures 139 and 140 as having hook or engagement means designed to engage with the stub pin supports 1012 and 1014 (Fig. 7) supported on upper forward regions of first and second side frames 66 and 68. Front face pivot frame sections 71 and 73 also have a top end connected with door latch rod 85 and are positioned inward and in abutting relationship with respective cam latches 1008 and 1010. The opposite ends of front face frame sections 71 and 73 are pivotably attached to front pivot rod 70 secured at its ends to the left and right side frames 66 and 68.

As seen from Figure 65, front face frame sections 71 and 73 feature bearing support platforms 1016 and 1018 receiving in free roll fashion the opposite ends of shaft 72. Bearing support platforms are shown as being releasably attached to the interior side of front face frame sections 71 and 73 to facilitate servicing or replacement of the preferably knurled aluminum driven nip rollers 74, 76 as well as edge seal 91 shown in Figure 65 sandwiched between its bearing mount 1022 also supported on shaft 72. Unlike rotating rollers 74 and 76, however, edge seal 91 remains stationary as the shaft rotates internally within bearing mount 1022. For opposite free edge film or non-C fold film embodiments a similar edge seal as 91 can be positioned at the opposite end of shaft 72.

Figure 65 also illustrates heater jaw 1024 with its sealing face 1026 exposed upon adjustment of the access panel into the panels exposed, service facilitating state (rotated down in the illustrated preferred embodiment). Figure 64 illustrates the front of heater jaw assembly 1024 in its operational position aligned with the aforementioned moving jaw 118. The preferred embodiment features having the heating wires (cutting as well as sealing in the preferred embodiment shown) used to cut and seal the end of one bag from the next on the heated jaw 1024 and to have the heated jaw 1024 fixed in position relative to moving jaw 118. A reversal or sharing as to heat wire support and/or wire backing support movement are also considered alternate embodiments of the present invention. Having the moving mechanism positioned out of the way under the bagger assembly is, however, preferable from the standpoint of stability and compactness. Also, having the heater wires on the accessible door facilitates wire servicing as described below. Heater jaw assembly 1024 is shown rigidly fixed at its ends to the front face pivot frame sections to provide a stable compression backing relative to the moving jaw 118 and is positioned, relative to the direction of elongation of frame sections 71 and 73 between the aforementioned driven roller set and the pivot bar 70 to which the bottom bearing ends 1028 and 1030 of frame sections 71 and 73 are secured.

With the cam latches and handle in the front face closed mode (shown in Figure 64 and figure 7 with latches 1008 and 1010 engaged with pin stubs 1012, 1014), the driven rollers are positioned in proper nip location in relationship to the drive rollers 84 and 86 that are preferably of a softer high friction material as in an elastomer (e.g., natural or synthetic rubber) to facilitate sufficient driving contact with the film being driven by the rollers. In addition to proper film drive positioning brought about by the latched front access door arrangement, the heater jaw is also appropriately positioned to achieve a proper cut and/or seal relationship relative to the opposite jaw. As shown by Figures 2, 15 and 15A, front access door is preferably enclosed or covered over with front access panel 1032, which is shown in Figure 15A to be pivotable about a vertical access and then slideable back along side frame 68 as shown by the same door referenced 1032A in Figure 15A to provide for rotation down of the frame sections 71 and 73 (which can also be provided with an integrated outer cover facings supported, for example, as the exterior of heater jaw assembly 1024). Figure 15B shows a side elevational view of front access door 181 in a flipped down state ready for servicing (Figure 15B also shows the spindle in the replace roll mode - although to avoid contact between the spindle and front access door it is preferable to carry out the roll servicing and front access door component servicing at separate times as it provides for a more compact overall system). As shown in Figure 15A face plate 1034 is secured at its opposite ends to the frame sections 66 and 68, and supports touch pad button set 1036 for operator manipulation (e.g., a set of bag size control panel buttons). The buttons are connected by electrical wires to the aforementioned control board in a fashion which does not interfere with the pivoting open of the front face plate 181 and supported front panel 1034. The control board is in communication with a modem or the like for remote data exchange as described in Provisional Patent Application Serial No. 60/488,102 filed on July 18, 2003 and entitled "A System And Method For Providing Remote Monitoring of a Manufacturing Device" which is incorporated herein by reference. Figure 15B provides a front view of the bagger assembly similar to Figure 3 but with a ghost line outline of the interior components and of a possible conveyor line CL for automated or supported feeding of boxes or the like to receive a foam filled bag. As seen, main front panel 1032 extends from the top of the bagger assembly down past the upper edge of the front face panel 1034 supporting button set 1036 when the assembly is in an ready for operation mode. As seen from Figure 15A, following a pivoting and sliding away of main face panel 1032 into a service mode position, access can be had to the dispenser and other components of the bagger assembly, as front face panel 1034 is exposed and free to rotate about its lower horizontal pivot axis to provide access to the components supported by pivot frame sections 171 and 173 as shown in Figure 65.

Figure 65 also illustrates the ease of accessibility to either the drive or the driven roller set provided by the flip open feature of the present invention. Whether it be access for cleaning where the rollers need not be removed or freedom to remove any of the rollers for replacement or roller servicing, the flip open access feature of the present invention renders such activity easy to achieve. Figures 64 and 65 also illustrate removable drive shaft exterior bearing retention block 1038 and interior bearing extension block 1040 with the former having releasable fasteners which upon removal allow for the larger sized exterior bearing block to be removed and the entire drive roller assembly axial slid out form the bagger assembly.

The flip open front door access means of the present invention provides easy access to the sealing jaws, seal wires, cut wires, and the various substrates and tapes that cover the jaw face(s). Opening the door provides full visibility, greatly easing the task of servicing the sealing jaws to provide the inevitably required periodic maintenance (e.g., cleaning of melted plastic build up and/or foam build up).

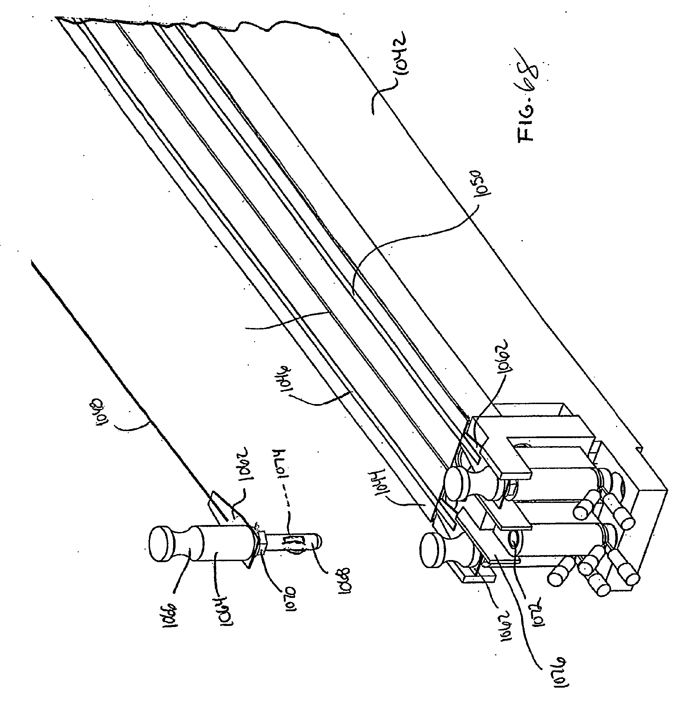

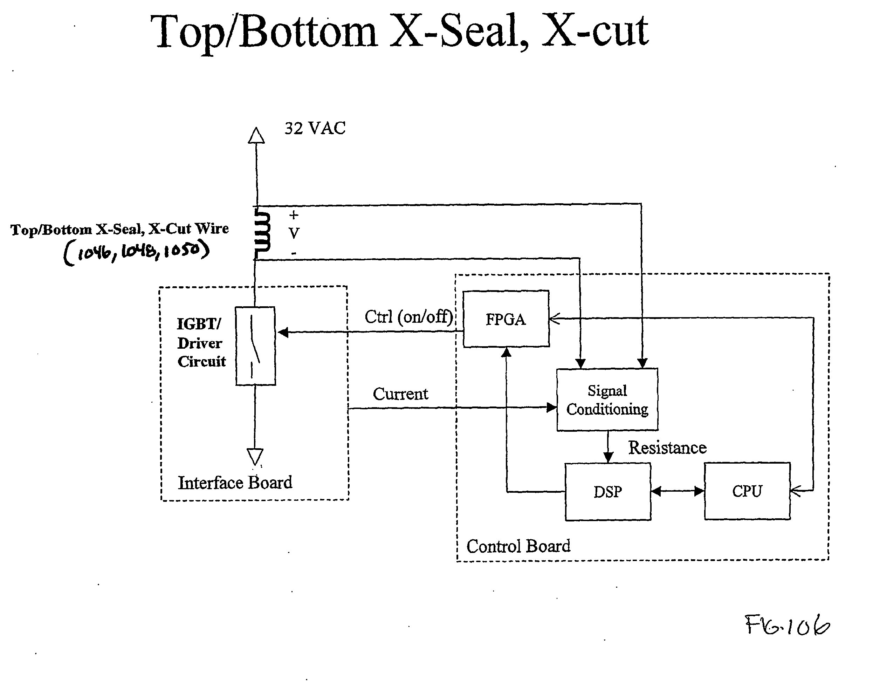

With reference to Figures 65 to 69, there is provided a discussion of the heated wire supporting jaw 1024 and the easily accessible and serviceable supported cut and sealing wires. Figure 66 shows the complete heater jaw assembly 1024 and Figure 68 shows an enlarged view of the left end of heater jaw assembly 1024. As shown, heater jaw assembly 1024 includes base block 1042 which is a solid bar formed of, for example, nickel chromium plated steel having good heat resistance and heat dissipation qualities as well as minimal load deflection and thermal expansion qualities. For enhanced heat resistance and avoiding heat build up in the base block, there is preferably provided a high heat resistance thermal barrier layer 1044 (shown in cut away in Figure 66) between the heated resistance wires 1046, 1048 and 1050 (preferably in a seal/cut/seal wire sequence). Barrier 1044 is preferably a removal barrier to avoid degradation of a more expensive and less easily replaced component of the system. An adhesive Teflon tape is well suited for this purpose. Base block 1042 features opposite end indented sections 1052 and 1054 forming underlying projection supports for electric contact housings 1056 and 1058 formed of an insulating material (e.g., plastic) and having internal electrical connectors which are designed to transfer current between the fixed electrical wire connectors 1060 extending out from the housing's bottom and the housing's interior plug reception contacts (not shown) and to provide information to the controllers heat wire control and monitoring sub-systems as shown in Figure 106. As a preferred embodiment provides both sealing and cutting means together relative to the just formed and just being formed bag border, there is featured seal wires 1046 and 1050 positioned to opposite sides of the intermediate cut wire 1048. Because of their different functions, seal wires are preferably flat or ribbon wires that provide for a strip area seal at the bottom of a just being formed bag and the top of a just formed bag. As the intermediate wire 1048 is providing a cutting function a circular cross section wire is utilized.

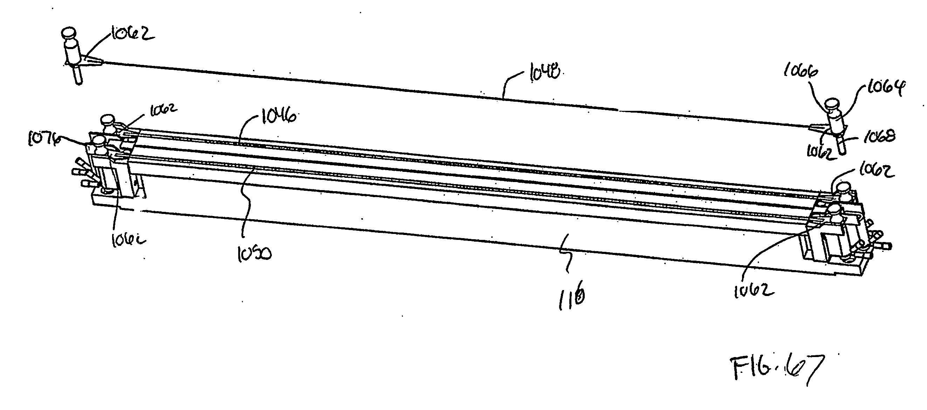

Figures 67 and 68 show that each seal and cut wire has opposite ends fixedly secured (weld or solder preferred) to one of the illustrated support plates 1062 which are flat metal conductive plates having an enlarged conductor pin securement base leading to a converging extension to which the ends of the seal and cut wires are secured (see Figure 67 and 68). Conductor pins 1064 are provided at each end of the heater wires and each features grasping pin head 1066 with cylindrical base 1064 which receives and secures in position conductor pin extension 1068 and an upper recessed section for easy grasping. Leaf type spring members can also be provided in either the male or female portions of the pin connection. Pin extension 1068 preferably has a threaded base or upper end to which threaded nut 1070 is secured to compress plate 1062 into a fixed level relative to the bottom of grasping pin head 1066. The portion of pin extension to be received in the electrical contact housing 1058 is elongated and thus is fixed in position by way of a sliding friction fit in one of the conductive reception ports 1072 provided in contact housing 1058, although an optional expansion leaf spring 1074 embodiment such as illustrated in dashed lines in Figure 68 is also featured under the present invention. Each reception port 172 is maintained insulated at the plate 1062 level by barriers 1076 (e.g., a plastic flange extension in the injection molded reception housing block 1056). Also, the upper end of each reception port is recessed relative to the upper exposed surface of the heating jaw base block (or upper surface of layer 1044 when utilized) such that the thickness of the fully threaded and plate compressing nut 1070 places plate 1062 at the desired suspension height level away from the base block's upper surface. To achieve the desired seal versus cut differential, there can be implemented, for example, variations in relative height of the wires 1046, 1048 and 1050 from the block as noted above and/or, differences in wire material or form (e.g., as in the illustrated ribbon versus circular cross-section wire forms) and/or electrical power supply via the control. As seen from Figure 68 a significant portion of the ends of the wires extend over at least a third of the upper surface of the plates 1062 so as to provide secure engagement and to facilitate the maintenance of high tension and minimal intermediate "droop" deflection.

In addition to the access door opening providing easy access to the heater wires, the heater wire conductor pairs connection in the heater jaw assembly is such that they can be quickly removed and replaced without tool requirements and there positioning, upon return relative to the underlying support, is ensured at a precise location. Heater wires generally last for over 100,000 bag cycles, although a cleaning at every 5000 or so cycles is likely to be required for good performance. The access door allows for quick and easy periodic checks (e.g., operator determined or based on a prompt from the control means to the display panel described in greater detail below). Also the ease of access allows for a quick check as to the condition of the covering layer on the moving and fixed jaws which is usually a Teflon tape that typically requires replacement after every 20,000 to 30,000 bag cycles. The moving jaw also preferably has a silicone rubber pad SR supported by the jaw base (See Figure 65) which typically requires replacement in prior art systems at about 100,000 bag cycles. This too is made easy to accomplish as the jaws can be readily accessed and readily removed, if desired. Also, the control means preferably monitors the number of bag cycles and can prompt the operator when the number of bag cycles suggests cleaning or replacement is in order as with the other components made more easily accessible by the flip open door, or induce an automatic order as described in Provisional Patent Application Serial No. 60/488,010, filed on July 18, 2003 and entitled "Control System For A Foam-In-Bag Dispenser," which is incorporated by reference.

Figures 64 and 65 also illustrate door movement limitation means or door stop 1078 which comprises connection rod 1080 extending through fixed reception member 1082 having a passage through which the rod extends and a base secured to the fixed frame 68. At the free end of rod 1080 there is provided clip 1084 to prevent a release of the rod from member 1082 and a stop means to limit the downward rotation of the fixed jaw and front access door. The opposite end of connector rod 1080 is connected to part of the flip open access door such as front face pivot frame structure 71. Thus, the hinged access door is precluded from rotating freely down into contact with fixed frame structure of the bagger assembly. Additional damping means DA is preferably also provided as illustrated in Figure 9, 64 and 65 featuring a pair of constant force negator springs arranged in mirror image fashion to counteract forces generated by the springs at their fixed positing on the support extending up from framestructure 88. The negator springs are held in a bracket support BT and connected by way of a cable past the two illustrated redirection pulleys to connection to hinged front door. The coil spring damper thus allows for controlled opening of the relatively heavy front access door with supported roller set, fixed jaw and other noted components. Damping means other than the illustrated coil arrangement or also featured in the present invention, such as a hydraulic dampening device and/or helical spring member to provide greater control during the rotation undertaken by the hinged access door.

An additional advantage provided by hinged access door is the ease in which the film can be threaded through the nip rolls (or released as, for example, when a change in film size is desired). The threading of film through the rolls is simplified, as the operator now has an easy way to separate the nip, rolls as opposed to the difficult threading or pushing and drawing of film between the fixed roller sets of the prior art which prior art technique leads to a significant amount of film being wasted before a smooth and hopefully properly aligned/tracking film threading is achieved (e.g., it is estimated that on average 1.52 to 3.04 m (5 to 10 feet) of film is wasted in the threading procedure before the film straightens and smoothes). Under the present invention, the access door can be opened to further separate apart the nip roller sets and the film played out into position (e.g. by hand or by using a feed button on the control panel) between the nip rollers and the film tends to naturally stay flat or, if not flat, a quick wiping action will achieve the same whereupon the operator merely needs to close the access door (using the handle 87 to lift up and then rotate the access door's cam latch into locking position). The only film wasted is the length of film that extends beyond the cutting wire, prior to the first cut being made.

An addition advantage of the access door flip open feature is easy access to the edge sealer assembly 91AS. Edge sealer assembly 91AS is described in greater detail below and comprises replaceable edge seal arbor mechanism 1104 featuring arbor base 1108 and a heater wire supporting arbor assembly 1106 with, for example, plug in ends similar in fashion to those described above for the end sealer and cutter wires. Thus the access provided by the door allows for either replacement, servicing or cleaning of the entire edge sealer assembly 91AS or individual components thereof such as the arbor or just the double pin and heater wire combination or the below described high temperature heater wire under support. One of the standard prior art edge sealers typically requires cutter wire servicing about every 20,000 to 30,000 bag cycles or less. As noted above, the prior art are considered to have a high service requirement as compared to the present invention, and thus under the present invention, the service cycle can be set greater than 30,000 for this service feature, again preferably with prompting by the control system which monitors the number of bags formed and can either visually and/or audibly provide the operator with such prompting (e.g., menu screen).

An additional not easily accessed and difficult to service component of the dispenser system is the roller canes 90 (Fig. 7) used to prevent undesired extended retention of the film on the driving nip roller. With the access made available by the access means of the present invention, an operator or service representative can readily clean or replace a cane 90.

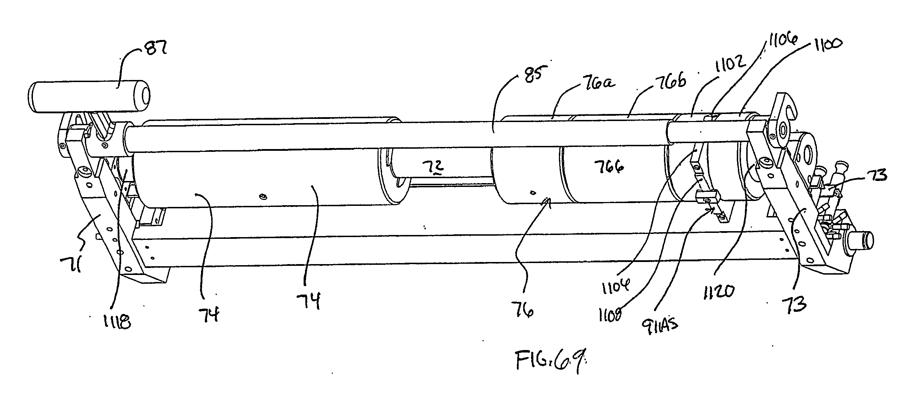

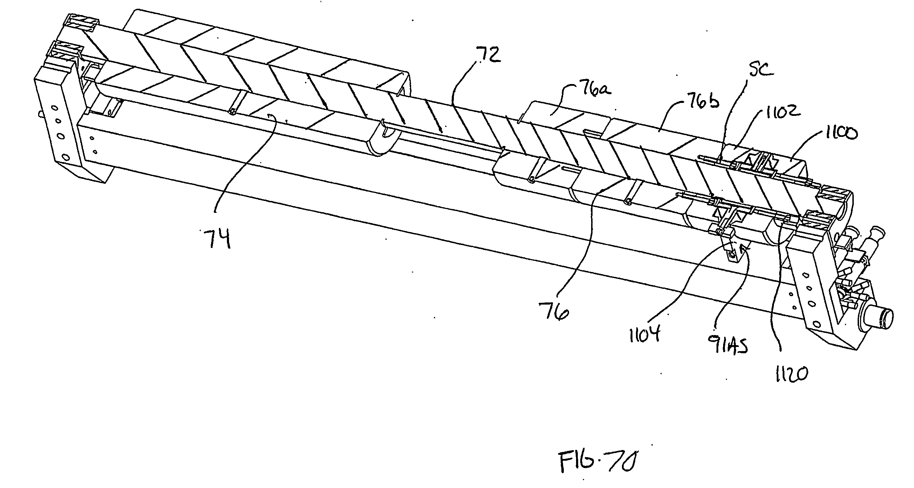

As seen from Figure 65, and the view of the driven roller assembly shown in Figure 69 with driven shaft 72 and driven rollers 74 and 76, as well as the cross-sectional view of the same in Figure 70, edge seal assembly 91 is mounted on shaft 72 which is preferably a precision ground steel support shaft supporting aluminum (knurled) driven rollers 74 and 76. Edge seal assembly 91 is shown as well in Figure 7 on the right side of driven shaft 72 (viewing from the front of the bagger) in a side abutment relationship with driven roller 76. The cross sectional view of Figure 70 shows driven roller 76 preferably being formed of multiple sub-roller section with driven roller 76 having three individual sub-roller sections 76a and 76b which are included with edge seal assembly 91AS. Edge seal assembly 91AS includes edge seal 91 and roll segments 1100 and 1102.

Thus with this positioning, edge seal 91 is the sealer that seals the open edge side of the folded bag. The open edge side is produced by folding the film during windup of the film on core 188 (Fig. 11), so the folded side does not need to be sealed and can run external to the free end of the suspended dispenser. The present invention features other bag forming techniques such as bringing two independent films together and sealing both side edges which can be readily achieved under the design of the present invention by including of an additional edge sealer assembly on the opposite driven roller such as the addition of a seal assembly as a component of roller 74a. The open side edge side of the film is open for accommodating suspended dispenser insertion and is sealed both along a direction parallel to the roller rotation axis via the aforementioned heated jaw assembly and also transversely thereto via edge sealer assembly 91AS.

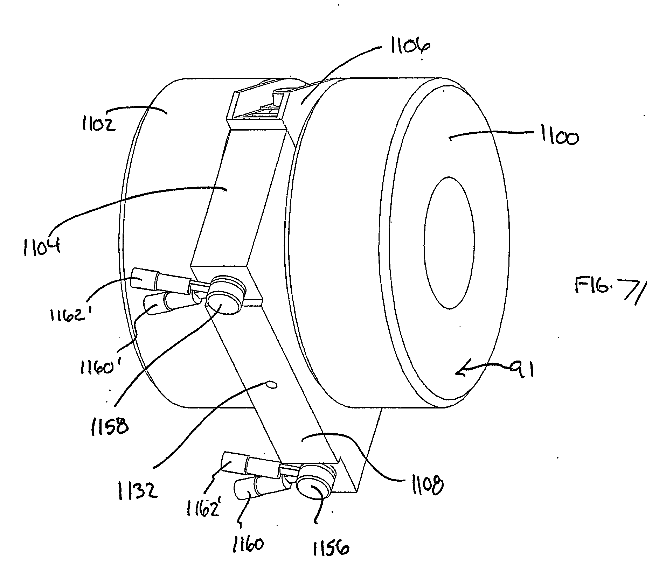

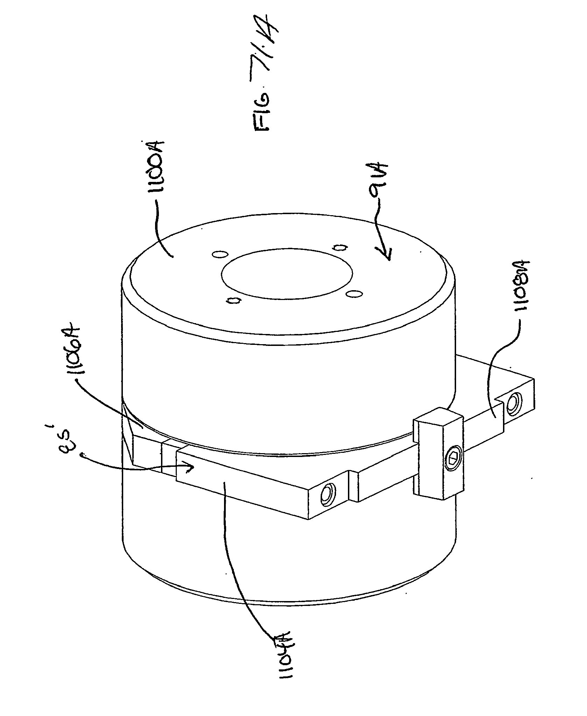

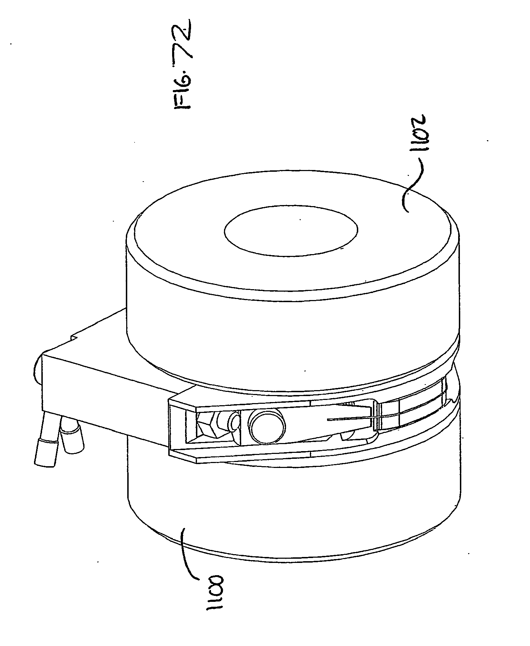

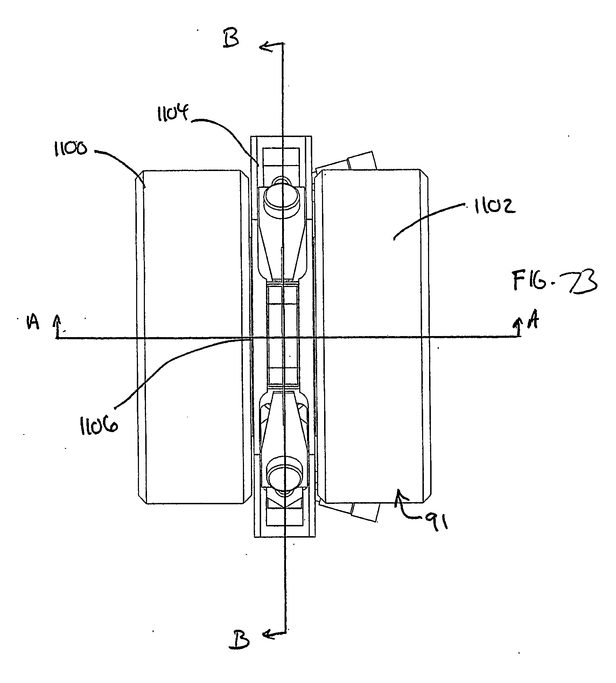

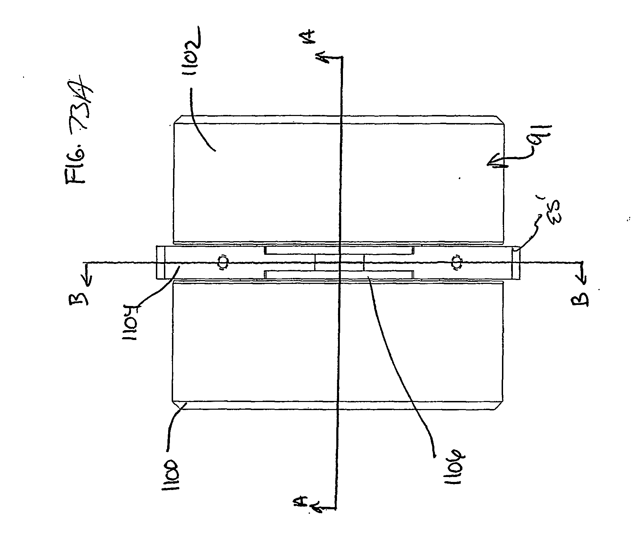

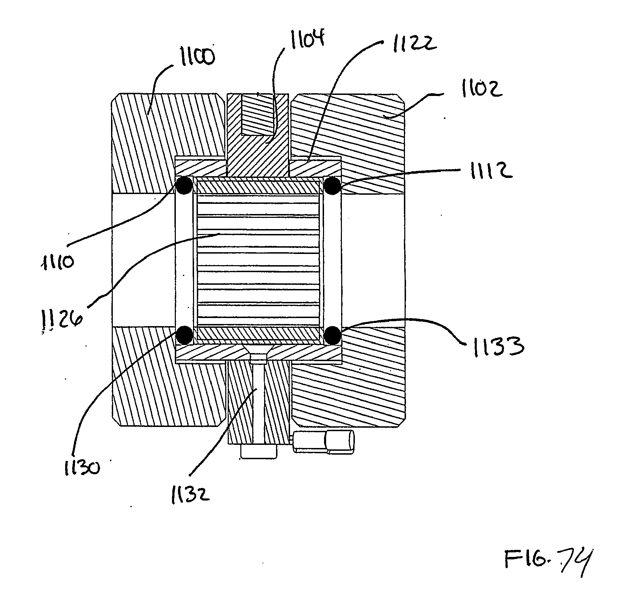

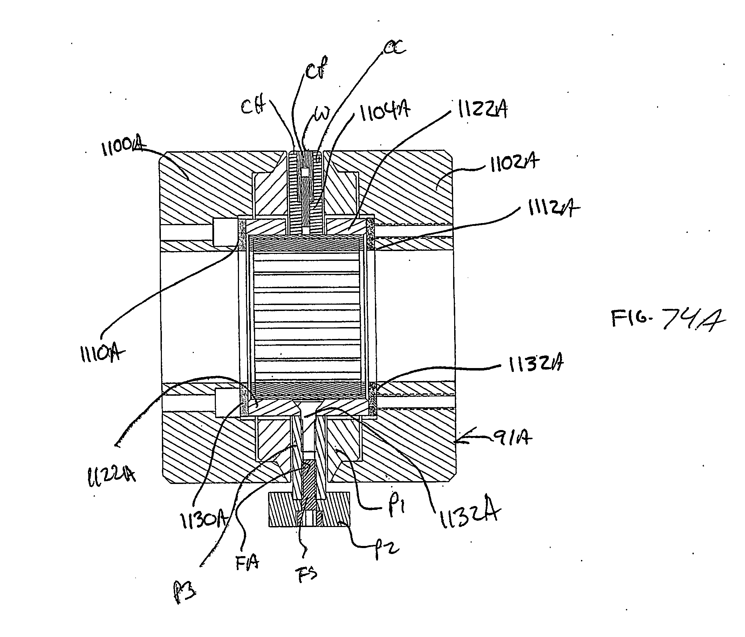

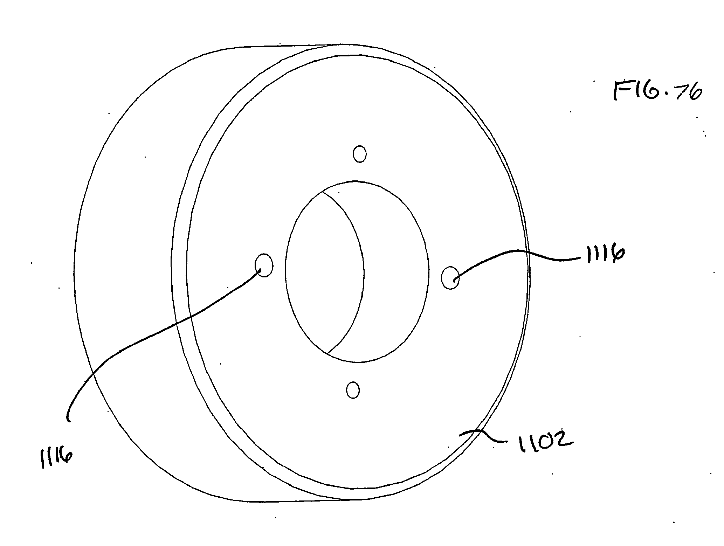

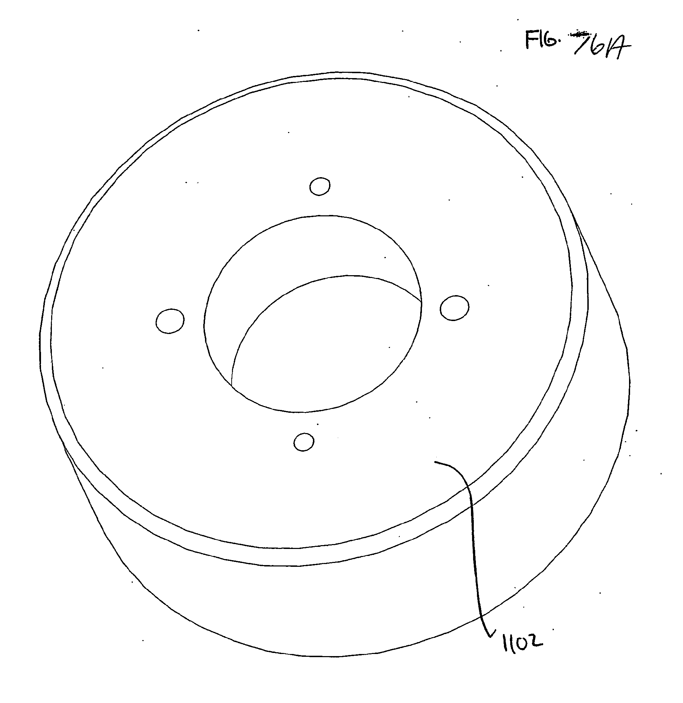

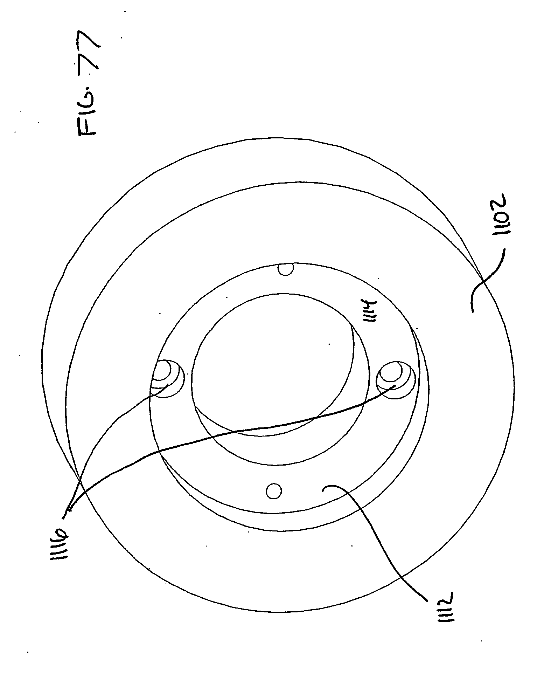

Figures 71 to 77 illustrate in greater detail a preferred embodiment for edge seal assembly 91AS featuring first and second sub-rollers 1100 and 1102 and edge seal arbor mechanism 1104 having arbor assembly 1106 on the film contact side of the driven roller and arbor base 1108 on the opposite side. Figure 74 illustrates that each sub-roller 1100 and 1102 has a pocket cavity 1110 and 1112. Figures 76 and 77 illustrate sub-roller 1102 with pocket cavity and with the cavity interior surface 1114 having a pair of screw holes 1116 spaced circumferentially (diametrically) around it, that open out at the other end as shown in Figure 151. Thus, edge seal roller 1102, which is positioned on the side of the edge seal 91 1 that is closest to the center of elongation of shaft 72, is attached to adjacent driven sub-roller 76b by insertion of screws SC (Fig. 70) through screw or fastener holes 1116 and into receiving thread holes formed in driven sub-roller section 76b. This arrangement thus ensures that the sub-roller 1102 will not drag with the edge seal unit, causing it to rotate more slowly than the rest of the driven nip rollers. Sub rollers 76a and 76b are each secured to shaft 72 with a fastener as shown in Fig. 70 as is roller 74. The edge seal sub-roller 1100 positioned on the outer side closest to the adjacent most end of driven shaft 72 is attached to the closest ' of the shaft collars (in Fig. 70) 1120 positioned at the end of driven shaft 72 and secured to the shaft to rotate together with it. Shaft collar 1120 forces edge seal sub roller 1100 to also rotate as a unit with the shaft 72 in unison with sub-roller 1102 but is independent of that sub- , roller except for the common connection to shaft 72.

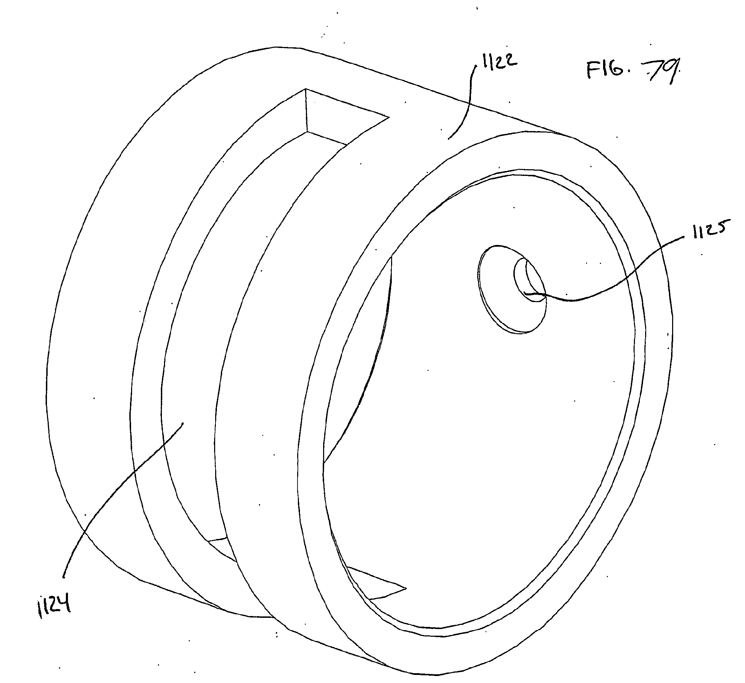

Figure 74 shows that extending within and between pocket cavities 1110 and 1112 is edge seal sleeve 1122 which is shown alone in Figure 79 and functions as a means for providing a site of attachment for the edge seal base 1108 and a positioner for arbor assembly. Sleeve 1122 includes a cylindrical housing having an axially centrally positioned slot 1124 that extends circumferentially around for ½ of the circumference of the sleeve 1122 and occupies about a third of the entire axially length of sleeve 1122. Sleeve 1122 further includes fastener hole 1125 positioned on the solid side of sleeve 122 diametrically opposite to slot 1124. In addition to locating arbor base 1108, sleeve 1122 further functions as means for supporting cylindrical roller bearing 1126 which is preferably secured by way of a press fit into the sleeve and arranged so that the driven shaft 72 runs through the center of the bearing 1126 and the large radius on the bottom surface of the arbor assembly rests on the exposed (slot location) surface of the bearing's outside diameter. Rollers 1128 or other bearing friction reduction means are arranged around the interior or inside diameter of the roller bearing and protect the surface of the bottom surface of arbor assembly so that the arbor assembly is unaffected by the rotating shaft and thus not worn down by that rotation. This provides for the feature of precision positioning and maintenance of the compression depth of the below described edge seal wire into the surface of the elastomeric or compressible material of the opposite drive roller 84 (Fig. 7) to be maintained which provides for high quality seals to be formed and extends the life of arbor assembly 1106. In other words, the seal compression depth, which controls the length of the sealing zone (and venting zone) and the pressure of the sealing wire on the film has a significant influence in the quality of the edge seal. Figure 74 further illustrates seal rings 1130, 1133 positioned around the opposite axial ends of bearing 1126.

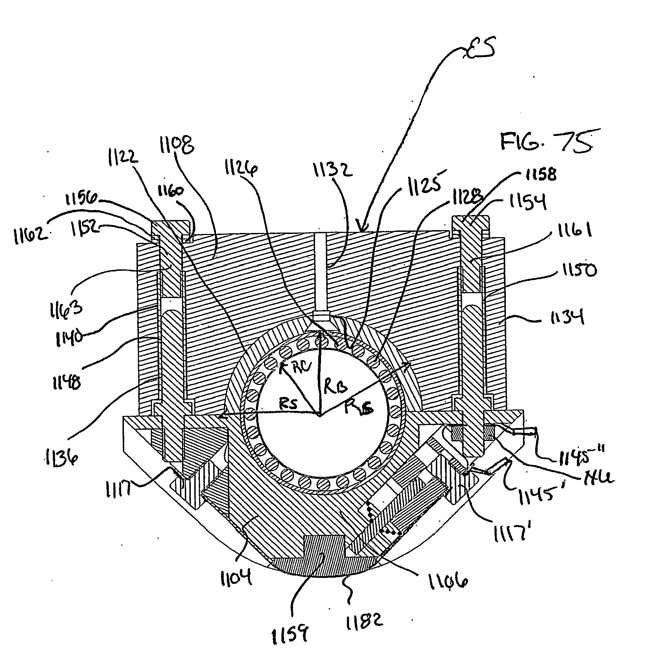

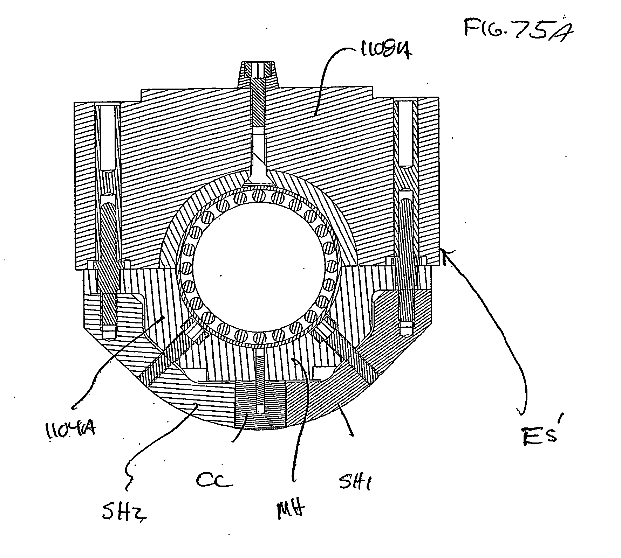

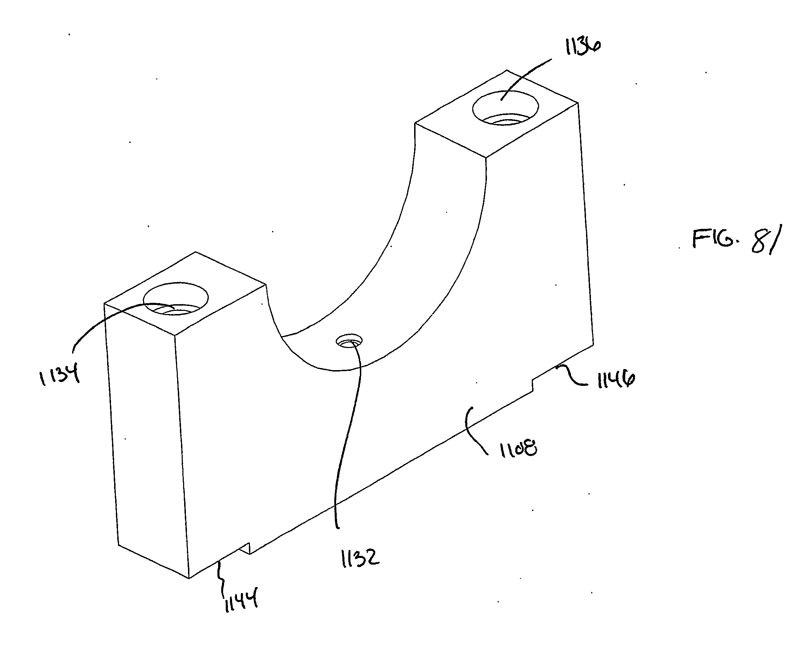

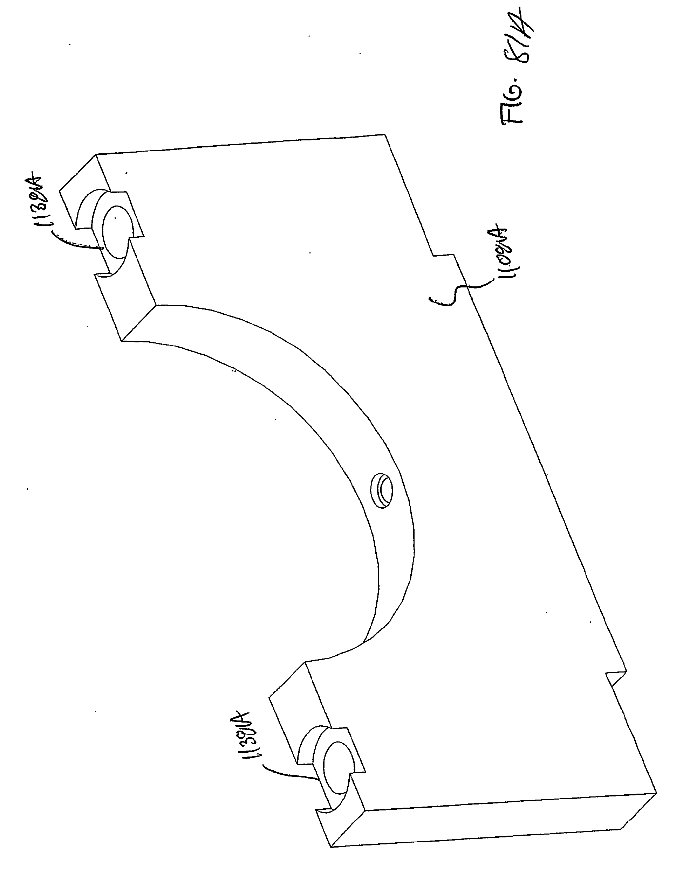

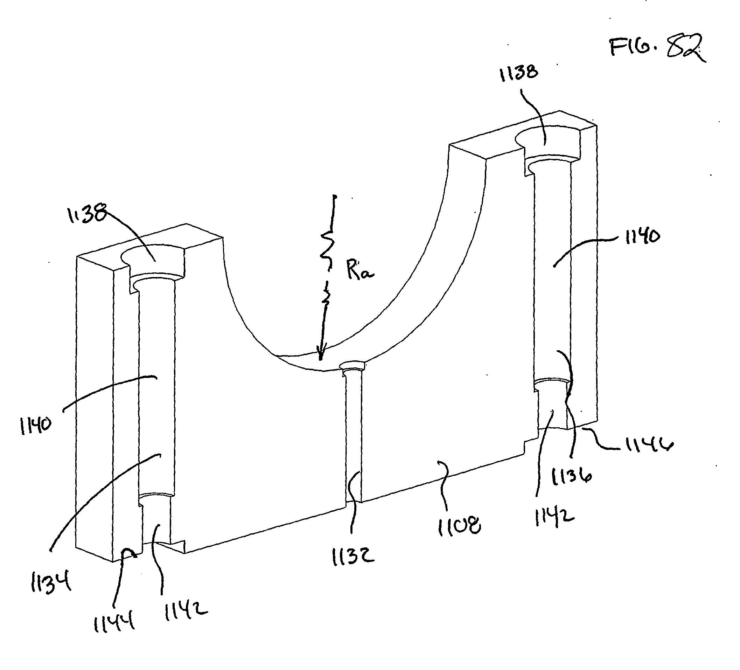

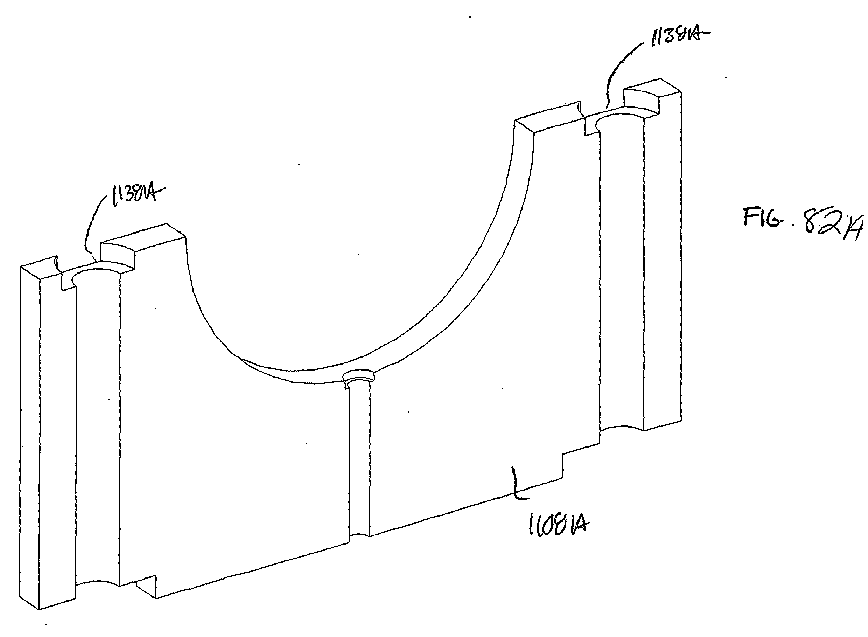

Figures 81 and 82 illustrate arbor base 1108 of edge seal arbor mechanism 1104 with Figure 82 showing a cross section taken along cross section vertically bisecting the arbor base shown in Figure 81. Arbor base 1108 functions as an edge seal base unit to provide a mounting base for arbor assembly 1106. As shown in Figure 75 arbor base 1108 has a central semi-circular recess that has radius Ra which is the same as the radius Rs of the exterior of sleeve (Fig. 75). The interior radius RB of sleeve 1122 conforms to the exterior radius of bearing 1126 and with the interior radius of bearing 1126RC conforms to the exterior radius of shaft 72 such that the edge seal unit is able to stay in place as the roller bearings accommodate the rotation of shaft 72 and as the adjacent sub-rollers 1100 and 1102 rotate. Arbor base 1108 is formed of an insulative material such as Acetyl plastic which is machined to have the illustrated configuration. Fastener hole 1125 in sleeve 1122 is also in line with fastener passage 1132 formed in arbor base 1108 such that sleeve can be mounted to the arbor base 1108 with a small flat head screw, for example. Figure 82 also shows electrical pin reception passageways 1134, 1136 formed in the enlarged side wings of arbor base 1108 with each having an enlarged upper passageway section 1138 (Fig. 82) which opens into an intermediate diameter inner passageway 1140 which in turn opens into a smaller diameter lower passageway section 1142. The lower passageway section 1142 opens out at the bottom into notch recesses 1144 and 1146.

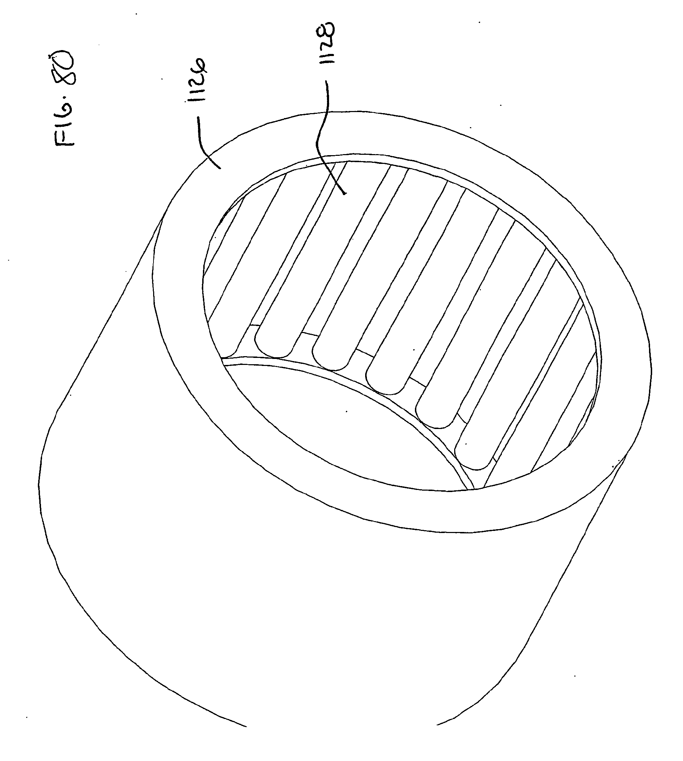

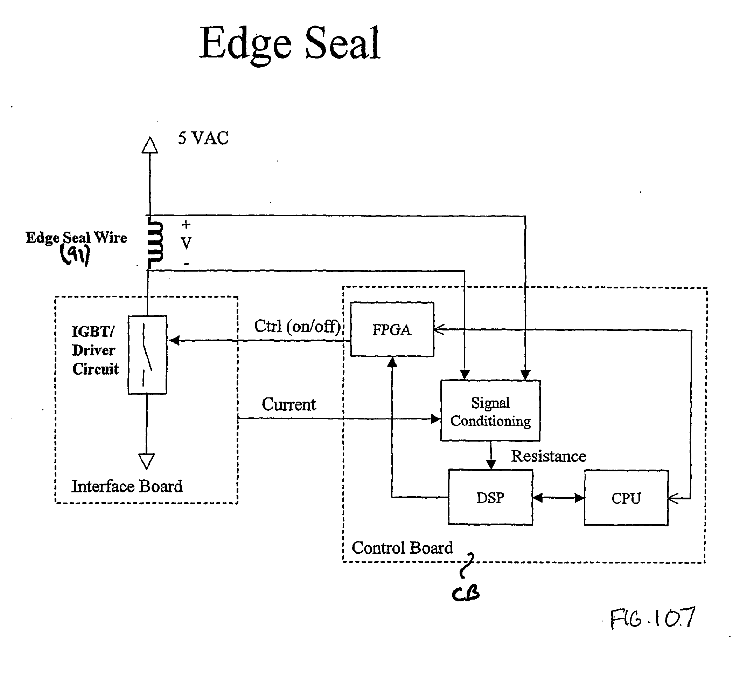

Figure 80 further illustrates elongated cylindrical, electrically conductive contact socket sleeves 1148 and 1150 nested in intermediate passageway 1140 for each of the passageways 1134 and 1136. Socket sleeves 1148 and 1150 are dimensioned for mating with bottom electrical contact pins 1152 and 1154 having enlarged heads 1156, 1158 for sandwiching electrical contact leads 1160, 1162 and 160', 1162' to the base edge of the arbor base provided within a respective one of notched recesses 1144 and 1146. Thus the electrical contact leads 1160, 1160' and 1162, 1162' are held in position and placed into electrical communication (e.g., power and/or sensing electrical lines) with the interior of sleeves 1148 and 1150 via respective contact pins 1152 and 1154. Figure 107 illustrates the control sub-system for controlling and monitoring the performance of edge seal 91.

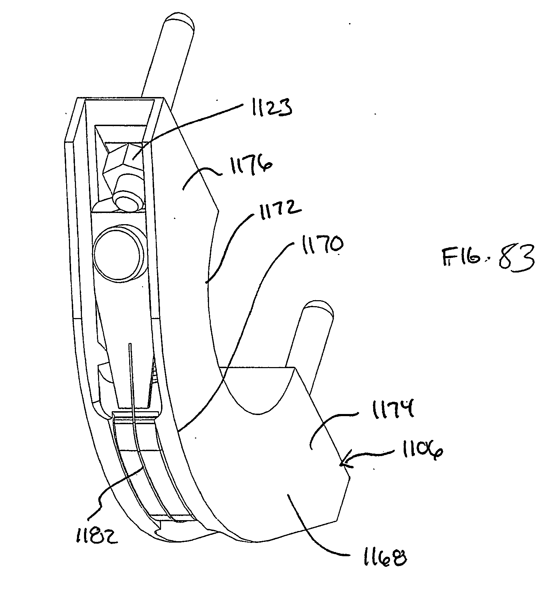

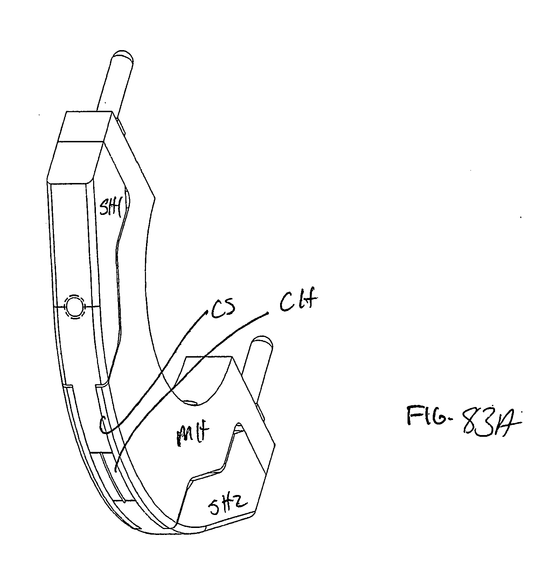

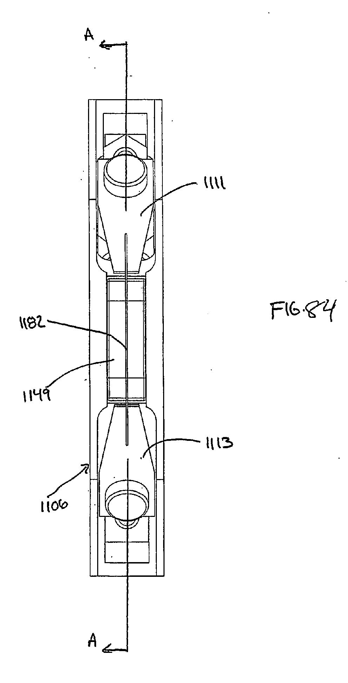

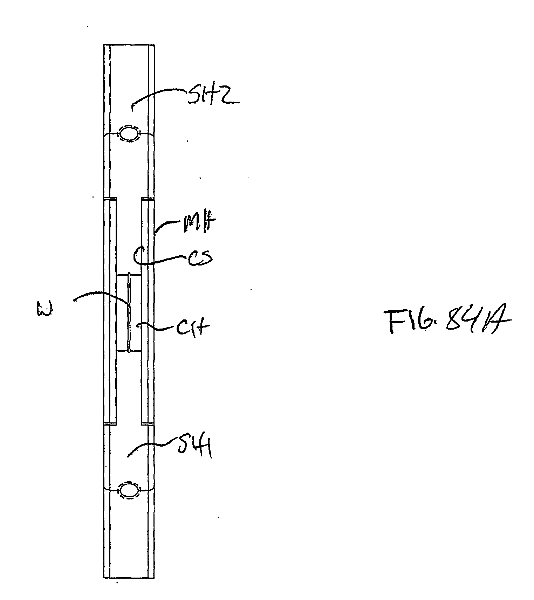

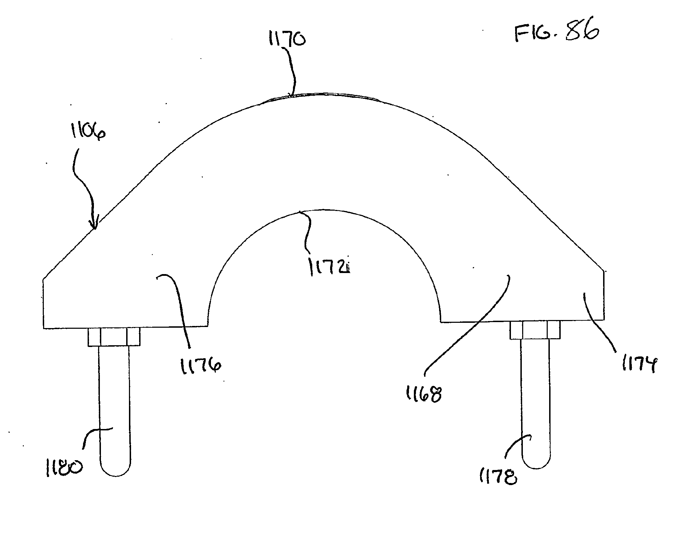

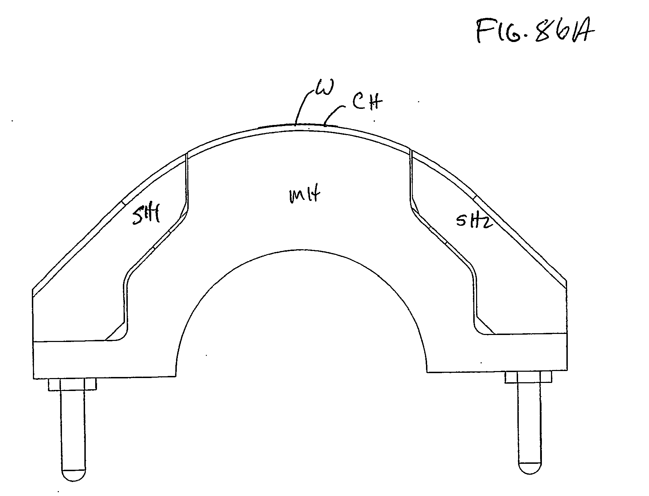

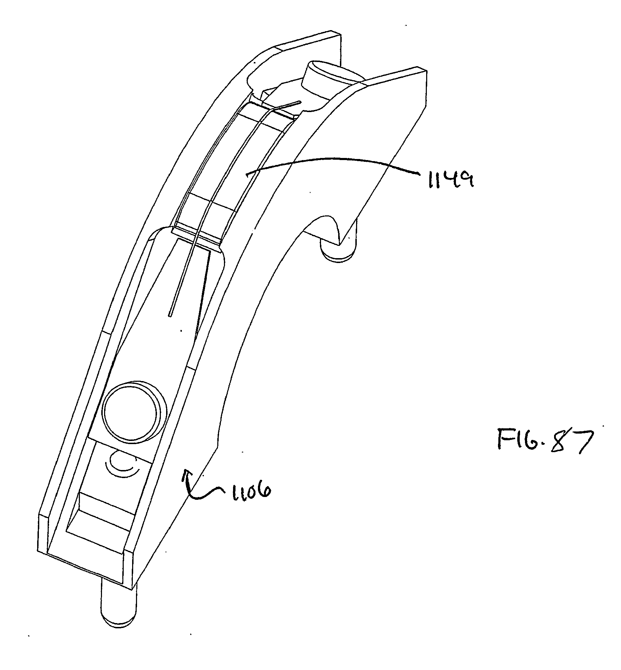

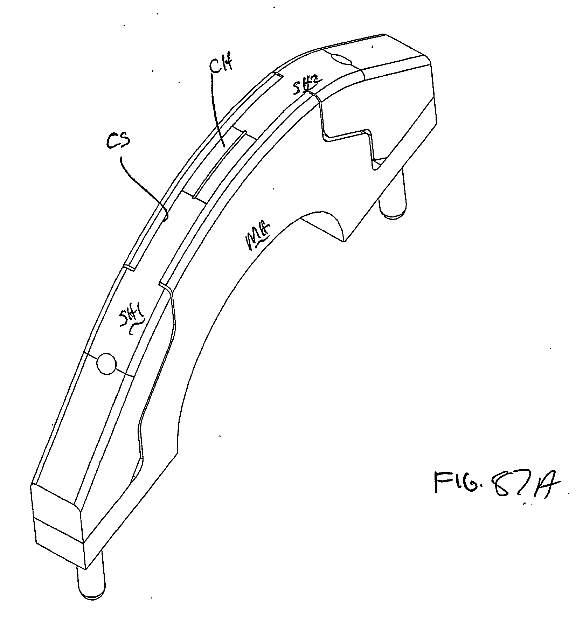

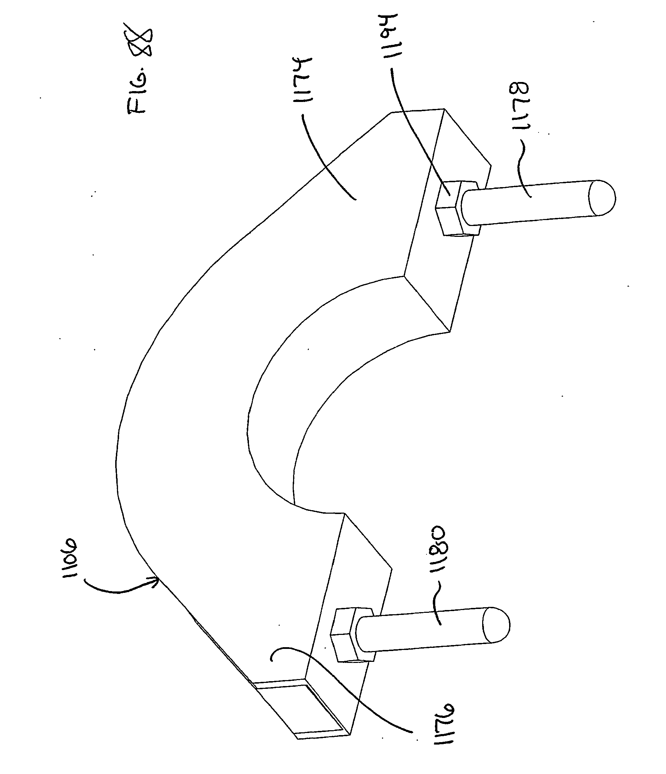

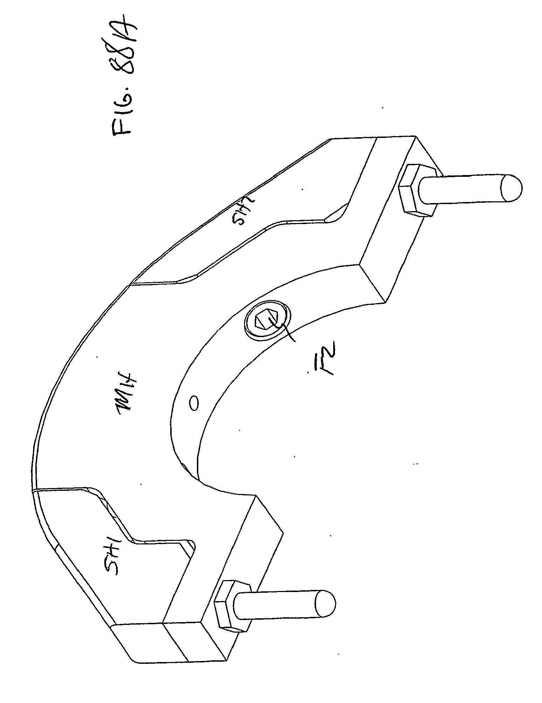

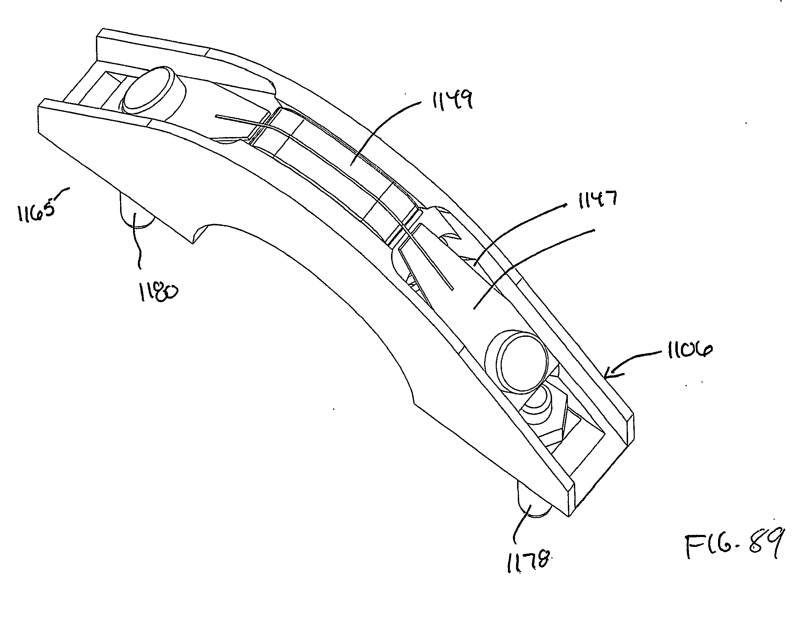

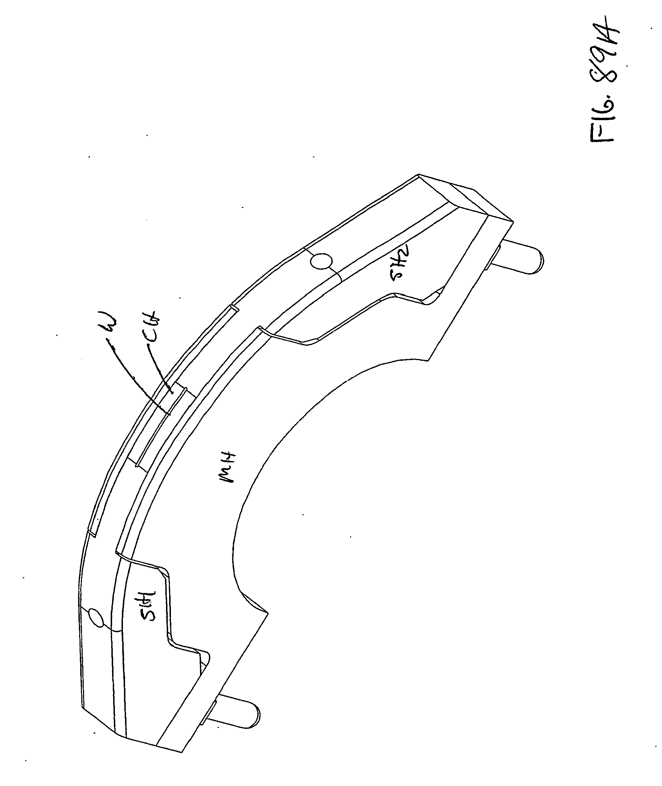

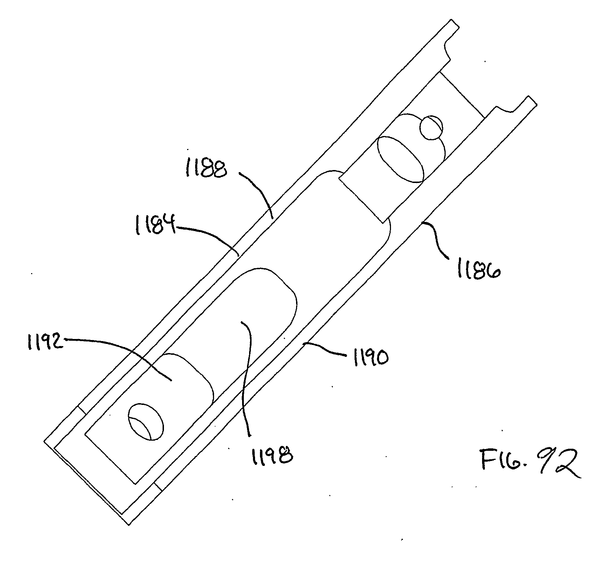

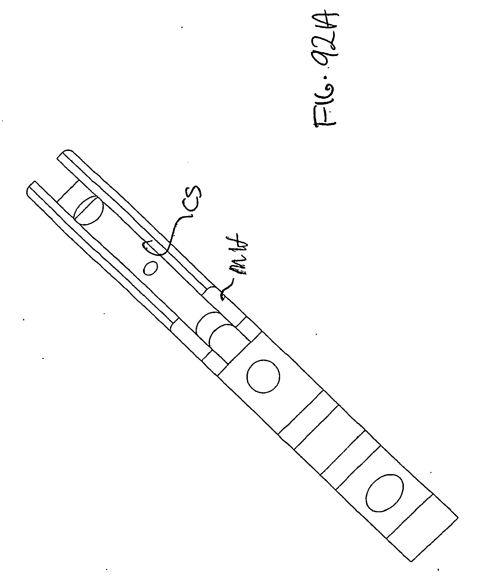

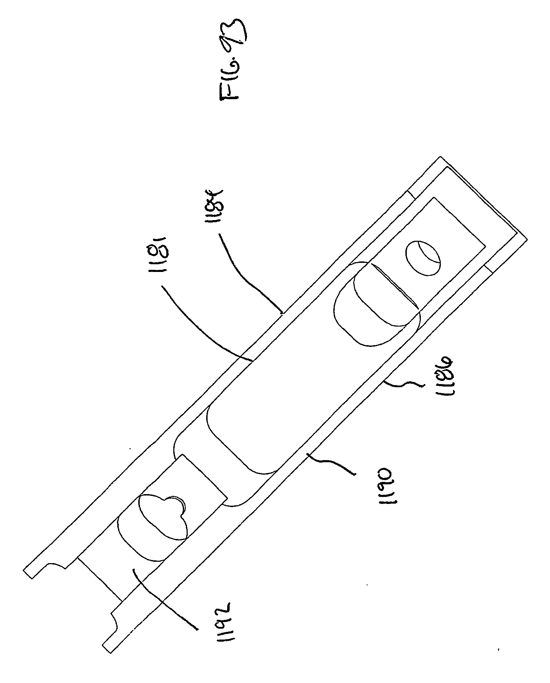

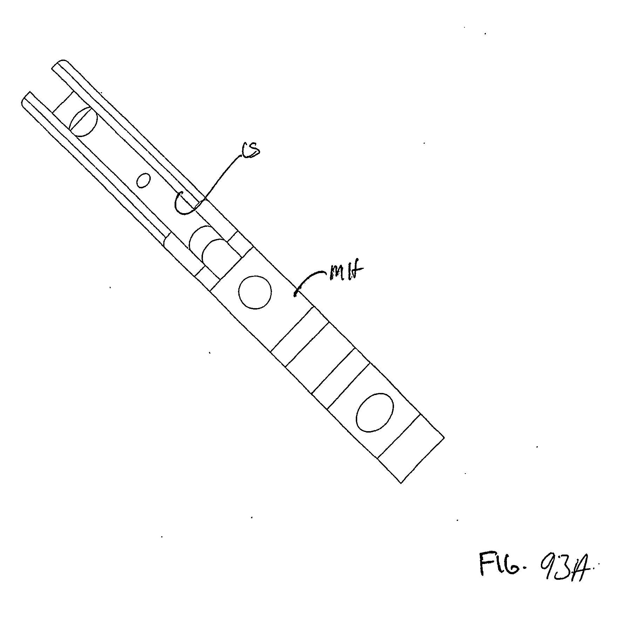

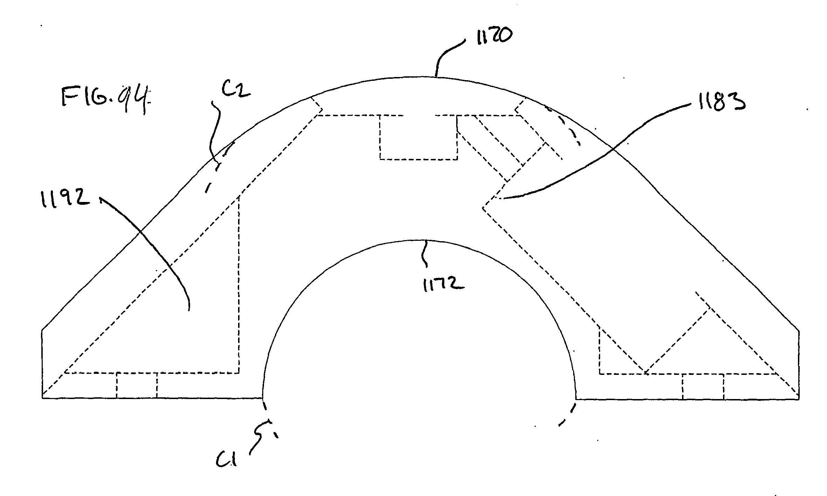

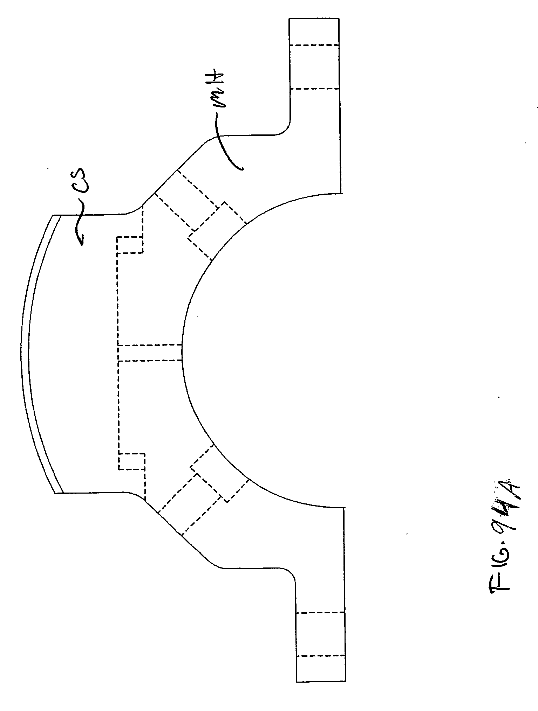

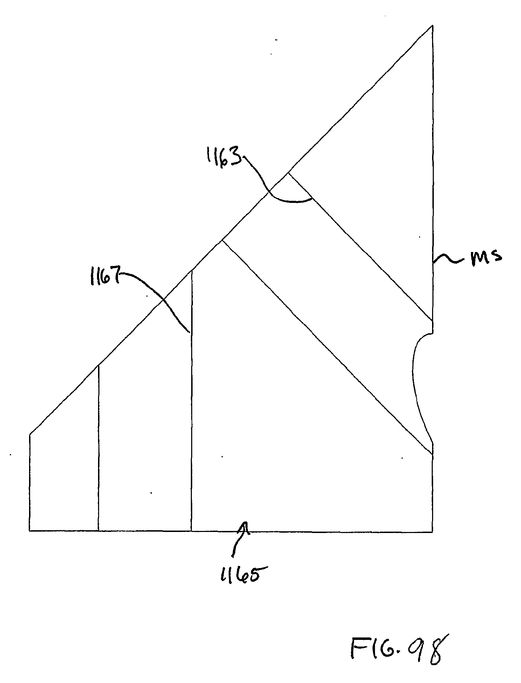

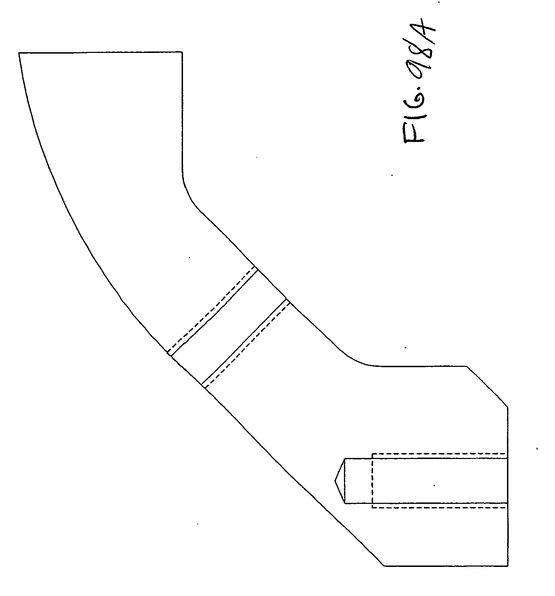

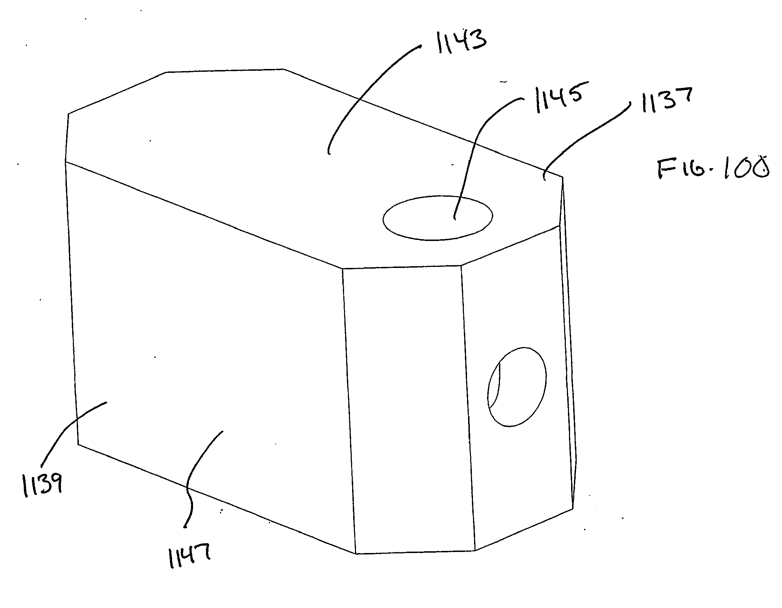

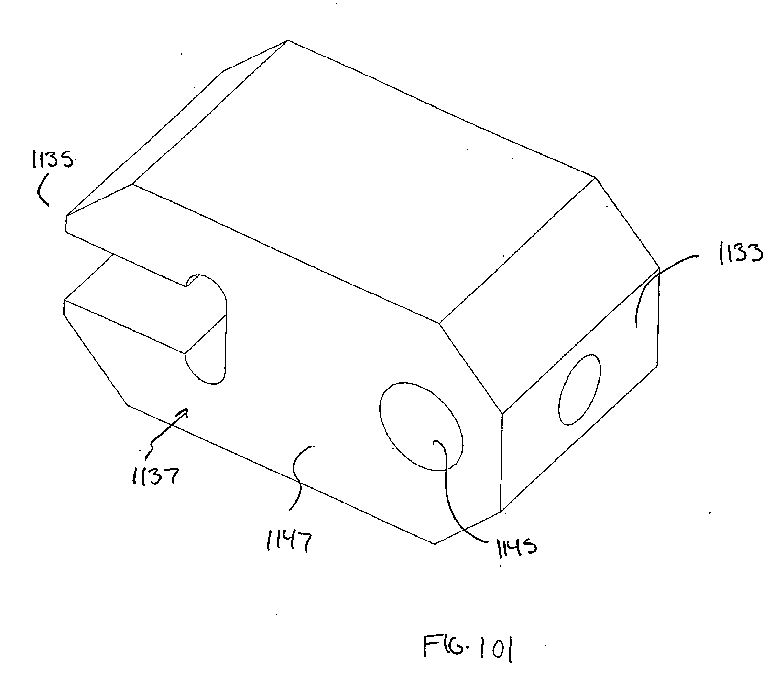

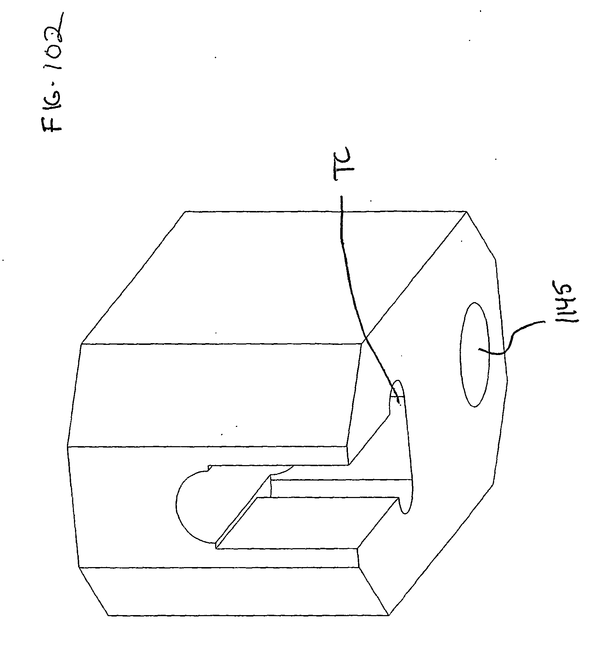

Figures 83 to 104 provide illustrations of a preferred embodiment of edge seal arbor mechanism 1104 which functions to position an edge seal wire 1182 in a stationary and contact state relative to film being fed therepast and which is designed to provide a high quality edge seal in the bag being formed. Edge seal arbor mechanism 1104 comprises arbor assembly 1106 and the aforementioned arbor base 1108. Figures 83 to 89 illustrate arbor assembly 1106 having arbor housing 1168 having an outer convex upper surface 1170, central bottom concave recessed area 1172 conforming in curvature to the exterior diameter of bearing 1126 and outer extensions 1174 and 1176 which extend out to a common extent or slightly past the wing extensions of arbor base 1108. Figure 94 illustrates a preferred arrangement for the intermediate portion of upper convex surface or profile for housing 1170 (between the straight slope sections as in 1188" described below) and concave lower surface 1172 which share a common center of circle and with Figure 94 illustrating in part concentric circles by way of concentric sections C1 and C2 (e.g., diameters for example, of 3.2 cm (1.25 inch) for C1 and 6.4cm (2.5) for C2 partially shown in Fig. 94 with dashed lines).

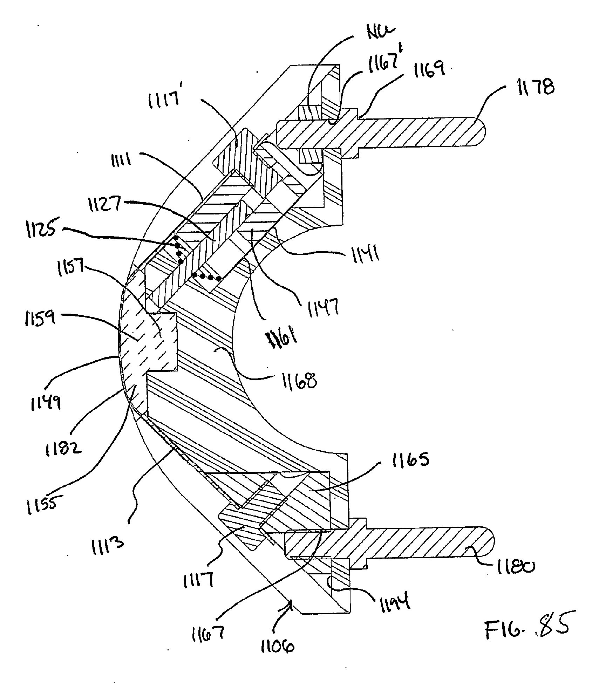

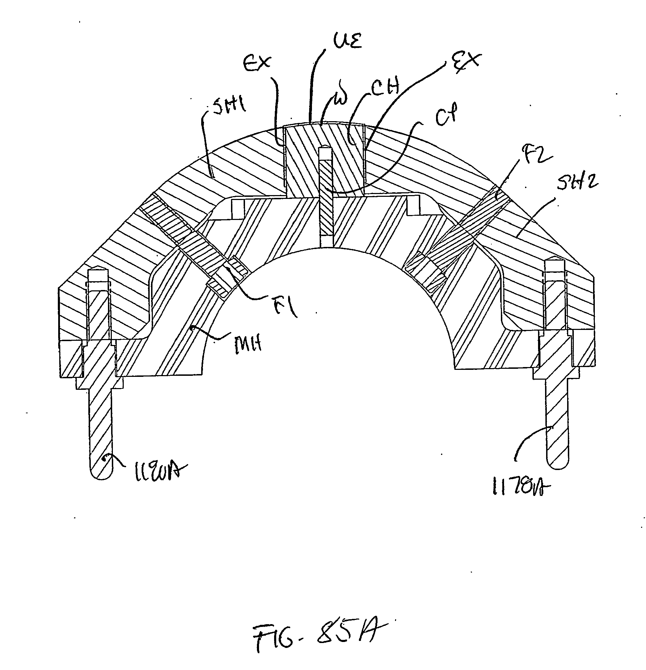

As shown in the cross-sectional view of Figure 85, arbor assembly 1106 further comprises contact pins 1178 and 1180 extending down from respective outer sections I 174 and 1176, and sized to provide a friction fit connection in the arbor base 1108 in making electrical connection with respective electrical contact sleeves 1148 and 1150. Pins 1178 and 1180 are preferably very low in resistance so as to minimize alterations in the below described sensed parameters associated with the edge seal heater wire 1182 being powered ₁ via the connector pins 1178 and 1180, which are preferably of similar design as the plugs 1068 (Fig. 68) used in the end seals/cutter wires. A suitable connector features the gold sided flex pin connectors available from the Swiss Company "Multicontact" having a very low ohm characteristic. Thus, as shown by Figs. 71 and 75, two lead wires extend out from each of the insertion holes for pins 1178 and 1180 powering the heater wire. Lead lines 1160 and 1160' are preferably the power source lines and more robust than parallel sensor lines 1162, 1162' which are less robust as they are designed merely as a sensor wire leading to the control center for determination of the temperature of the edge seal heater wire. A similar arrangement is utilized for each of the seal/cut bag end heater wires 1046, 1048, 1050.

The edge seal system of the present invention provides for the measurement and control of the temperature of the seal wire (e.g., the edge seal wire and cross-cut/seal wire(s)). This is achieved through a combination of metallurgic characteristics and electronic control features as described below and provides numerous advantages over the prior art which are devoid of any direct temperature control of the sealing element. The arrangement of the present invention provides edge sealing that is more consistent, shorter system warm-up times, more accurate sizing of the gas vents (e.g., a heating to melt an opening or a discontinuance of or lowering of temperature during edge seal formation, longer sealing element life, and longer life for the wire substrates and cover tapes).

Under a preferred embodiment of the present invention control is achieved by calculating the resistance of the sealing wire, by precisely measuring the voltage across the wire and the current flowing through the wire. Once the current and the voltage are known, one can calculate wire resistance by the application of Ohm's law:

$$\text{Resistance = Voltage / Current or R = V/I}$$

Voltage is preferably measured by using the four-wire approach used in conventional systems, which separates the two power leads that carry the high current to the seal wire, from the two sensing wires that are principally used to measure the voltage. In this regard, reference is made to the above disclosure regarding the use of low ohm connector plugs to avoid interference with sensed voltage and current readings and the discussion above concerns leads 1060, 1060', 1062 and 1062', two of which provide the wires for sensing.

This technique of using finer sensor wires eliminates the voltage loss caused by the added resistance of the power leads, and allows a much more accurate measurement of voltage between the two sensing wire contact points. This feature of avoiding potentially measurement interfering added resistance is taken into consideration under the present invention as the measurements involve very small resistance changes, in the milliohm range, across the sealing wire (e.g., .005 Ω). While this discussion is directed at the monitoring and controlling of the edge seal wire, the same technique is utilized for the cross-cut and cross-seal wires.

Under a preferred embodiment, current is calculated by measuring the voltage drop across a very precise and stable resistor on the control board and using Ohm's law one more time. The voltage and current data is used by the system controls to calculate the wire resistance in accordance with Ohm's law. Resistance is preferably calculated by the ultra fast DSP chips (Digital Signal Processing) on the main control board, which are capable of calculating resistance for a sealing wire thousands of times per second.

To determine and control temperature (e.g., changes in duty cycle in the supplied current), the measured resistance values must be correlated to wire temperatures. This involves the field of metallurgy, and a preferred use of the temperature coefficient of resistance ("TCR") value for the seal wire utilized.

TCR concerns the characteristic of a metallic substance involving the notion that electrical resistance of a metal conductor increases slightly as its temperature increases. That is, the electrical resistance of a conductor wire is dependant upon collisional process within the wire, and the resistance thus increases with an increase in temperature as there are more collisions. A fractional change in resistance is therefore proportional to the temperature change or

$$\frac{\Delta R}{R_0} = \alpha \Delta T$$ with "$\alpha$" equal to the temperature coefficient of resistance or "TCR" for that metal.

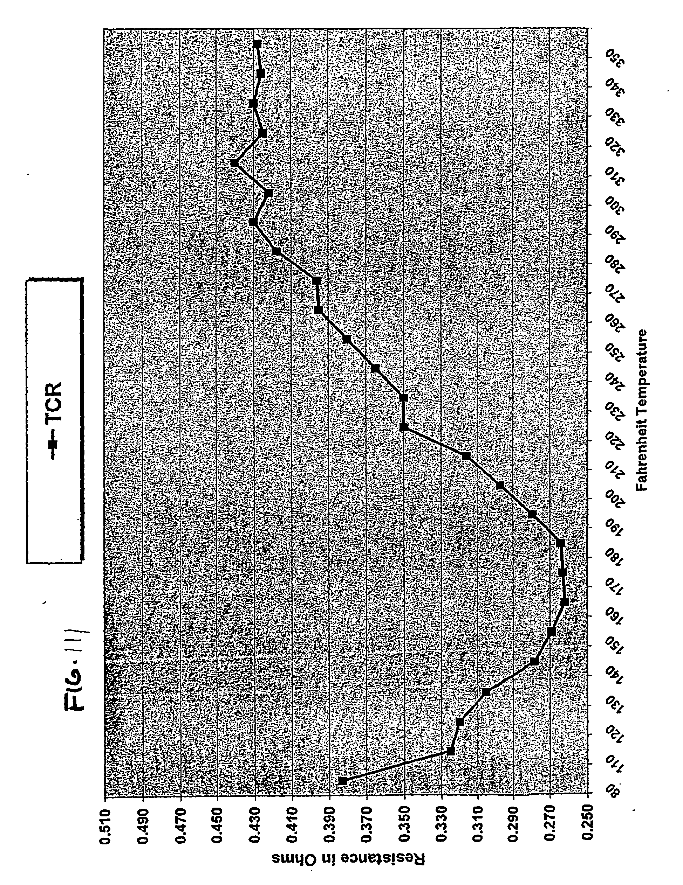

The relationship between temperature and resistance is almost (but not exactly) linear in the temperature range of consequences as represented by Figure 111 (e.g., 177 to 204°C (350 to 400°F) sealing temperature range and 193 to 218°C (380 to 425°F) cutting temperature range for typical film material). The control system of the present invention is able to monitor and control wire temperature because it receives information as to three things about every seal wire involved in the dispenser system (edge seal and end seal/cut wires).

(1) The electrical resistance of the wire involved at the desired sealing temperature (this is achieved by choosing wires that provide a common resistance level at a desired heating wire temperature set point (with adjustment possible with exceptence of some minor deviations due to the non-exact linear TCR relationship)).
(2) Approximate slope of the resistance vs. temperature curve at sealing temperature; and
(3) The measured resistance of the wire at its current conditions.

Thus, in controlling the edge seal wire under the present invention there is utilized a technique designed to maintain the seal wire at its desired resistance during the sealing cycle. This in turn maintains the wire at its desired temperature since its temperature is correlated with resistance. The slope of the R vs. T curve or data mapping of the same can also be referenced if there is a desire to adjust the setpoint up or down from the previous calibration point calibrated for a wire at the set point temperature (e.g., an averaged straight line of a jagged slope line). Initial wire determination (e.g., checking whether wire meets desired Resistance versus Temperature correlation) preferably involves heating the wires in an oven and checking to see whether resistance level meets desired value. Having all wires being used of the same resistance at the desired sealing temperature setpoint greatly facilitates the monitoring and control features but is not essential with added complexity to the controller processing (keeping in mind that a set of wires sharing a common resistance value at a first set point temperature may not have the same resistance among them at a different set point temperature due to potentially different TCR plots), In this regard, reference is made to Figure 199 illustrating a testing system for determining temperature versus resistance values for various wires. The test system shown in figure 199 is designed to determine the resistance of the wires at three temperatures, Ambient 93°C (200F) and 177°C (350F). This test was performed on wires in a "Tenney" thermal chamber (from Tenney Environmental Corp.) at the desired temperature. The instrumentation used to measure the resistance was an Agilent 34401A Digital multimeter using 4-Wire configuration. Temperature measurements were taken with a thermocouple attached to the wire under test Temperature measurement was taken using the Omega HH509R instrument. Ambient temperature was set at 74.6F. (The Fluke measurement device being replaceable with the same Omega model).

As can be seen from the forgoing and the fact that different metals and alloys have different TCR's, the proper choice of metal alloy for the sealing element can greatly facilitate the controlling and monitoring of sealing wire temperature. For a desired level of accuracy, the wire must deliver a significant resistance change so that the control circuits can detect and measure something. The above described controller circuit design can detect changes as small as a few milliohms. Thus, there can successfully be used wires with TCR's in the 10 milliohm/ohm/degF range.

Some currently commonly used wire alloys, like Nichrome, are not well suited for the wire temperature control means and monitoring means of the present invention because they have a very small TCR, which means that their resistance change per degree F of temperature change is very small and they do not give the preferred resolution which facilitates accurate temperature control. On the other hand, wires having two large TCR jumps in relation to their power requirements (also associated with resistance and having units ohms/CMF) can lead to too rapid a bum out due to the avalanching of hot spots along the length of the wire which is a problem more pronounced with longer cross-cut wires as compared to the shorter edge seal wires used under the present invention. For the edge seal of the present invention, an alloy called "Alloy 42" having a chemical composition of 42 Ni, balance Fe with (for resistivity at 20°C) an OHMS/CMF value of 390 and a TCR value .0010 $\Omega/\Omega/°C$ is suitable. Alloy 42 represents one preferred wire material because it has a relatively high, (yet stable) TCR characteristic. The edge seal wire has improved effectiveness when length is ½ inch or less in preferred embodiments. Another requirement of the chosen edge seal wire is consistency despite numerous temperature cycle deviations, which the Alloy 42 provides.

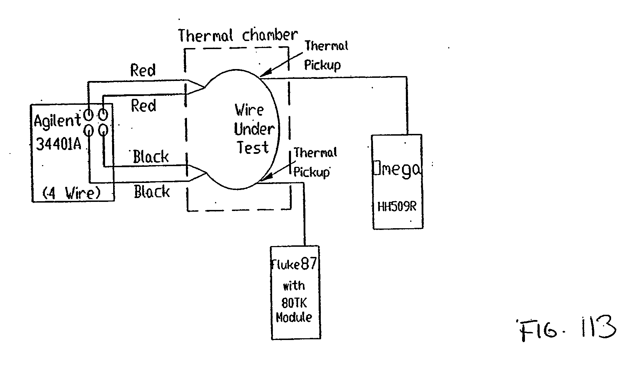

For lower seal heat requirements, there is the potential for alternate wire types such as MWS 294R (which has shown to have avalanche problems when heated to too high a level) and thus has limited usage potential and thus is less preferred compared to Alloy 42 despite its higher TCR value as seen from Table II. As an example of determining TCR wire characteristics, Table I below illustrates the results of tests conducted on a one inch piece of MWS 294R wire. The testing results are shown plotted in Figure 113.

**TABLE I**

| EDGE SEAL WIRE MWS 294R | | | | |
|---|---|---|---|---|
| TEMP | RES | | TEMP | RES |
| AMB. | .383 | | 230F | .350 |
| 110F | .325 | | 240F | .365 |
| 120F | .320 | | 250F | .380 |
| 130F | .305 | | 260F | .392 |
| 140F | .278 | | 270F | .396 |
| 150F | .269 | | 280F | .418 |
| 160F | .262 | | 290F | .430 |
| 170F | .263 | | 300F | 422 |
| 180F | .264 | | 310F | .440 |
| 190F | .279 | | 320F | .425 |
| 200F | .297 | | 330F | .430 |
| 210F | .316 | | 340F | .426 |
| 220F | .350 | | 350F | .428 |
| | | | | |
| | | | | |

As seen from the above table for the typical heater wire levels, the MWS 294R wire (29 Ni, 17Co., balance Fe) shows a relatively large resistance jump per 5.6°C (10°F) temperature increases (with an increase of about .012 ohms per 5.6°C (10°F) being common in the plots set forth above and illustrated in Figure 111) and features an OHMS/CMF value of 294 as seen from Table II below setting forth some wire characteristics from the MWS® Wire Industry source. Using the testing device shown in Figure 113, a TCR plotting can be made and an X-axis to Y-axis correlation between desired temperature set point and associated resistance level can be made for use by the controller as it monitors the current resistance level of the wire and makes appropriate current adjustments to seek the desired resistance (temperature set point level). While Alloy 42 can be used for the cross-cut seal in certain settings, in a preferred embodiment a stainless steel ("SST 302") wire also available for NWS® Wire Industries is well suited to use as the cross-cut wire in providing sufficient TCR increases (TCR of .00017 - toward the lower end of the overall preferred range of .00015 to .0035, with a more preferred range, at least for the edge seals being .0008 to .0030, and with the preferred OHMS/CMF range being 350 to 500 or more preferably 375 to 400).

**TABLE II**

| MATERIAL | COMPOSITION | RESISTIVITY AT 20°C | | COEFFICIENT OF LINEAR EXPANSION BETWEEN 20-100°C | TENSILE STRENGTH | | POUNDS PER CUBIC INCH | APPROX MELTING POINT (°C) |
| | | OHMS/CMF | TCR 0-100°C | | MIN. | MAX. | | |
|---|---|---|---|---|---|---|---|---|
| MWS-875 | 22.5 Cr, 5.5 Al .5 Si? .1 C, bal. Fe | 875 | .00002 | .000012 | 105,000 | 175,000 | 256 | 1520 |
| MWS-800 | 75 Ni, 20 Cr, 2.5 Al, 2.5 Cu | 800 | .00002 | .000014 | 100,000 | 200,000 | .293 | 1350 |
| MWS 675 | 61 Ni, 15 Cr, bal. Fe | 675 | .00013 | .0000137 | 95,000 | 175,000 | 2979, | 1350 |
| MWS-650 | 80 Ni, 20 Cr | 650 | .00010 | .0000132 | 100,000 | 200,000 | .3039 | 1400 |
| Stainless Steel | 18 Cr, 8 Ni, bal. Fe | 438 | .00017 | .000017 | 100,000 | 300,000 | .286 | 1399 |
| ALLOY 42 | 42 Ni, bal. Fe | 390 | .0010 | .0000029 | 70,000 | 150,000 | .295 | 1425 |
| MWS-294 | 55 Cu, 45 Ni | 294 | .0002* | .0000149 | 60,000 | 135,000 | .321 | 1210 |
| MWS-294R | 29 Ni, 17 Co, bal. Fe | 294 | .0033 | .0000033 | 65,000 | 150,000 | .302 | 1450 |
| Manganin | 13 Mn, 4 Ni bal. Cu | 290 | .000015** | .0000-187 | 40,000 | 90,000 | .296 | 1020 |
| ALLOY 52 | 50.5 Ni, bal. Fe | 260 | .0029 | .0000049 | 70,000 | 150,000 | .301 | 1425 |
| MWS-180 | 22 Ni, bal. Cu | 180 | .00018 | .0000159 | 50,000 | 100,000 | .321 | 1100 |
| MWS-120 | 70 Ni, 30 Fe | 120 | .0045 | .000015 | 70,000 | 150,000 | .305 | 1425 |
| MWS-90 | 12 Ni, bal. Cu | 90 | .0004 | .0000161 | 35,000 | 75,000 | .321 | 1100 |
| MWS-60 | 6 Ni, bal. Cu | 60 | .0005 | .0000163 | 35,000 | 70,000 | .321 | 1100 |
| MWS-30 | 2 Ni, bal. Cu | 30 | .0013 | .0000165 | 30,000 | 60,000 | .321 | 1100 |
| Nickel 205 | 99 Ni | 57 | .0048 | .000013 | 60,000 | 135,000 | .321 | 1450 |
| Nickel 270 | 99.98 Ni | 45 | .0067 | .000013 | 48,000 | 95,000 | .321 | 1452 |

*TCR at 25-105°C
**TCR at 25-105°C
Note: Available in bare or Insulated

EP 1 625 003 B1

The temperature of the seal wire can be readily changed under the current invention by changing the duty cycle pulses of the supplied current within the range of 0 to 100%.

Maintaining the sealing wire at the correct temperature helps improve the consistency of the seals, since wire temperature is the main factor in producing seal in the plastic film. Other advantages of the present invention includes:

(A) Temperature controlling of the edge seal will not only improve sealing performance, it will also improve reliability since the present design can avoid the prior art problem of thermally stressing the components of the seal mechanism;

(B) The seal wire avoids overheating and damaging the substrates, cover tapes, or the wire itself, a problem which exists in prior art designs;

(C) The response time of the sensing circuit is extremely fast because the temperature sensor is the heater itself. The heater element and the temperature sensor are at the same temperature, which is ideal for accurate control.

(D) Thermal Lags and Overshoots are avoided. Even the smallest thermocouples, RTD's, or thermistors have longer response times than the response time available under the present invention.

(E) It no longer matters if the system is located in a hot factory or a cold factory. The seal wire temperature can be easily maintained consistent regardless, and the resultant seals will correspondly be the same. The ambient temperature was a significant problem with the prior art seal wire system designs that lack temperature control.

(F) Duty cycle will no longer be an issue, unlike prior art designs, wherein the higher the duty cycle the hotter the seal wire becomes noting that the seal wires run the coolest when they are first used after a long idle period leading to temperature variations in use which can have a noticeable affect on seal quality.

(G) A temperature-controlled wire will not overheat and produce the phenomenon called ribbon cutting. Ribbon cutting occurs when the wire gets so hot that it cuts right through the film instead of sealing the two layers together. Ribbon Cutting is quite common in the prior art designs and can be a cause of leaky bags.

(H) Vent sizing can be more accurate.

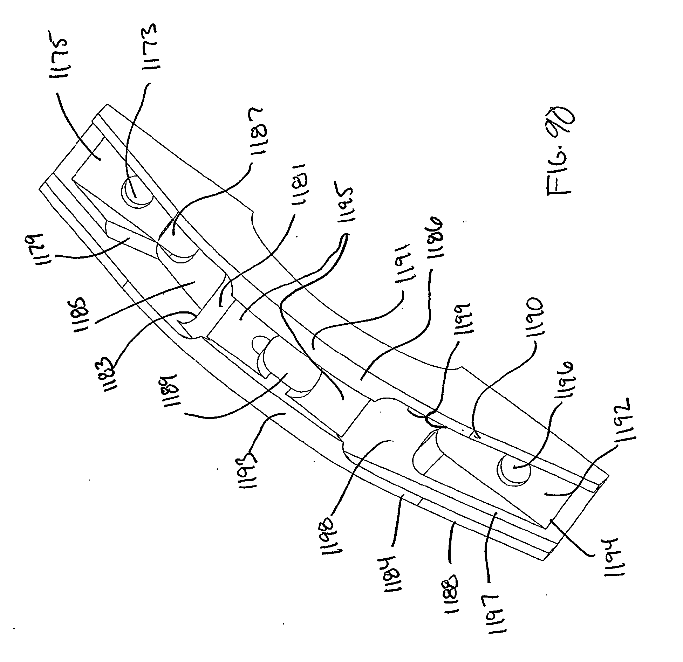

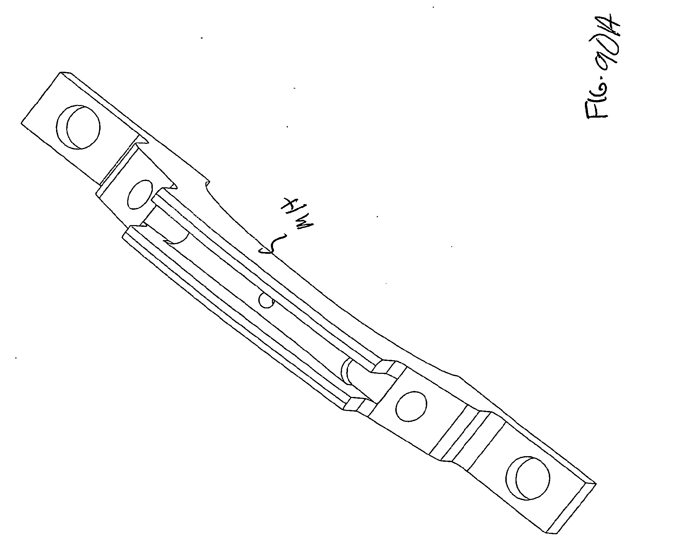

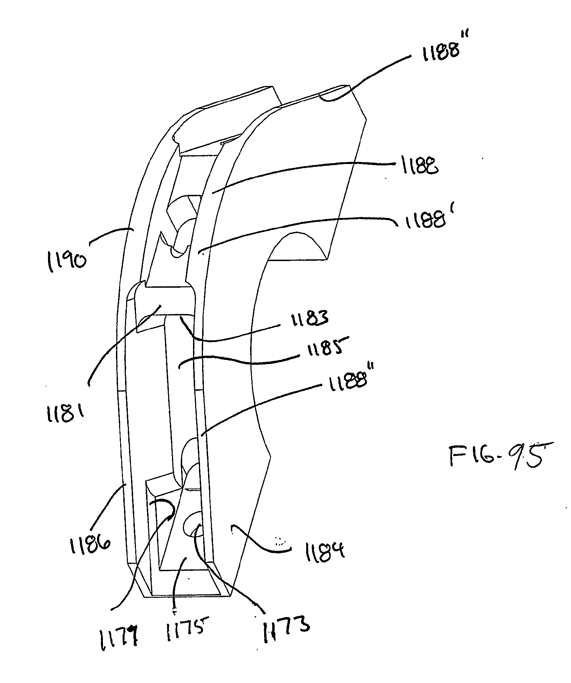

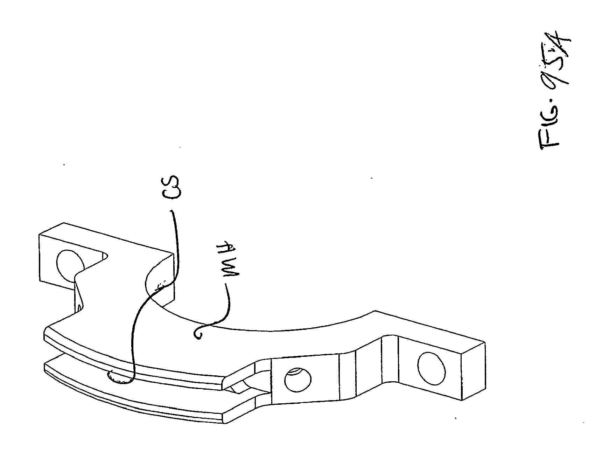

As described above, the thickness of arbor housing 1168 for the edge seal supporting the desired wire (e.g., one having resistance increase of .005 (more preferably .008) or more per 5.6°C (10°F) jump in temperature in the typical seal/cut temperature range of the film like that described above) is designed for insertion within slot 1124 in sleeve 1122. Figures 90 to 95 illustrate arbor housing 1168 with its bridge-like configuration having opposite side walls 1184 and 1186 with upper rims 1188 and 1190. As seen from Figure 95 each rim has a circular intermediate section represented by 1188' and straight edge sloping sections (opposite sides) represented by 1188" which place the arbor assembly components not involved in the compression edge seal wire function removed from the elastomeric drive roller. Between rims 1188 and 1190 there is provided a series of arbor assembly reception cavities. The illustrated reception cavities include non-moving end connector reception cavity 1192 having horizontal base 1194 with pin aperture 1196, and with cavity 1192 (Figure 90) being defined at its upper edge with enlarged base horse-shoe shaped rim 1198 being bordered on opposite sides by rails 1199 and 1197. Rim 1198 opens into intermediate reception cavity 1195 which is preferably a horizontal planar mount surface bordered by thicker side rail sections 1193 and 1191, Centrally positioned within intermediate cavity there is located central cavity 1189 which extends deeper into arbor housing 1168 than intermediate reception cavity 1195. As shown in Figure 90, to the opposite side of intermediate section, there is provided moving end connector reception cavity 1187 which includes sliding slope surface 1185 extending out from a transverse wall 1183 having an upper edge forming the outer edge of smaller based horse-shoe shaped rim surface 1181 having notched side walls bordered by sloped outer contact surfaces 1179, 1177 (Fig 90, 91). Further provided is second horizontal base surface 1175 with second pin aperture 1173 formed therein.

As shown in Figure 85, pin connectors 1178, have threaded upper ends with pin 1178 having its upper threaded end receiving nut 1169 below horizontal base 1194 and extended through house cavity 1167' and fixed in position with nut NU. Pin 1180 has it upper end threaded into a threaded cavity 1167 formed in non-moving connection block 1165 having a bottom flush with horizontal base 1194. Non-moving connector block 1165 has a configuration that generally conforms to the profile of cavity 1192 so that block 1165 slides either vertically or horizontally into and out of cavity 1192 but 1192 during installation, and after that is prevented from any appreciable movement in a side to side, inward or rotational direction.

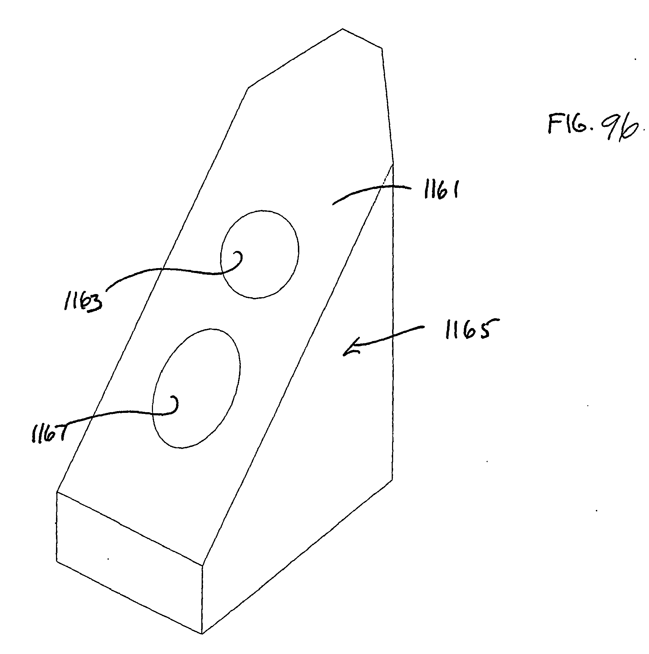

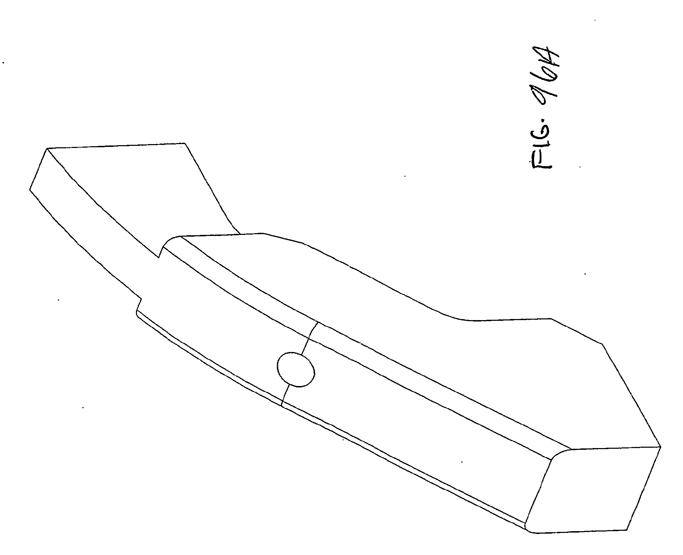

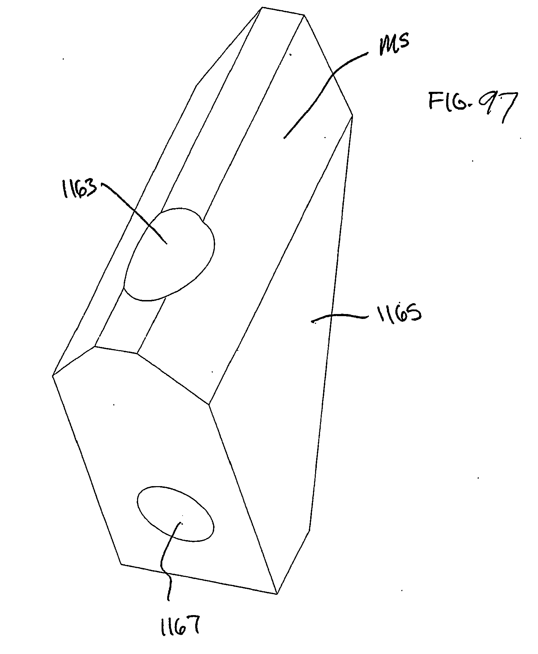

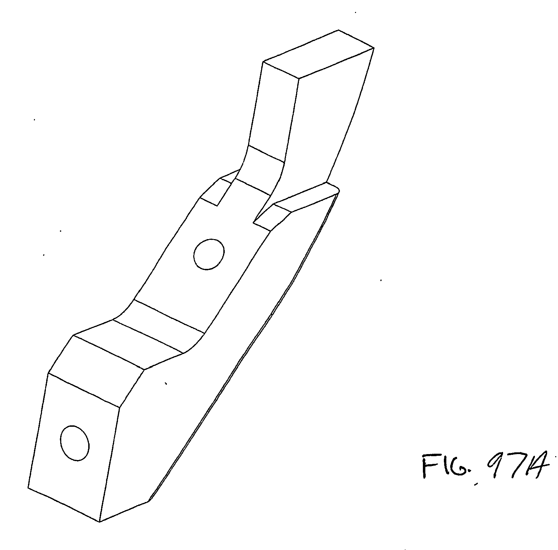

Figures 96 to 98 illustrate in perspective and in cross-section non-moving connector or mounting block 1165 and is preferably formed of a brass material. There is additionally formed in block 1165 sloping (down and in from an upper outward corner) reception hole 1163 having a central axis of elongation that extends transverse to the planar sloped surface 1161. As seen from Figure 97, the side edge from which reception hole 1163 opens is a multi-sided side edge MS.

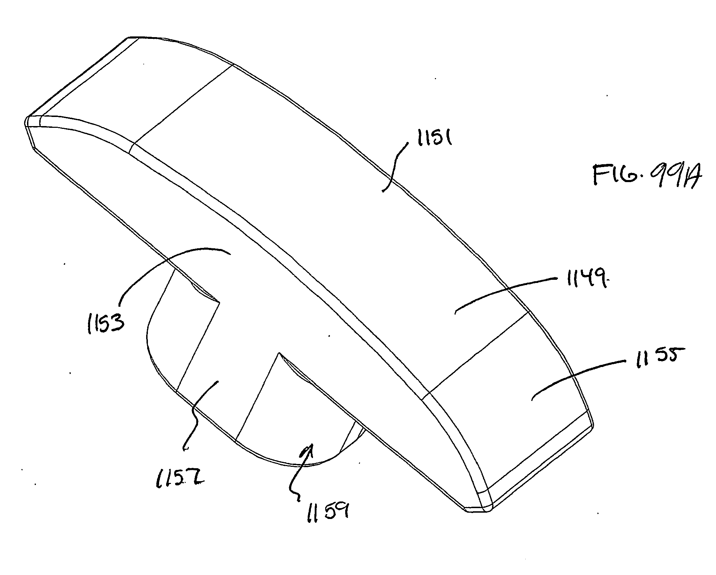

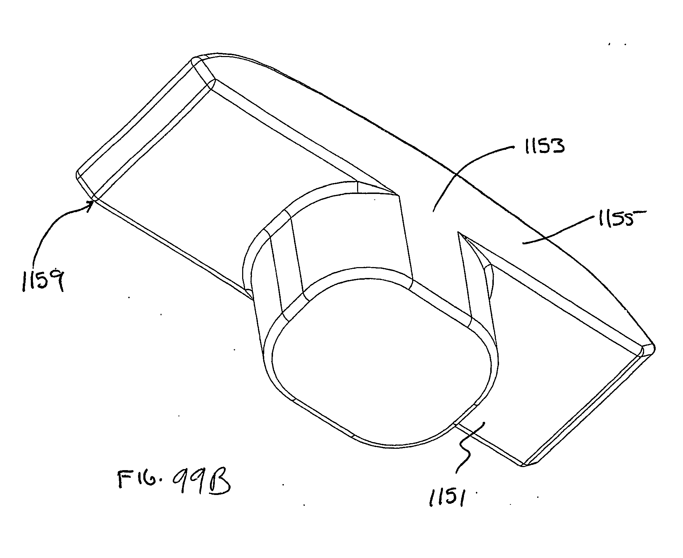

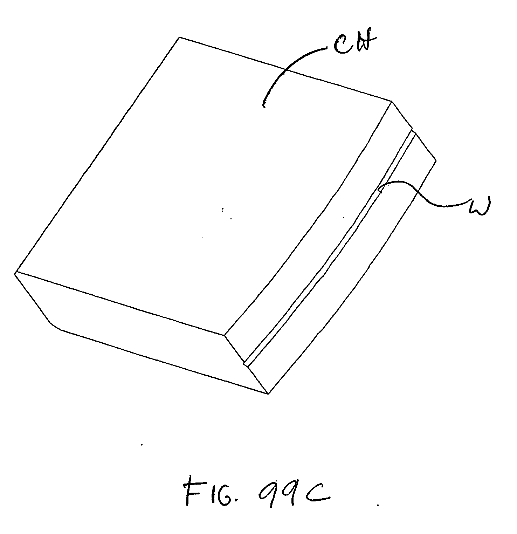

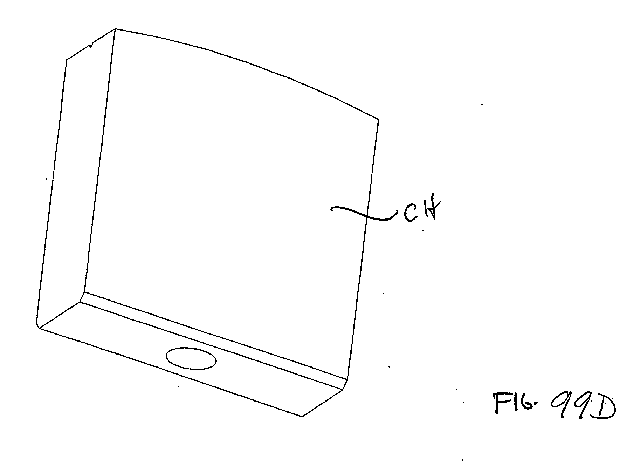

Arbor assembly 1106 further includes ceramic plug 1159 which is illustrated by itself in Figures 99A and 99B, and has insertion projection 1157 and head 1155. Ceramic plug 1159 has side walls 1153, 1151 (includes coplanar or co-extensive surfaces for both head end plug) which are separated apart a distance that generally conforms to the opposing inner walls of thick-end rail sections 1191, 1193 for a slight friction sliding fit. Similarly, central cavity 1189 has a generally oval configuration that conforms to that of projection 1157 for a snug fit. Head 1155 has underside extension surfaces extending out from opposite sides of the top of projection 1157 and defines a surface designed to lie flush on intermediate planer surface defining intermediate cavity 1195 such as a common flush horizontal surface arrangement. Ceramic plug 1159 has an upper convex surface 1149 which, as shown in Figure 85, matches the curvature of 1170 of arbor housing 1168 and terminates out its ends at the outer edges of intermediate cavity 1195.

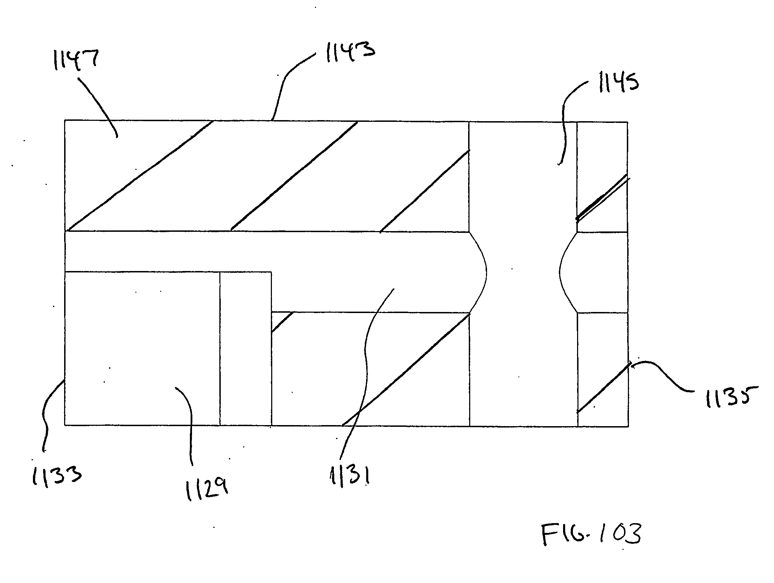

Arbor assembly 1106 further comprises moving mounting block 1147 illustrated in position within arbor housing 1168 and alone in Figures 174 to 177. As shown in Figures 174 to 177, moving mounting block 1147 has an electrical plug reception hole 1145 that extends transversely into moving mounting block 1147 from upper planar surface 1143. Electrical plug reception hole 1145 is preferably threaded and is designed to receive and hold an electrical connection 1117' with lead connector 1145' clamped down (Fig. 75). In similar fashion lead connector 1145 is clamped down by nut NU". Block 1147 further includes planar bottom surface 1141 which is placed flush on sloping upper surface 1161, and planar side walls 1139 and 1137 spaced apart to generally coincide with the side walls defined by arbor housing 1168. Block 1147 further includes convex (three sloping flat sides forming a general curvature) end walls 1135 and 1133. Interior passageway 1131 (Fig. 103) extends between end walls 1135 and 1133 and opens out at a central vertical location in the middle sub-wall of the convex end walls. At the end closest to the central plug 1159 there is formed notch 1129 which extends from end 1133 inward with an upper level commensurate with an upper level of passageway 1131 and downwardly to open out at bottom surface 1141. The interior end of notch 1129 includes transverse enlargements to form a T-shaped cross-section TC as shown in Fig. 110.

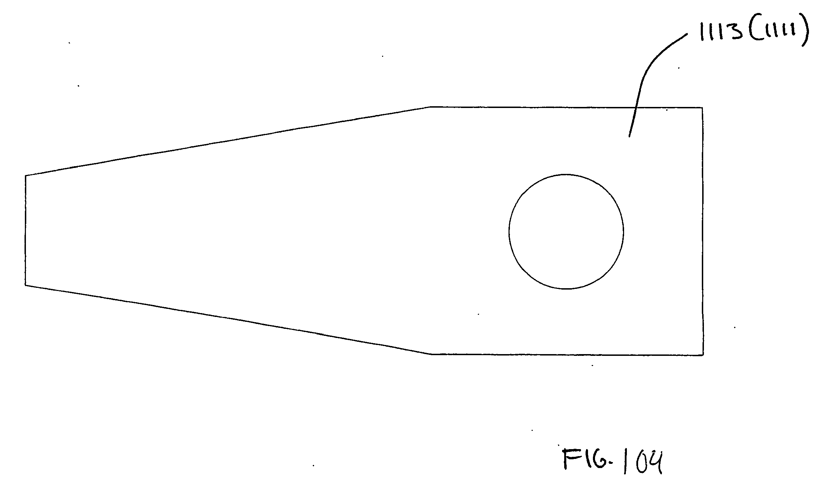

Figure 85 further illustrates slide shaft 1127 received within housing 1168 at one end and designed to extend into interior passageway 1131 so as to provide a means for guiding slide movement along guide shaft 1127 in said moving mounting block 1147. Between the end surface 1183 of the arbor housing and the convex end surface 1135 of the adjacent moving mount block, there is positioned outward biasing means 1125 which in a preferred embodiment comprises conical spring which biases moving mounting block 1147 outward along slope surface 1179. The T-shaped slot facilitates adding the conical spring on to the system (i.e., allows for finger grasping in holding its position as the guide is passed through the center of the spring). Figure 85 further shows upper nut NU which fixes conducting pin 1178 in position and sandwiches first arbor conductor lead 1145' between the planar surface 1175 and nut NU. Threaded fastener 1117' is threaded within threaded part 1145" in the moving block and through the base region of end connector plate 1113 (1111) in Figure 104 and also through the looped end of electrical lead 1145' so as to compress them into electrical communication. Moving block 1147 is preferably formed of the same material as non-moving block 1165 as in electrically conducting base. Moving block 1147 is also sized as to have an operative position inward from the end of the conducting pin extending upward from planar surface 1175.

Heater wire assembly 1119 comprises the aforementioned heater wire 1182 connected at its ends to respective arbor assembly wire plates 1113 and 1111 shown in Figure 128, which are similar to those described above for the heater wire end seal wire support plates 1062 (Fig. 68). Plates 1111 and 1113 have an enlarged portion with conductor screw aperture and a tapering, elongated end for welded, soldered or alternate securement means to fix edge seal heater wire 1182 to the plates at opposite ends of the heater wire. Heater wire insert plugs 1117 and 1115, are preferably of a screw type for threaded attachment to the respective mounting blocks. Thus, the screws are extended through the central apertures formed in plates 1113 and 1111 so as to hold the plates and the connected wires in fixed position relative to the mounting blocks 1147 and 1165. Thus moving mounting block 1147 acts as a tensioner device in the edge seal heater wire as soon as the heater wire and plates combination are secured by the threaded screws to the respective blocks and the blocks are received within the respective arbor housing cavities. The tensioner means of the present invention maintains edge seal heater wire 1182 under tension at all time (the biasing means is preferably a relatively small spring as to avoid over tensioning and stretching the heater wire) 1182. The moving block is under spring tension and moves in a linear fashion as it is guided by the guide shaft 1127 to keep the edge seal wire taught. The movement makes up for the normal variations in wire length and for the thermal expansion of the wire while the moving block moves along the loosely fitting, preferably stainless steel guide shaft 1127 (to avoid binding).

The edge seal heater wire 1182 is centered on the curved upper head surface of plug 1159 which is formed of a high heat resistant material such as a ceramic plus. Plug 1159 is preferably able to withstand over 232°C (450° F) and more preferably over 343°C (650°F) (e.g., up to 816°C (1500°F) available in conventional ceramics) without ablation or melting of the underlying face of the plug coming into contact with the heater wire and without any Teflon taping.

Thus, as the film is driven by driven roller set through the nip region, the film is compressed against the compressible material roller and heated to a level which will bond and seal together an edge seal (or seals if more than one involved). The present invention, provides a stationary support and accurate positioning of the edge seal heater wire, both initially and over prolonged usage as in over 20,000 cycles, as the core precludes any underlying heater wire or support backing material melting or softening which can cause deviations in the location of the edge seal and degrade edge seal quality. The deviation in positioning over time as the heater wire sank into the backing material was one of the problems leading to poor edge seal quality in prior art designing.

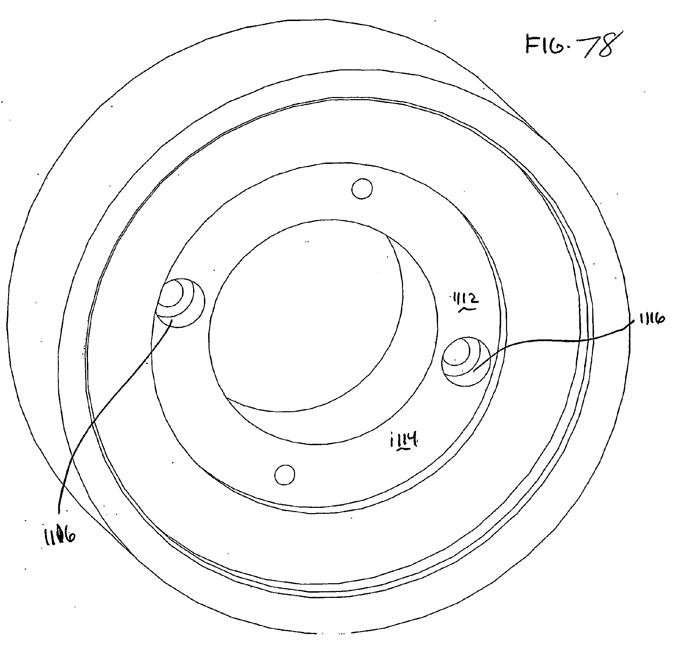

Figures 71 to 99 illustrate one embodiment of the edge seal support means ES (Fig. 75) of edge seal assembly 91 AS with its arbor mechanism and bar with edge seal heated wire and associated connectors. A second embodiment the edge seal means support (ES' - Fig. 75A) is represented by the "A" versions of 71A to 99D. As seen there are general similarities between embodiments and thus the emphasis below is on the differences.

Figure 71A to 74A illustrate the alternate embodiment of edge seal support ES' in position relative to edge seal 91A ("A" added for the same or related components relative to the first embodiment). As seen from figures 71A and 74A support ES' features a modified sleeve to roller segments clamping means featuring components which include annular wedge ring P1, threaded block P2, and threaded cylinder P3 with threaded fastener FS is associated with external block P2 and internally threaded with cylinder P3 and with annular wedge ring P1 completing the connection due to sleeve 1122A being fixed in position thereunder with fastener 1132A received in the opposite, internal end of threaded cylinder P3.

As further seen from Figures 74A, 75A, and 85A, the support ES represents a new preferred embodiment from, for example, the standpoint of symmetry in design to the left and right of ceramic head CH of the same ceramic described above or of, for example, VESPEL brand high temperature plastic of DuPont received within the central reception cavity CS defined by main housing MH having pin connectors 1178A and 1180A as shown in Figure 159A. Shoes SH1 and SH2, together with fasteners F1 and F2, are used to secure in position head CH (e.g., a sliding friction positioning is suitable between the interior most ends of the shoes). Shoes SH1 and SH2 are thus designed to sandwich head CH within slot CS with fasteners F1 and F2 being utilized to secure shoes SH1 and SH2 to housing MH Head CH supports heater wire segment W with upper end UE conforming to the head's CH convex curvature. The shoes are formed of a conductive material so as to provide for an electrical conduction of current from the pins, 1178A and 1180A to head CH. Head CH preferably has, in addition to upper wire segment W, two side wire extensions EX that are placed in contact with the interior ends of the shoes to complete the circuit. Because rollers 1100 and 1102 are of a non-conducting material together with the arbor housing unit supporting the shoes, there is sufficient electrical insulation provided relative to the conductive shoes when the edge seal assembly is assembled.

Figure 105 shows an overall schematic view of the display, controls and power distribution for a preferred foam-in-bag dispenser embodiment which provides for coordinated activity amongst the various sub-assemblies like that for the foam-in-bag dispenser system described above (and for which component reference numbers are provided in addition to the key legend of Figure 105A). The present invention preferably comprises an electrical package comprised of two board assemblies, the main control board and an operator interface. The boards are interlinked via a single shielded cable, which can be separated up to 8 feet.

The operator interface includes an LCD display, keypad, control board and enclosure. It can be separated from the bag machine via a single shielded umbilical cord. Because the operator interface is a separate item from the rest of the machine, different interfaces can be either separate or integrated. For example, the display panel with button control 63 in Figure 3 is preferably pivotably attached to the front of the dispenser and provides for both control of dispenser system and initiating other functions such as remote access via a modem or the like to a service provider

## Claims

1. A foam-in bag dispensing system (20), comprising:

   a dispenser (192) with chemical output port (258);
   a film feed assembly (64) which feeds film to said dispenser for receiving chemical output from said dispenser, said film feed assembly including a film drive roller set (84 or 86 and 74 or 76) which comprises a first roller and a second roller rotating on non-coincident axes, and a support structure (65) which supports said film drive roller set, said support structure including a first frame structure (71, 73) and a second frame structure (68, 66) with said first frame structure supporting said first roller **characterized in that** said first frame structure is adjustable relative to said second frame structure so as to move said first roller away from said second roller and,
   wherein said adjustable first frame structure supports at least one sealer, which sealer is selected from the following group:

   a) a bag edge sealer (91);
   b) a bag formation end sealer (119, 1046, 1048, 1050); and
   c) both a) and b); and

   wherein said at least one sealer is placed in a more accessible location upon adjustment of said first frame structure.

2. The system of claim 1 wherein said first frame structure supports at least the bag edge sealer.

**3.** The system of claims 1 or 2 wherein said first frame structure is adjustable between a drive mode wherein said first and second rollers are in a film drive nip relationship and an access mode wherein said first and second rollers are free of contact.

**4.** The system of claims 1 to 3 wherein said second frame structure is a stationary frame structure relative to said first frame structure when said first frame structure is adjusted.

**5.** The system of claims 1 to 4 wherein said first frame structure is pivotably supported by said second frame structure.

**6.** The system of claim 5 wherein said first frame structure is pivotably supported at a lower end and has an upper section which rotates out away from said second frame structure.

**7.** The system of claims 1 to 6 further comprising a latch mechanism (87) which latches said first and second frame structures together to place said first and second rollers in a film drive mode.

**8.** The system of claim 7 wherein said latch mechanism includes a handle member secured to a latch bar (85) with first and second latch members (1008, 1010) spaced apart along said latch bar.

**9.** The system of claim 8 wherein said latch members are cam latches having hook sections.

**10.** The system of claim 1 further comprising a roller drive motor (80) and wherein said second roller is in a driving relationship with said drive motor, and wherein said first roller is pivotably supported by said first frame structure and is driven by way of rotation in said second roller.

**11.** The system of claims 1 to 10 wherein said second frame structure includes a pair of support extensions (66, 68) between which said second roller extends and said second roller having shaft ends received by said support extensions.

**12.** The system of claims 1 to 11 wherein said first frame structure includes first and second sub-frame sections (71, 73) and an interconnecting intermediate bar (116), and said first and second sub-frame sections each having a bearing support receiving respective shaft ends of said first roller, and wherein said intermediate bar is adapted to support said bag formation end sealer.

**13.** The system of claim 12 wherein said bearing supports are releasably fastened to said sub-frame sections.

**14.** The system of claims 1 to 13 wherein said first frame structure includes a heater wire extension surface (1042, 1044).

**15.** The system of claim 14 further comprising a heater wire (1046, 1048, 1050) extending along said heater wire extension surface and providing the bag formation end sealer.

**16.** The system of claim 15 wherein said heater wire includes opposite end connector pins (1066) which are releasably received by connector pin reception holders (1072) supported by an intermediate bar of said first frame structure.

**17.** The system of claim 15 further comprising a pair of seal wires (1046, 1050) extending parallel to said heater wire (1048), and wherein said heater wire provides film cutting means and is positioned between said seal wires, and said heater and seal wires have conductor pins which are releasably received by conductor reception holders supported by said intermediate bar.

**18.** The system of claim 1 further comprising first frame structure movement limiting means (1078).

**19.** The system of claim 18 wherein said first frame structure movement limiting means includes a pair of negator springs (DA) which preclude unrestricted movement of said first frame structure in moving from a film feed position to an access position.

**20.** The system of claims 1 to 19 comprising at least the bag edge sealer which is supported by said first frame structure so as to be more easily accessible upon said first frame structure moving from a film feed mode to an access mode wherein said first roller is spaced sufficiently apart from said second roller for edge seal removal.

21. The system of claim 20 wherein said bag edge sealer includes a base support structure (1104) through which a shaft of said first roller extends.

22. The system of claims 1 to 21 further comprising a plurality of film canes (90) (Fig. 7) spaced along said second roller which are partially covered when said first frame structure and supported first roller is in a film feed mode and less covered so as to be accessible when said first frame structure and first roller are adjusted into an access mode wherein said first roller is separated from said second roller to provide greater access to said canes.

23. The system of claims 1 to 22 wherein said film drive roller set comprises only said first and second rollers which are in a state of compression in film feed mode, and wherein said first and second rollers each include a sub-roller set (74, 76 and 84, 86) having sub-rollers spaced along respective roller shafts, and said dispenser is arranged to dispense foam within a gap defined by said spaced apart sub-rollers on said respective roller shafts.

24. A method of servicing a foam-in-bag dispenser system comprising:

moving a first frame structure relative to a second frame structure between a closed position to an open access position, with said first frame structure supporting a component of a film feed assembly and a film sealer, and, wherein said adjustable first frame structure supports at least one sealer, which sealer is selected from the following group:

a) a bag edge sealer (91);
b) a bag formation end sealer (119, 1046, 1048, 1050); and
c) both a) and b); and

wherein said at least one sealer is placed in a more accessible location upon adjustment of said first frame structure.

25. The method of claim 24 further comprising unlatching a latch assembly which maintains said first and second frame structures in the closed mode and, following unlatching, moving said first frame structure away from said second frame structure, and wherein freedom of movement is limited in said first frame structure by means for limiting movement.

26. The method of claims 24 or 25 wherein movement of said first frame structure includes a pivoting of said first frame structure away from said second frame structure.

27. The method of claims 24 to 26 wherein movement of said first frame structure includes movement of the bag edge sealer supported by said first frame structure from an edge seal mode to an access mode wherein said edge sealer is releasable within a space being opened up upon said movement of said first frame structure.

28. The method of claim 24 to 27 further comprising inserting film material between a pair of roller sets while said system is in the open access position and driving said film with said roller set while in the closed position.

29. The method of claims 24 to 28 wherein said at least one sealer includes the bag edge sealer.

30. The method of claim 29 wherein said bag edge sealer is supported on a shaft of a film drive roller of said film feed assembly.

31. The method of claims 24 to 30 wherein said at least one sealer includes the bag formation end.

32. The system of claims 1 to 23 wherein said at least one sealer includes a heated wire.

33. The method of claims 27 to 31 wherein said at least one sealer includes a heated wire.

34. The system of claims 1 to 23 wherein said at least one sealer includes c).

**Patentansprüche**

1. Schaumbeutel-Abgabesystem (20), umfassend:

   eine Abgabevorrichtung (192) mit Chemikalienausgabeanschluss (258);
   eine Folienzufuhranordnung (64), die der Abgabevorrichtung Folie zuführt zum Aufnehmen von Chemikalienausgabe von der Abgabevorrichtung,
   wobei die Folienzufuhranordnung einen Folienantriebsrollensatz (84 oder 86 und 74 oder 76), der eine erste und eine zweite Rolle umfasst, die auf nicht-zusammenfallenden Achsen drehen, und eine Haltestruktur (65) umfasst, die den Folienantriebsrollensatz hält, wobei die Haltestruktur eine erste Rahmenstruktur (71, 73) und eine zweite Rahmenstruktur (68, 66) umfasst, wobei die erste Rahmenstruktur die erste Rolle hält, **dadurch gekennzeichnet, dass** die erste Rahmenstruktur relativ zu der zweiten Rahmenstruktur anpassbar ist, um die erste Rolle von der zweiten Rolle weg zu bewegen, und
   wobei die anpassbare erste Rahmenstruktur wenigstens einen Versiegeler hält, der aus der folgenden Gruppe gewählt ist:

   a) einen Beutelrandversiegeler (91);
   b) einen Beutelbildungsendversiegeler (119, 1046, 1048, 1050); und
   c) sowohl a) als auch b); und

   wobei der wenigstens eine Versiegeler auf Anpassung der ersten Rahmenstruktur hin an einer zugänglicheren Stelle platziert ist.

2. System nach Anspruch 1, wobei die erste Rahmenstruktur wenigstens den Beutelrandversiegeler hält.

3. System nach Anspruch 1 oder 2, wobei die erste Rahmenstruktur zwischen einem Antriebsmodus, in dem die erste und die zweite Rolle in einer Folienantriebandruckbeziehung sind, und einem Zugangsmodus, in dem die erste und die zweite Rolle nicht in Kontakt stehen, anpassbar ist.

4. System nach einem der Ansprüche 1 bis 3, wobei die zweite Rahmenstruktur eine stationäre Rahmenstruktur relativ zu der ersten Rahmenstruktur ist, wenn die erste Rahmenstruktur angepasst ist.

5. System nach einem der Ansprüche 1 bis 4, wobei die erste Rahmenstruktur schwenkbar von der zweiten Rahmenstruktur gehalten ist.

6. System nach Anspruch 5, wobei die erste Rahmenstruktur an einem unteren Ende schwenkbar gehalten ist und einen oberen Abschnitt aufweist, der nach außen weg von der zweiten Rahmenstruktur dreht.

7. System nach einem der Ansprüche 1 bis 6, ferner umfassend einen Verriegelungsmechanismus (87), der die erste und die zweite Rahmenstruktur miteinander verriegelt, um die erste und die zweite Rolle in einen Folienantriebsmodus zu setzen.

8. System nach Anspruch 7, wobei der Verriegelungsmechanismus ein Griffelement umfasst, das an einem Verriegelungsstab (85) befestigt ist mit einem ersten und einem zweiten Verriegelungselement (1008, 1010), die entlang des Verriegelungsstabs mit Abstand angeordnet sind.

9. System nach Anspruch 8, wobei die Verriegelungselemente Nockenverriegelungen sind, die Hakenabschnitte aufweisen.

10. System nach Anspruch 1, ferner umfassend einen Rollenantriebsmotor (80) und wobei die zweite Rolle in einer Antriebsbeziehung mit dem Antriebsmotor ist, und wobei die erste Rolle schwenkbar gehalten ist von der ersten Rahmenstruktur und angetrieben ist durch Drehung in der zweiten Rolle.

11. System nach einem der Ansprüche 1 bis 10, wobei die zweite Rahmenstruktur ein Paar von Halteerweiterungen (66, 68) umfasst, zwischen denen sich die zweite Rolle erstreckt, und die zweite Rolle Wellenenden aufweist, die von den Halteerweiterungen aufgenommen sind.

12. System nach einem der Ansprüche 1 bis 11, wobei die erste Rahmenstruktur einen ersten und einen zweiten Unterrahmenabschnitt (71, 73) und einen verbindenden Zwischenstab (116) umfasst und jeder von dem ersten und dem zweiten Unterrahmenabschnitt einen Lagerhalter aufweist, der jeweilige Wellenenden der ersten Rolle aufnimmt, und wobei der Zwischenstab dazu angepasst ist, den Beutelbildungsendversiegeler zu halten.

**13.** System nach Anspruch 12, wobei die Lagerhalter lösbar mit den Unterrahmenabschnitten befestigt sind.

**14.** System nach einem der Ansprüche 1 bis 13, wobei die erste Rahmenstruktur eine Heizdrahterstreckungsfläche (1042, 1044) umfasst.

**15.** System nach Anspruch 14, ferner umfassend einen Heizdraht (1046, 1048, 1050), der sich entlang der Heizdrahterstreckungsfläche erstreckt und den Beutelbildungsendversiegeler bereitstellt.

**16.** System nach Anspruch 15, wobei der Heizdraht entgegengesetzte Endverbindungsnadeln (1066) umfasst, die lösbar von Verbindungsnadel-Aufnahmehaltern (1072) aufgenommen sind, die von einem Zwischenstab der ersten Rahmenstruktur gehalten sind.

**17.** System nach Anspruch 15, ferner umfassend ein Paar Versiegelungsdrähte (1046, 1050), die sich parallel zu dem Heizdraht (1048) erstrecken, und wobei der Heizdraht Folienschneidemittel bereitstellt und zwischen den Versiegelungsdrähten angeordnet ist, und die Heiz- und Versiegelungsdrähte Leiternadeln aufweisen, die lösbar von Leiteraufnahmehaltern aufgenommen sind, die von dem Zwischenstab gehalten sind.

**18.** System nach Anspruch 1, ferner umfassend Bewegungsbegrenzungsmittel (1078) der ersten Rahmenstruktur.

**19.** System nach Anspruch 18, wobei die Bewegungsbegrenzungsmittel der ersten Rahmenstruktur ein Paar Negatorfedern (DA) umfassen, die unbeschränkte Bewegung der ersten Rahmenstruktur beim Bewegen von einer Folienzufuhrposition zu einer Zugangsposition ausschließen.

**20.** System nach einem der Ansprüche 1 bis 19, wenigstens umfassend den Beutelrandversiegeler, der von der ersten Rahmenstruktur gehalten ist, um leichter zugänglich zu sein auf die Bewegung der ersten Rahmenstruktur von einem Folienzufuhrmodus zu einem Zugangsmodus hin, wobei die erste Rolle zu einer Randsiegelentfernung mit hinreichendem Abstand von der zweiten Rolle angeordnet ist.

**21.** System nach Anspruch 20, wobei der Beutelrandversiegeler eine Bodenhaltestruktur (1104) umfasst, durch die sich eine Welle der.ersten Rolle erstreckt.

**22.** System nach einem der Ansprüche 1 bis 21, ferner umfassend eine Mehrzahl von entlang der zweiten Rolle mit Abstand angeordneten Folienstangen (90) (Fig. 7), die teilweise bedeckt sind, wenn die erste Rahmenstruktur und die gehaltene erste Rolle in einem Folienzufuhrmodus sind, und weniger bedeckt sind, um zugänglich zu sein, wenn die erste Rahmenstruktur und die erste Rolle in einen Zugangsmodus angepasst sind, wobei die erste Rolle von der zweiten Rolle getrennt ist, um größeren Zugang zu den Stangen zu gewähren.

**23.** System nach einem der Ansprüche 1 bis 22, wobei der Folienantriebsrollensatz nur die erste und die zweite Rolle umfasst, die in dem Folienzufuhrmodus in einem Kompressionszustand sind, und wobei jede von der ersten und der zweiten Rolle einen Unterrollensatz (74, 76 und 84, 86) umfasst, der Unterrollen aufweist, die entlang jeweiliger Rollenwellen mit Abstand angeordnet sind, und die Abgabevorrichtung angeordnet ist, Schaum abzugeben innerhalb einer Lücke, die von den mit Abstand angeordneten Unterrollen auf den jeweiligen Rollenwellen definiert ist.

**24.** Verfahren zum Bedienen eines Schaumbeutel-Abgabesystem, umfassend:

Bewegen einer ersten Rahmenstruktur relativ zu einer zweiten Rahmenstruktur von einer geschlossenen Position zu einer offenen Zugangsposition, wobei die erste Rahmenstruktur eine Komponente einer Folienzufuhranordnung und einen Folienversiegeler hält, und
wobei die anpassbare erste Rahmenstruktur wenigstens einen Versiegeler hält, der aus der folgenden Gruppe gewählt ist:

a) einen Beutelrandversiegeler (91);
b) einen Beutelbildungsendversiegeler (119, 1046, 1048, 1050); und
c) sowohl a) als auch b); und

wobei der wenigstens eine Versiegeler auf Anpassung der ersten Rahmenstruktur hin an einer zugänglicheren Stelle platziert ist.

25. Verfahren nach Anspruch 24, ferner umfassend Entriegeln einer Verriegelungsanordnung, die die erste und die zweite Rahmenstruktur in dem geschlossenen Modus hält, und, dem Entriegeln folgend, Bewegen der ersten Rahmenstruktur weg von der zweiten Rahmenstruktur, und wobei eine Bewegungsfreiheit der ersten Rahmenstruktur durch Mittel zur Bewegungsbeschränkung beschränkt ist.

26. Verfahren nach Anspruch 24 oder 25, wobei die Bewegung der ersten Rahmenstruktur ein Schwenken der ersten Rahmenstruktur weg von der zweiten Rahmenstruktur umfasst.

27. Verfahren nach einem der Ansprüche 24 bis 26, wobei die Bewegung der ersten Rahmenstruktur eine Bewegung des von der ersten Rahmenstruktur gehaltenen Beutelrandversiegelers von einem Randversiegelungsmodus zu einem Zugangsmodus umfasst, wobei der Randversiegeler innerhalb eines Raumes lösbar ist, der auf Bewegen der ersten Rahmenstruktur hin eröffnet wird.

28. Verfahren nach einem der Ansprüche 24 bis 27, ferner umfassend Einfügen von Folienmaterial zwischen ein Paar Rollensätze, während das System in der offenen Zugangsposition ist, und Antreiben der Folie mit dem Rollensatz, während es in der geschlossenen Position ist.

29. Verfahren nach einem der Ansprüche 24 bis 28, wobei der wenigstens eine Versiegeler den Beutelrandversiegeler umfasst.

30. Verfahren nach Anspruch 29, wobei der Beutelrandversiegeler auf einer Welle einer Folienantriebsrolle der Folienzufuhranordnung gehalten ist.

31. Verfahren nach einem der Ansprüche 24 bis 30, wobei der wenigstens eine Versiegeler das Beutelbildungsende umfasst.

32. System nach einem der Ansprüche 1 bis 23, wobei der wenigstens eine Versiegeler einen erhitzten Draht umfasst.

33. Verfahren nach einem der Ansprüche 27 bis 31, wobei der wenigstens eine Versiegeler einen erhitzten Draht umfasst.

34. System nach einem der Ansprüche 1 bis 23, wobei der wenigstens eine Versiegeler c) umfasst.

## Revendications

1. Système (20) de distribution de sacs rembourrés de mousse, comprenant :

    un distributeur (192) avec un orifice de sortie chimique (258) ;
    un ensemble (64) d'alimentation en film qui alimente un film audit distributeur pour recevoir une sortie chimique dudit distributeur, ledit ensemble d'alimentation en film comportant un ensemble de rouleaux d'entraînement de film (84 ou 86 et 74 ou 76) qui comprend un premier rouleau et un deuxième rouleau tournant sur des axes non coïncidents, et une structure de support (65) qui soutient ledit ensemble de rouleaux d'entraînement de film, ladite structure de support comportant une première structure de châssis (71, 73) et une deuxième structure de châssis (68, 66) ladite première structure de châssis soutenant ledit premier rouleau **caractérisé en ce que** ladite première structure de châssis est réglable par rapport à ladite deuxième structure de châssis de sorte à déplacer ledit premier rouleau à l'écart dudit deuxième rouleau et,
    où ladite première structure de châssis réglable soutient au moins une scelleuse, laquelle scelleuse est sélectionnée du groupe suivant :

        a) une scelleuse (91) de bord de sac ;
        b) une scelleuse (119, 1046, 1048, 1050) d'extrémité de formation de sac ; et
        c) a) et b) à la fois ; et

    où ladite au moins une scelleuse est placée au niveau d'un emplacement plus accessible lors du réglage de ladite première structure de châssis.

**2.** Système de la revendication 1 dans lequel ladite première structure de châssis soutient au moins la scelleuse de bord de sac.

**3.** Système des revendications 1 ou 2 dans lequel ladite première structure de châssis est réglable entre un mode d'entraînement où lesdits premier et deuxième rouleaux se trouvent dans une relation de pincement d'entraînement de film et un mode d'accès où lesdits premier et deuxième rouleaux ne sont pas en contact.

**4.** Système des revendications 1 à 3 dans lequel ladite deuxième structure de châssis est une structure de châssis fixe par rapport à ladite première structure de châssis lorsque ladite première structure de châssis est réglée.

**5.** Système des revendications 1 à 4 dans lequel ladite première structure de châssis est soutenue en pivotement par ladite deuxième structure de châssis.

**6.** Système de la revendication 5 dans lequel ladite première structure de châssis est soutenue en pivotement à une extrémité inférieure et possède un tronçon supérieur qui tourne à l'écart de ladite deuxième structure de châssis.

**7.** Système des revendications 1 à 6 comprenant en outre un mécanisme de verrouillage (87) qui verrouille lesdites première et deuxième structures de châssis entre elles pour placer lesdits premier et deuxième rouleaux dans un mode d'entraînement de film.

**8.** Système de la revendication 7 dans lequel ledit mécanisme de verrouillage comporte un élément de manoeuvre fixé à une barre de verrouillage (85) avec les premier et deuxième éléments de verrouillage (1008, 1010) espacés le long de ladite barre de verrouillage.

**9.** Système de la revendication 8 dans lequel lesdits éléments de verrouillage sont des verrous à came ayant des tronçons à crochets.

**10.** Système de la revendication 1 comprenant en outre un moteur (80) d'entraînement de rouleaux et où ledit deuxième rouleau est en relation d'entraînement avec ledit moteur d'entraînement, et où ledit premier rouleau est soutenu en pivotement par ladite première structure de châssis et est entraîné grâce à la rotation dudit deuxième rouleau.

**11.** Système des revendications 1 à 10 dans lequel ladite deuxième structure de châssis comporte une paire d'extensions de support (66, 68) entre lesquelles s'étend ledit deuxième rouleau et ledit deuxième rouleau ayant des extrémités d'arbre reçues par lesdites extensions de support.

**12.** Système des revendications 1 à 11 dans lequel ladite première structure de châssis comporte des premier et deuxième tronçons de faux cadre (71, 73) et une barre intermédiaire de raccordement (116), et lesdits premier et deuxième tronçons de faux cadre ayant chacun un support de palier recevant des extrémités d'arbre respectives dudit premier rouleau, et où ladite barre intermédiaire est adaptée pour soutenir ladite scelleuse d'extrémité de formation de sac.

**13.** Système de la revendication 12 dans lequel lesdits supports de palier sont fixés de manière amovible auxdits tronçons de faux cadre.

**14.** Système des revendications 1 à 13 dans lequel ladite première structure de châssis comporte une surface d'extension (1042, 1044) de fil chauffant.

**15.** Système de la revendication 14 comprenant en outre un fil chauffant (1046, 1048, 1050) s'étendant le long de ladite surface d'extension de fil chauffant et procurant la scelleuse d'extrémité de formation de sac.

**16.** Système de la revendication 15 dans lequel ledit fil chauffant comporte des axes (1066) de raccord extrêmes opposés qui sont reçus de manière amovible par des supports (1072) de réception d'axes de raccord soutenus par une barre intermédiaire de ladite première structure de châssis.

**17.** Système de la revendication 15 comprenant en outre une paire de fils d'étanchéité (1046, 1050) s'étendant parallèlement audit fil chauffant (1048), et où ledit fil chauffant procure un moyen de découpage de film et est positionné entre lesdits fils d'étanchéité, et lesdits fils chauffants et d'étanchéité ont des axes conducteurs qui sont reçus de manière amovible par des supports de réception conducteurs soutenus par ladite barre intermédiaire.

**18.** Système de la revendication 1 comprenant en outre un moyen (1078) limitant le mouvement de la première structure de châssis.

**19.** Système de la revendication 18 dans lequel ledit moyen limitant le mouvement de la première structure de châssis comporte une paire de ressorts de remise à zéro (DA) qui interdisent un mouvement non limité de ladite première structure de châssis lorsqu'elle se déplace d'une position d'alimentation en film à une position d'accès.

**20.** Système des revendications 1 à 19 comprenant au moins la scelleuse de bord de sac qui est soutenue par ladite première structure de châssis de sorte à être plus facilement accessible lorsque ladite première structure de châssis passe d'un mode d'alimentation en fil à un mode d'accès où ledit premier rouleau est suffisamment espacé dudit deuxième rouleau pour retirer un joint de bord.

**21.** Système de la revendication 20 dans lequel ladite scelleuse de bord de sac comporte une structure de support de base (1104) à travers laquelle s'étend un arbre dudit premier rouleau.

**22.** Système des revendications 1 à 21 comprenant en outre une pluralité de baguettes de film (90) (Fig. 7) espacées le long dudit deuxième rouleau qui sont partiellement couvertes lorsque ladite première structure de châssis et le premier rouleau soutenu se trouve dans un mode d'alimentation en film et moins couvertes de sorte à être accessibles lorsque ladite première structure de châssis et le premier rouleau sont réglés dans un mode d'accès où ledit premier rouleau est séparé dudit deuxième rouleau pour donner un plus grand accès auxdites tiges.

**23.** Système des revendications 1 à 22 dans lequel ledit ensemble de rouleaux d'entraînement de film ne comprend que lesdits premier et deuxième rouleaux qui se trouvent dans un état de compression dans un mode d'alimentation en film, et où lesdits premier et deuxième rouleaux comportent chacun un ensemble de rouleaux auxiliaires (74, 76 et 84, 86) ayant des rouleaux auxiliaires espacés le long d'arbres de rouleaux respectifs, et ledit distributeur est agencé pour distribuer de la mousse dans un jeu défini par lesdits rouleaux auxiliaires espacés sur lesdits arbres de rouleaux respectifs.

**24.** Procédé de gestion d'un système de distributeur de sacs rembourrés de mousse comprenant le fait de :

déplacer une première structure de châssis par rapport à une deuxième structure de châssis entre une position fermée à une position d'accès ouvert, ladite première structure de châssis soutenant un composant d'un ensemble d'alimentation en film et une scelleuse de film, et,
où ladite première structure de châssis réglable soutient au moins une scelleuse, laquelle scelleuse est sélectionnée du groupe suivant :

a) une scelleuse (91) de bord de sac ;
b) une scelleuse (119, 1046, 1048, 1050) d'extrémité de formation de sac ; et
c) a) et b) à la fois ; et

où ladite au moins une scelleuse est placée à un emplacement plus accessible lors du réglage de ladite première structure de châssis.

**25.** Procédé de la revendication 24 comprenant en outre le fait de déverrouiller un ensemble de verrouillage qui maintient lesdites première et deuxième structures de châssis dans le mode fermé et, après déverrouillage, déplacer ladite première structure de châssis à l'écart de ladite deuxième structure de châssis, et où la liberté de mouvement est limitée dans ladite première structure de châssis par un moyen destiné à limiter le mouvement.

**26.** Procédé des revendications 24 ou 25 dans lequel le déplacement de ladite première structure de châssis comporte le fait de faire pivoter ladite première structure de châssis à l'écart de ladite deuxième structure de châssis.

**27.** Procédé des revendications 24 à 26 dans lequel le déplacement de ladite première structure de châssis comporte le passage de la scelleuse de bord de sac soutenue par ladite première structure de châssis d'un mode de scellement de bord à un mode d'accès où ladite scelleuse de bord peut être libérée dans un espace qui est ouvert lors dudit déplacement de ladite première structure de châssis.

**28.** Procédé de la revendication 24 à 27 comprenant en outre le fait d'insérer un matériau de film entre une paire d'ensembles de rouleaux tandis que ledit système se trouve dans la position d'accès ouvert et d'entraîner ledit film avec ledit ensemble de rouleaux lorsqu'on se trouve dans la position fermée.

29. Procédé des revendications 24 à 28 dans lequel ladite au moins une scelleuse comporte la scelleuse de bord de sac.

30. Procédé de la revendication 29 dans lequel ladite scelleuse de bord de sac est soutenue sur un arbre d'un rouleau d'entraînement de film dudit ensemble d'alimentation en film.

31. Procédé des revendications 24 à 30 dans lequel ladite au moins une scelleuse comporte l'extrémité de formation de sac.

32. Système des revendications 1 à 23 dans lequel ladite au moins une scelleuse comporte un fil chauffé.

33. Procédé des revendications 27 à 31 dans lequel ladite au moins une scelleuse comporte un fil chauffé.

34. Système des revendications 1 à 23 dans lequel ladite au moins une scelleuse comporte c).

FIG. 1

FIG. 2

FIG.3

EP 1 625 003 B1

FIG 4

FIG. 5

FIG. 6

EP 1 625 003 B1

FIG.7

EP 1 625 003 B1

FIG.8

EP 1 625 003 B1

FIG. 9

52

FIG. 9A

FIG. 9B

FIG. 9C

FIG. 9D

FIG. 9E

EP 1 625 003 B1

FIG. 9F

EP 1 625 003 B1

FIG. 96

FIG. 9H

FIG. 9I

FIG. 9J

FIG.9K

EP 1 625 003 B1

EP 1 625 003 B1

FIG. 10

108

112

96

158

156

146

68

EP 1 625 003 B1

FIG. 11

65

866
860
226
862
858

FIG 11A

866
226
860
858    862    864

FIG. 11B

226
FIG.11D
866
868
860
864
858
852    865
862

226
A
866
FIG.11C
858
A

FIG. 12

EP 1 625 003 B1

FIG. 13

FIG. 14A

FIG. 14B

EP 1 625 003 B1

FIG 15A

FIG.15

FIG.15B

FIG. 16

FIG.17

FIG. 18

EP 1 625 003 B1

FIG.19

EP 1 625 003 B1

FIG. 20

FIG. 21

227

242

240

218

243

244

246

EP 1 625 003 B1

FIG. 22

EP 1 625 003 B1

FIG.23

533

204

8002

8000

8004

195

262

8007

8012

8014

8016

8008

8006

8010

264

196

256

266

194

FIG. 24A

263

262

538

265

536

FIG. 24B

EP 1 625 003 B1

FIG.25

EP 1 625 003 B1

FIG. 26

83

FIG.27

EP 1 625 003 B1

FIG. 28

FIG. 29

EP 1 625 003 B1

FIG. 29A

EP 1 625 003 B1

FIG. 30

A

B

B

194

504

500

502

A

200

FIG. 31

FIG. 32

EP 1 625 003 B1

FIG. 33

91

EP 1 625 003 B1

FIG. 34

92

EP 1 625 003 B1

FIG. 35

93

FIG. 36

FIG. 37

580

578

602

604

EP 1 625 003 B1

FIG. 38

EP 1 625 003 B1

FIG. 39

558

604

602

121

97

FIG. 40

FIG. 41

FIG. 42

938 926 952

917

946 928

924 232

944 942

948

952

100

EP 1 625 003 B1

FIG. 43

EP 1 625 003 B1

101

FIG. 44

952

926

942

A

A

EP 1 625 003 B1

FIG. 45

EP 1 625 003 B1

EP 1 625 003 B1

FIG. 46

104

FIG. 47

EP 1 625 003 B1

EP 1 625 003 B1

FIG. 48

222

228

106

FIG. 49

FIG. 50

FIG. 51

984

996

992

980

988

EP 1 625 003 B1

FIG. 52

110

FIG. 53

EP 1 625 003 B1

FIG. 54

112

FIG. 55

EP 1 625 003 B1

FIG.56

997

998

996

114

FIG.57

FIG. 58

FIG. 59

995   987
     989   985
                    —SEE DETAIL 134A

991

991                     985
                        987
995
   996'

EP 1 625 003 B1

117

EP 1 625 003 B1

FIG. 59A

FIG. 60

PT

977

FIG. 61

B

B

973

971

975

120

EP 1 625 003 B1

FIG. 62

EP 1 625 003 B1

FIG. 63

122

FIG. 64

FIG. 65

FIG. 66

FIG. 67

EP 1 625 003 B1

FIG. 68

FIG. 69

FIG. 70

FIG. 71

es'  1106A

1104A

1100A

FIG 71·A

91A

1108A

EP 1 625 003 B1

EP 1 625 003 B1

FIG. 72

1102

1100

132

EP 1 625 003 B1

FIG. 73

FIG. 73A

1102

1104

1100

1106

1108

53'

A

A

B

B

EP 1 625 003 B1

FIG. 74

EP 1 625 003 B1

FIG. 74A

FIG. 75

FIG. 75A

1109A

1104A

SH2

CC

MH

SH1

ES'

FIG. 76

1116

1102

1116

FIG. 76A

1102

FIG. 77

FIG. 78

1112

1116

1114

1116

FIG. 79

1122

1125

1124

FIG. 80

1126

1128

EP 1 625 003 B1

FIG. 81

EP 1 625 003 B1

FIG. 814

FIG. 82

EP 1 625 003 B1

FIG. 82A

1138A

1138A

1108A

EP 1 625 003 B1

EP 1 625 003 B1

FIG. 83

149

FIG. 83A

EP 1 625 003 B1

FIG.84

EP 1 625 003 B1

FIG. 84A

SH2

MH
CS

CH

SH1

3

152

FIG. 85

FIG. 85A

FIG. 86

FIG. 86A

FIG. 87

FIG. 67A

FIG. 88

1174

1194

1178

1106

1180

1176

FIG. 88A

SHT

MH

12

SHI

FIG. 89

FIG. 89A

FIG. 90

FIG. 90A

M4

FIG. 91

1198  1184  1184  1188  1179
1173
1175
1196  1192  1186  1177  1190

EP 1 625 003 B1

FIG. 91A

EP 1 625 003 B1

FIG. 92

FIG. 92A

FIG.93

1181

1184

1192

1190

1186

EP 1 625 003 B1

FIG. 93A

FIG. 94

C2

1120

1183

1192

1172

C1

EP 1 625 003 B1

FIG. 94A

FIG. 95

CS

AW

FIG. 95A

FIG. 96

FIG. 96A

FIG. 97

MS

1163

1165

1167

EP 1 625 003 B1

EP 1 625 003 B1

FIG. 174

178

FIG. 98

EP 1 625 003 B1

FIG. 98A

FIG. 99A

FIG. 99B

FIG. 99C

EP 1 625 003 B1

FIG. 99D

184

FIG. 108

1137

1146

1143

1141

1139

1133

1145

1147

1137

1135

FIG. 101

FIG. 102

FIG. 103

1113 (1111)

FIG. 104

FIG. 105

Display, Controls, & Power Distribution

FIG. 1054

# Legend

(M) = Motor

⋮ = Linkage

(X) = Pump

‖ = Pump Shaft/Hose

⌐ = Heating element (all orientations)

⋈ = Filter

⊥ = Pressure Transducer (all orientations)

⋀⋀▬ = Tip Cleaning Brush

⊔ = Solvent Pump

⇕ = Level Sensor

⬇ = Mixing Module +

○ = Idler Roller

⧅ = Nip Rollers

∩ = Edge Seal Wire

| U V U |
| ∩ ∧ ∩ | = Jaw Assembly (X-seal, X-cut, X-seal)

# Top/Bottom X-Seal, X-cut

32 VAC

Top/Bottom X-Seal, X-Cut Wire
(1046, 1048, 1050)

+
V
-

IGBT/
Driver
Circuit

Ctrl (on/off)    FPGA

Current

Signal
Conditioning

Resistance

Interface Board

DSP    CPU

Control Board

FIG.106

EP 1 625 003 B1

# Edge Seal

FIG.107

# Moving Jaw

FIG. 108

# Film Advance/Tracking

FIG. 109

# Film Tension

FIG. 110

EP 1 625 003 B1

EP 1 625 003 B1

FIG. 111

197

Film Advance/Tension Motor Tach Ratio

FIG. 112

EP 1 625 003 B1

FIG. 113

**EP 1 625 003 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5376219 A
- US 4854109 A
- US 4983007 A
- US 5139151 A
- US 5575435 A
- US 5679208 A
- US 5727370 A
- US 6311740 A

- US 6472638 B
- US 5335483 A
- US 20030047860 A
- US 48810203 P
- US 62371603 A
- US 60488102 B
- US 60488010 B